# FASCICULE DE BREVET EUROPEEN

(11) **EP 0 580 509 B1**
(45) Date de publication et mention de la délivrance du brevet: **19.05.1999**
(21) Numéro de dépôt: 93401889.6
(22) Date de dépôt: 21.07.1993
(51) Int. Cl.: G06F 9/44

(54) **Utilisation d'un langage à interprète embarqué pour la réalisation d'un outil interactif de définition d'interface utilisateurs**
Verwendung einer eingebetteten interpretativen Programmiersprache zum Realisieren eines interaktiven Werkzeugs für die Definition einer Benutzerschnittstelle
Use of an interpreted embedded language for realizing an interactive user interface deposition tool

(30) Priorité: 22.07.1992 FR 9209057
(43) Date de publication de la demande: 26.01.1994
(73) Titulaire: BULL S.A., 78434 Louveciennes Cedex (FR)
(72) Inventeur: Nahaboo, Colas, F-06250 Mougins (FR); Bouthors, Vincent, F-06250 Mougins (FR)
(74) Mandataire: Debay, Yves

(56) Documents cités:
- EP-A- 0 395 606
- THE VISUAL COMPUTER. vol. 8, no. 2, Février 1992, ALLEMAGNE pages 94 - 116 B.A. MYERS ET AL. 'ENVIRONMENT FOR RAPIDLY CREATING INTERACTIVE DESIGN TOOLS'
- NEC RESEARCH AND DEVELOPMENT. no. 98, Juillet 1990, TOKYO, JP pages 89 - 97 H. TARUMI ET AL. 'CANAE - A USER INTERFACE CONSTRUCTION ENVIRONMENT WITH EDITORS AS SOFTWARE PARTS'
- PROCEEDINGS OF THE WINTER 1992 USENIX CONFERENCE. 20 Janvier 1992, BERKELEY, CA, US pages 111 - 123 D. BLEWETT ET AL. 'X WIDGET BASED SOFTWARE TOOLS FOR UNIX'
- RESEARCH DISCLOSURE. no. 319, Novembre 1990, EMSWORTH, GB page 863 31916 'TABLE-DRIVEN METHOD FOR OPTION PROCESSING'

## Description

La présente invention concerne l'utilisation d'un langage à interprète embarqué pour la réalisation d'un outil interactif de définition d'interface utilisateurs.

Les logiciels interactifs ont des contraintes très spécifiques, dont la plus importante est qu'ils peuvent être changés très souvent. En effet, pour des raisons ergonomiques, il est difficile de développer des programmes d'utilisation aisée en une seule fois. La première version est toujours un échec et nécessite de nombreux changements.

Par ailleurs, il peut être souhaitable de changer la façon de déclencher une même action, pour s'adapter à un contexte ou un utilisateur différent.

Enfin, un bon programme qui dispose d'une mauvaise interface peut connaître un succès commercial mitigé.

Le but de l'invention est de proposer un outil de développement d'interfaces particulièrement flexible qui soit utilisable quelque soit l'application. Cette interface a par exemple été développé pour le domaine des systèmes UNIX utilisant X/WINDOW et X/MOTIF marques respectivement déposées par le M.I.T. et l'Open Software Foundation.

Ce but est atteint par le fait que l'outil interactif de définition d'interface utilisant un langage interprété dont l'interpréteur est embarqué avec le programme de définition d'interface et le noyau de l'interpréteur est constitué comme une matrice à deux dimensions, la première dimension contenant les listes, les chaînes, et les nombres, et la deuxième dimension contenant un sélecteur de fonctions (« eval, print, free, add »).

Selon une autre particularité, le langage a une représentation similaire pour les données et les programmes.

Selon une autre particularité, le programme de définition coopère avec une bibliothèque d'objets interactifs ("widget") une bibliothèque d'objets de commandes ("X/MOTIF") et une bibliothèque d'objets graphiques ("GO").

Selon une autre particularité, le programme est constitué d'un mélange d'instructions en langage C et d'instructions en langage interprétable.

Selon une autre particularité, l'interpréteur est orienté objet en langage "LISP".

Selon une autre particularité, l'interpréteur de l'éditeur d'interface utilise des tableaux.

Selon une autre particularité, l'interpréteur ("WOOL") comporte un ramasse-miettes ou glaneur de cellules (Garbage Collector) incrémental permettant de temps à autre et de façon cyclique de balayer la mémoire à la recherche d'objets inutilisés dont l'espace peut être réutilisé.

Selon une autre particularité, le glaneur de cellules utilise des compteurs de références et un mécanisme de regroupement des objets par tailles pour limiter la fragmentation de la mémoire.

Selon une autre particularité, les fonctions de l'outil interactif sont décrites sous forme d'un programme interprété.

Selon une autre particularité, l'archivage de la présentation de l'interface éditée est effectué comme celui d'un programme en langage "WOOL".

Selon une autre particularité, la spécification interactive de la géométrie d'assemblage de ces objets est constituée par un fichier utilisable par une application et contenant la présentation d'une interface utilisateur.

Selon une autre particularité, le comportement dynamique des objets interactifs est défini par un ensemble de procédures de rappel ("callbacks") écrites en langage interprété ("WOOL") qui désignent des fonctions de l'application appelées par la boîte à outils "X/MOTIF" lorsqu'un événement d'entrée est reçu par l'un des objets interactifs.

Selon une autre particularité, le programme de définition d'interface est extensible par l'ajout de classes d'objets interactifs effectué en décrivant en langage interprété ("WOOL") les nouveaux types d'attributs de cette classe pour rendre les nouveaux objets interactifs éditables.

Selon une autre particularité, chaque objet interactif étant pointé par un objet en langage interprété ("WOOL") de la classe "WOOL" correspondant à la classe de l'objet interactif, les attributs supplémentaires sont directement rattachés à l'objet en langage interprété ("WOOL").

Selon une autre particularité, chaque objet en langage interprété ("WOOL") est une structure en langage C auto-typée contenant le type de l'objet et l'information du compte de référence.

Selon une autre particularité, un identificateur unique est alloué de façon incrémentale à chaque objet interactif en langage interprété ("WOOL").

Selon une autre particularité, l'outil interactif de définition d'interface (EGERIA) comporte un programme permettant l'affichage d'un menu de base, comprenant une fonction "édition", une fonction création", une fonction "géométrie".

Selon une autre particularité, la fonction "création" permet la création de tout objet interactif à partir d'un menu et après sélection d'une ligne de menu change la forme du curseur et un clic souris dans un objet interactif "contenant" ("widget container") installera l'objet du type choisi dans cet objet interactif "contenant".

Selon une autre particularité, la fonction "édition" permet l'édition des attributs d'un objet interactif dans une fenêtre séparée et permet de couper, coller, copier ou dupliquer le jeu d'objets interactifs sélectionné ainsi que d'éditer les attributs des objets interactifs parent d'un objet interactif sélectionné ou de rendre le parent d'un objet interactif couramment sélectionné le nouvel objet interactif sélectionné.

Selon une autre particularité, la fonction "géométrie" permet de gérer la géométrie d'un ensemble d'objets interactifs sélectionnés qui peuvent être alignés par le sommet, par le bas, par le côté droit, par le côté gauche ou avoir leur largeur ou hauteur identique.

Selon une autre particularité, la fonction "édition" permet l'affichage d'une fenêtre d'édition des attributs d'un objet interactif, la dite fenêtre étant divisée en deux zones, l'une comportant les fonctions appelées de l'application procédure rappel ("callback"), l'autre comportant les attributs matérialisés par un jeu de sous-éditeurs.

Selon une autre particularité, le premier sous-éditeur est constitué d'un bouton bascule pour entrer des attributs booléens.

Selon une autre particularité, le second sous-éditeur est constitué d'un bouton poussoir affichant un menu affichant les listes des valeurs d'un type énuméré (exemple : alignement d'un texte à gauche, à droite ou centré).

Selon une autre particularité, le troisième sous-éditeur est constitué d'une zone de texte pour la saisie des textes ou des valeurs numériques.

Selon une autre particularité, la fonction d'édition des objets interactifs interpréteurs de commande (shell "widget") ou des objets généraux (top level "widget") est lancée en sélectionnant d'abord le menu ("select parent") de sélection de parent du menu et ensuite la fonction d'édition d'attribut ("edit attribute").

D'autres caractéristiques et avantages de la présente invention apparaîtront plus clairement à la lecture de la description ci-après faite en référence aux dessins dans lesquels :

La figure lA représente de façon schématique l'architecture du logiciel de définition d'interface.

La figure 1B représente la structure du noyau de l'interpétreur (WOOL KERNEL).

La figure 2 représente la fenêtrep principale présentée par ce logiciel pour la définition d'une interface.

La figure 3 représente une fenêtre affichée par ce logiciel permettant l'édition de forme d'un objet.

La figure 4A et 4B représente une fenêtre affichée par ce logiciel permettant l'édition des attributs d'un objet interactif, et respectivement des procédures de rappel.

La figure 5 représente la fenêtre définie pour une application particulière par le logiciel de définition d'interface.

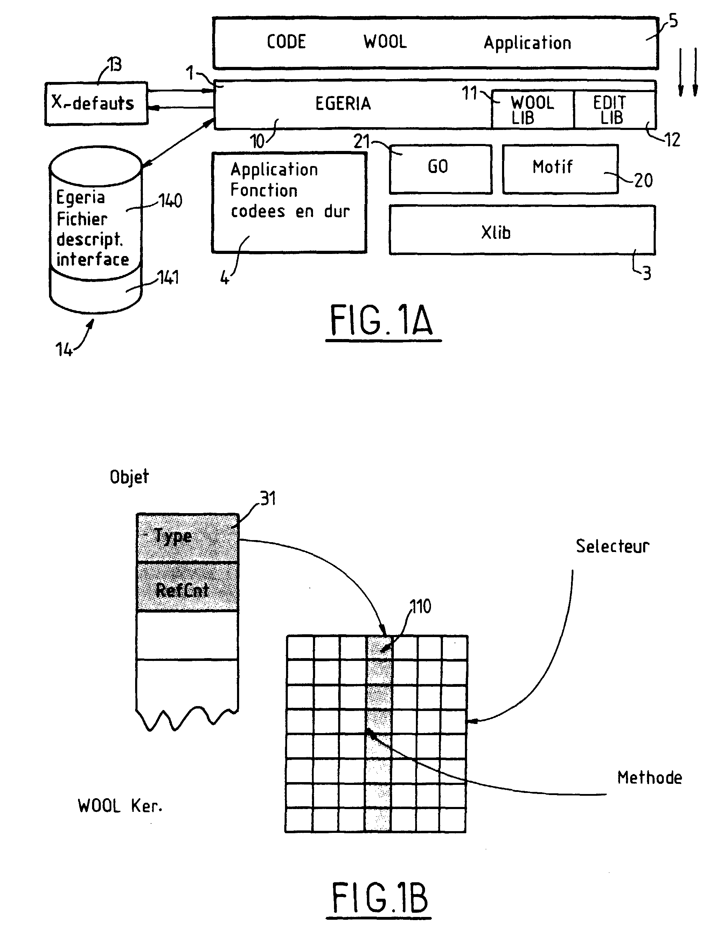

L'outil interactif de définition d'interface (1) "Egeria" est constitué comme représenté à la figure 1A :
- d'un éditeur (10) permettant de créer ou de modifier une interface,
- d'une bibliothèque interpréteur "WOOL.LIB" (11) dont l'édition de lien avec le code de l'application donnera l'application complète,
- et d'une bibliothèque éditeur "Edit.LIB" (12) dont l'édition de lien avec le code d'application donnera un éditeur permettant l'exécution réelle des fonctions de l'application. Ces deux bibliothèques "WOOL.LIB" et "Edit.LIB" sont fournies ensemble dans la bibliothèque "libEg.a".

Cet outil interactif de définition d'interface (1) doit être associé, pour fonctionner, avec une bibliothèque d'objets interactifs de commande appelée boite à outils d'objets de commandes, "X/MOTIF" (20) dans l'environnement UNIX, et une boîte à outils d'objets graphiques constituée par une bibliothèque d'objets graphiques "GO" (21). Cette bibliothèque puissante en langage C++ fournit des services graphiques qui ne sont pas disponibles à ce jour dans l'environnement UNIX et qui permettent de créer et de commander des rectangles, des ellipses, des lignes polygonales, des textes éditables en plusieurs fontes et des images.

L'outil de définition (10) coopère également avec une librairie Xlib (3) qui constitue la couche protocole spécifiant le codage du flux d'informations circulant entre l'application et le serveur de fenêtrage et la couche bibliothèque constituant l'interface de programmation permettant d'accéder au système de fenêtrage.

EGERIA (10) couvre la couche présentation qui décrit de façon statique l'ensemble des objets constituant une interface, c'est à dire leur hiérarchie et leur attribut, et la couche dialogue qui décrit l'aspect dynamique de l'interface, c'est à dire son comportement.

Enfin une couche supplémentaire (5) est constituée par l'application qui comporte la couche sémantique contenant ce qui dans l'application ne concerne pas l'interface.

L'interpréteur "WOOL.LIB" (11) est un petit interpréteur Lisp écrit en langage C dans lequel la mémoire est gérée explicitement par compteur de référence et qui comporte un typage interne permettant la vérification de type, le déclenchement de procédure par envoi de messages conformément à une approche orientée objet.
L'interpréteur fournit un ensemble de type de données de base telles que atome, liste, nombre entier, nombre réel, chaine de caractères.

L'interpréteur "WOOL LIB" (11) utilise des tableaux pour le stockage des listes, ce qui permet d'accélérer le balayage des listes.

Cet ensemble de type de base est extensible en ce que l'on peut introduire un nouveau type de base tel qu'un "widget" permettant la manipulation contrôlée des objets "MOTIF" en "WOOL".

Chaque objet en "WOOL" est formé comme représenté fig. lB, d'une entête qui comporte un pointeur sur la classe qui est le type (31) de l'objet et le compteur de référence (Ref Cnt) et enfin d'autres informations (attributs) qui dépendent du type de l'objet. Chaque objet "widget" est associé à un identifieur alloué de façon incrémentale.

Chaque widget crée par EGERIA se voit allouer un identifieur unique du type "@000012@".

L'unicité de cette référence est garantie pour toute la durée de la session EGERIA. Si de telles références sont utilisées dans le texte des callbacks en "WOOL" attachées aux widgets, une sauvegarde (ou un couper) suivie d'une restauration (ou d'un coller) maintient la cohérence mutuelle des références. Ce n'est pas le cas si les références mutuelles sont réalisées en utilisant des atomes en "WOOL" : dans ce cas un atome n'ayant qu'une valeur, les deux callbacks feraient référence au même widget.

L'utilisation des identifieurs uniques de widgets dans le code de dialogue permet de construire des fenêtres dont les comportements sont facilement duplicables. Prenons par exemple une fenêtre éditée interactivement et contenant un bouton et un texte. Le callback associé au bouton est le suivant :
(onXmNactivateCallback (widget) (widget-unmap @00002@))

Lorsque le bouton est enfoncé en mode exécution, le texte disparaît (la commande "unmap" ayant pour objet de rendre invisible le widget donné par son argument).

Si par une opération de couper/coller on duplique la fenêtre, le comportement sera également dupliqué, EGERIA change le code du callback associé au bouton dupliqué en :
(on XmNactivateCallback (widget)(widget-unmap @00005@))
si il se trouve que @000005@ est l'identifieur unique généré pour le texte dupliquée.

Un tel procédé permet d'éviter d'avoir à changer manuellement le code des callbacks lors d'une duplication.

Le type de l'objet permet d'accéder dans le noyau de l'interpréteur "WOOL" (WOOL KERNEL) à une classe (110) qui contient une liste de méthodes, chaque méthode (Method) est une fonction telle que par exemple la fonction "print". Ainsi la fonction "Print" d'un objet sera adaptatée au type de l'objet traité. Les classes constituent les colonnes du tableau matriciel de la figure 1B et les méthodes les lignes du tableau. La liste des méthodes est embarquée dans l'interpréteur WOOL.LIB, c'est-à-dire livrée avec l'éditeur (figure en annexe 6).
Dans l'interpréteur "WOOL.LIB" (11) un atome peut seulement avoir une seule valeur alors que dans les langages Lisp traditionnels, on peut donner à une variable et à une fonction le même nom sans conflit.

Cet interpréteur propose un jeu de primitives "Lisp" facilement extensibles.

Enfin l'interpréteur "WOOL.LIB" est écrit d'une façon orientée objet et les objets sont typés de façon interne à l'interpréteur.

Une autre particularité de l'interpréteur est qu'il est réentrant, ceci signifie qu'une fonction lancée par lui peut à nouveau relancer une interprétation qui aura accès à la même pile de données WOOL.

Le ramasse-miettes constitué par la vieille méthode de comptage de référence nécessite de prendre un soin supplémentaire quand on créé des structures qui s'autoréférencent. L'interpréteur "WOOL.LIB" comporte un ramasse-miettes ou glaneur de cellules (Garbage Collector, GC) qui permet de temps à autre et de façon cyclique de balayer la mémoire à la recherche d'objets inutilisés dont l'espace peut être réutilisé, ce qui se fait sans interrompre l'utilisation. Ce glaneur de cellules (Garbage Collector, GC) est incrémental. Le glaneur de cellules utilise des compteurs des références permettant l'allocation d'objets de taille quelconque et un mécanisme de regroupement des objets par taille pour limiter la fragmentation.

L'interpréteur "WOOL.LIB" met en oeuvre un glaneur de cellules (garbage collector, ou GC), permettant la récupération automatique de la mémoire inutilisée, ce qui permet au programmeur de ne pas se soucier de l'allocation et de la désallocation des objets utilisés. Un tel système permet une programmation trés rapide, car les programmes n'ont nul besoin de contenir le code pénible à concevoir et à vérifier qui est traditionnellement celui de la gestion explicite de la mémoire utilisée.

Le GC de "WOOL.LIB" est incrémental en ce qu'il opère de manière continue et sur de faibles volumes de données, contrairement aux GC classiques qui ne sont appelés qu'occasionnellement, pour la récupération d'un volume important de mémoire ; dans ce cas, la période pendant laquelle le GC est actif se traduit par un arrêt perceptible de l'interprétation du programme en cours, ce qui peut être trés gênant pour l'utilisateur d'un programme interactif. Un GC incrémental garantit que l'interprétation se déroule sans à-coup, le surcroît dû au GC étant uniformément réparti sur l'ensemble de l'exécution du programme interprété.

La propriété d'incrémentalité du GC de "WOOL-LIB" est obtenue :
- en maintenant un compteur de référence pour tout objet alloué, celui-ci n'étant libéré que lorsque ce compteur passe à zéro.
- en considérant que la plupart des objets alloués sont en fait désalloués trés rapidement après leur création : de manière régulière (après l'exécution de toute instruction contenue dans une séquence d'expressions), une zone spéciale est balayée, à la recherche de tels objets.

Les noms qu'EGERIA donne aux widgets "X/MOTIFS" sont compatibles avec les conventions imposées par X/Window et X/Motif qui permettent la paramétisation des interfaces (fichier X default, option de lancement des programmes).

Le code contenu dans EGERIA contient les références nécessaires à l'édition de liens.

Dans l'utilisation d'EGERIA avec la boite à outils "X/MOTIF" (20) on place nécessairement dans le code d'EGERIA (10):
- la description des types de bases ("widget", procédure de rappel "callback", etc..., par exemple XmTopLevelShell cf(40) annexe 4),
- les classes d'objets de l'interface (push button, scrollbar, menubar, etc...) et les primitives (toolkit-init, "widget" create, etc..., par exemple on XmNinputCallback du "widget" XmDrawingArea cf(432) annexe 4)
- les types dérivant de types de base (énuméré, dimension, etc..., par exemple XmNwidth de XmTopLevelShell)
- les attributs propres à chaque classe

Des fonctions de haut niveau écrites à partir des primitives seront placées dans le fichier externe (14). Ceci permet de rajouter de nouvelles classes d'objets de l'interface.

La structure d'EGERIA (10) se caractérise par une boucle principale de lecture de l'entrée qui distribue les évènements (clic souris, action clavier) reçus aux différents composants du programme. Un exemple d'une telle boucle (511 annexe 5) figure dans l'exemple d'application donné par la suite dans les annexes 4 et 5.

L'interprète "WOOL.LIB" ne contient pas la boucle principale de l'application qui reste contrôlée par l'application (5).

Cette boucle est chargée d'appeler la fonction de lecture motif puis de distribuer l'entrée reçue. Cela signifie qu'il existe un niveau de programmation où l'on peut décider pour chaque évènement X/Window et donc pour chaque évènement "Motif" de l'entité chargée de traiter l'évènement. Ce peut être "Motif" qui appellera les procédures de rappel "callbacks" définis pour le ""widget"" associé à l'évènement ou bien un autre composant tel qu'EGERIA.

Dans le cas défini par EGERIA, une "callback" telle que par exemple "call-back dog:draw" écrite en Lisp (cf 435 annexe 4) ou "call-back dog:step" (cf 4412 annexe 4) est formée d'un appel du point d'entrée principal (530 respectivement 531 annexe 5) de l'interpréteur "WOOL.LIB" qui va exécuter la méthode associée (523 respectivement 525 annexe 5) écrite en langage C et rend la main aussi vite que possible.

Enfin l'utilisation d'un système hybride fonctionnant en langage Lisp et en langage C pose le problème des conversions systématiques des paramètres des fonctions de C vers Lisp et de Lisp vers C. La solution était de faire utiliser par le système Lisp les structures naturelles de C autant que possible, mais en les préfixant avec une entête en langage "WOOL" (par exemple 522 annexe 5).

La figure 1B représente la structure du noyau (WOOL KERNEL) qui est organisée selon un tableau dont chaque colonne correspond à un type d'objet. Un objet étant référencé par son type qui permet ainsi d'accéder à la méthode de traitement des messages que peut traiter l'objet.

Dans le mode exécution, l'interpréteur "WOOL.LIB" (11) a essentiellement pour tâche de charger le fichier (13) de description d'interface,par exemple constitué par l'annexe 4, lorsque cette interface a été élaborée. "WOOL.LIB" exécute ce fichier de description d'interface (14) comme un programme en langage WOOL pour reconstruire l'interface de l'application et ensuite interprète tous les évènements survenant en provenance de la boite à outils MOTIF pour, soit réagir de façon purement dynamique dans l'interface sans réveiller l'application, soit envoyer l'évènement à l'application par l'intermédiaire d'un point d'entrée de celle-ci.

L'éditeur EGERIA (10) possède principalement deux modes de fonctionnement, l'édition et l'exécution.

Le mode "édition" est celui dans lequel on peut librement modifier l'interface de l'application et le mode "exécution" permet de tester le comportement de l'interface.

Enfin, si l'éditeur utilisé résulte de l'édition de lien de la bibliothèque éditeur (12) avec l'application (5) alors les fonctions de l'application sont effectivement appelées.

Pour l'édition des objets, on retrouve les fonctions classiques créer, couper, copier, coller, éditer, les attributs, défaire, avec toutefois des nouveautés importantes qui sont l'édition des formes (FORM EDITOR), l'édition des attributs (Attribute Editor) et la hiérarchie des objets. Les objets ("widget") peuvent se classer en deux catégories, les objets élémentaires et les contenants ("container widgets") qui peuvent contenir plusieurs objets. Parmi les contenants, certains comme les objets interactifs père ou coquille ("shell widgets") n'ont pas de contenant et sont créés au premier niveau (exemple "Top level Shell" annexe 4).

Un widget MOTIF FORM est un widget "contenant" dont les fils sont automatiquement positionnés ou retaillés lorsque le widget FORM est retaillé. La spécification interactive du comportement des fils d'un tel widget est réalisée à l'aide d'un formulaire spécial, dit éditeur de forme "FORM EDITOR", qui permet de définir de manière aisée l'ensemble des comportements fournis par MOTIF.

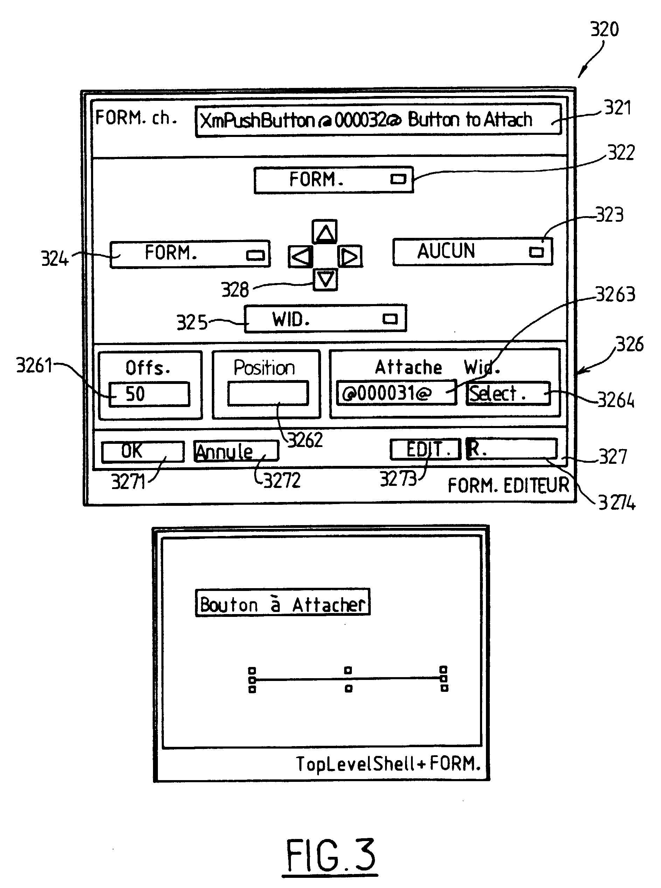

Le comportement d'un fils du widget FORM (par exemple XmPushButton (321, figure 3)) est spécifié en donnant la valeur d'un attachement pour les 4 bords du widget, respectivement désignés par top (322), right (323), left (324), bottom (325). Un attachement peut être NONE (pas d'attachement (323)) FORM (attachement par rapport au bord correspondant du FORM (322,324)), POSITION (attachement proportionnel à la dimension horizontale ou verticale du widget FORM (3262)) ou WIDGET (attachement relatif à un widget fils du même FORM (325)).

Avec chaque attachement, il est possible de spécifier une distance supplémentaire (3261)(offset) de décalage par rapport à la position spécifiée dans la zone d'édition (3262).

Conformément à la figure 3 représentant le formulaire d'édition de forme "FORM EDITOR", quatre menus sont affichables pour spécifier le type d'attachement du widget fils considéré. Pour chaque attachement, une flèche (328) interactive montre quel attachement est "courant". La sélection d'un attachement quelconque se traduit par la mise à "courant" de l'attachement positionné.

Pour éditer un fils de FORM à l'aide de cet éditeur, il convient de sélectionner le widget et d'utiliser la commande d'édition de forme "FORM EDITOR" (2022) activable à l'aide du menu "Edit" (202). La classe, le nom et l'identifieur du widget apparait alors dans une zone de texte (321)de la fenêtre de l'éditeur de FORM, qui visualise alors les caractéristiques du widget qui concernent son comportement comme fils du widget FORM.

Deux zones de texte décrivent le décalage (3261) (offset) et la position (3262)(lorsque l'attachement est POSITION) du widget correspondant à l'attachement courant. Lorsque l'attachement courant change, ces zones de texte sont mises à jour. Lorsque l'attachement n'est pas POSITION, la zone de texte marquée "position" est inactive, et son titre apparait en grisé, comme sur la figure 3.

Il est possible de déplacer ou de retailler interactivement avec la souris le widget fils; dans ce cas la commande est exécutée comme si elle avait été passée à partir de l'éditeur FORM, et les zones de texte correspondant au décalage et/ou à la position sont mises à jour.

L'éditeur permet ainsi la création d'objets élaborés (container "widget") qui peuvent se composer de plusieurs objets mais qui sont considérés comme des objets simples, c'est à dire qu'on peut les coller, les couper et les copier en une seule opération.

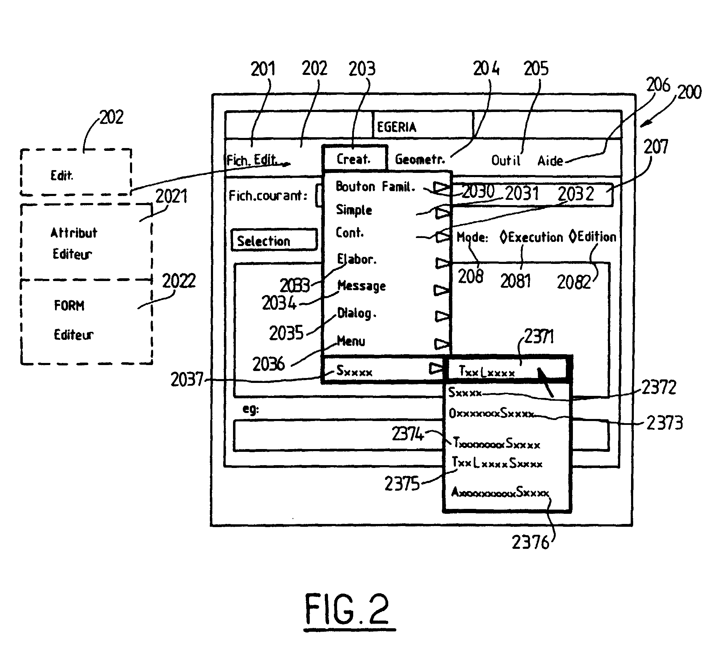

Tous les objets sont réalisés à l'aide de la fonction création (203, figure 2) "create" du menu principal (200) qui permet d'installer un objet dans un objet container, après avoir sélectionné un objet par un clic souris. Ce menu principal (200) comporte en plus les fonctions classiques fichier (201) "file" et aide (206) "Help" et les fonctions spécifiques "EDIT", "CREATE", "GEOMETRY", "TOOLS".

L'édition de l'apparence de l'interface est effectuée soit directement à la souris en modifiant la taille ou la position des "widgets" à l'intérieur de leur contenant, soit en utilisant des formulaires contenant les différents attributs d'un ou plusieurs objets. Pour cela, on fait appel à la fonction (202) "Edit" (édition) qui permet l'édition des attributs d'un objet dans une fenêtre séparée et permet d'éditer les attributs des objets père d'un objet sélectionné et également de couper, coller, assembler, copier un jeu d'objets sélectionné. Enfin l'éditeur d'interface permet de modifier la géométrie de la présentation en faisant appel à la fonction (204) "geometry" (géométrie) qui permet par exemple d'aligner un ensemble d'objets sélectionné par le sommet, le côté ou la base, ou de faire varier les dimensions de l'ensemble de ces objets, soit en largeur, soit en hauteur.

Le menu création (203) "CREATE" comporte comme représenté à la figure 2, une possibilité de choix parmi les différents objets disponibles dans la librairie X/MOTIF. Ces objets sont constitués par une famille de boutons (2030), un contenant (container) (2032), un objet élaboré (2033), un objet simple (2031), un objet du type message (2034), un objet du type dialogue (2035), un objet du type menu (2036) et un objet du type contenant (2037) ("Shell") qui lorsqu'il a été sélectionné fait apparaître une deuxième carte de menu permettant de choisir parmi les attributs niveau maximum (2371), contenant (2372) (Shell), contenant privilégié (2373) (override Shell), contenant transitoire (2374) (transient Shell), contenant général (2375) (Top level Shell), contenant d'application (2376) (Application Shell).

La partie attribut est réalisée avec un jeu de sous-éditeurs. Ces sous-éditeurs sont automatiquement créés par lecture d'une description des classes de la librairie (11) "X/MOTIF". Il y a trois sortes de sous-éditeurs. Un sous-éditeur bouton bascule pour entrer des attributs booléens, un sous éditeur bouton poussoir affichant un menu pour des types énumérés et un sous éditeur zone de texte pour des valeurs textuelles ou numériques, telles que celles figurant en annexe 4 sous la référence (436).

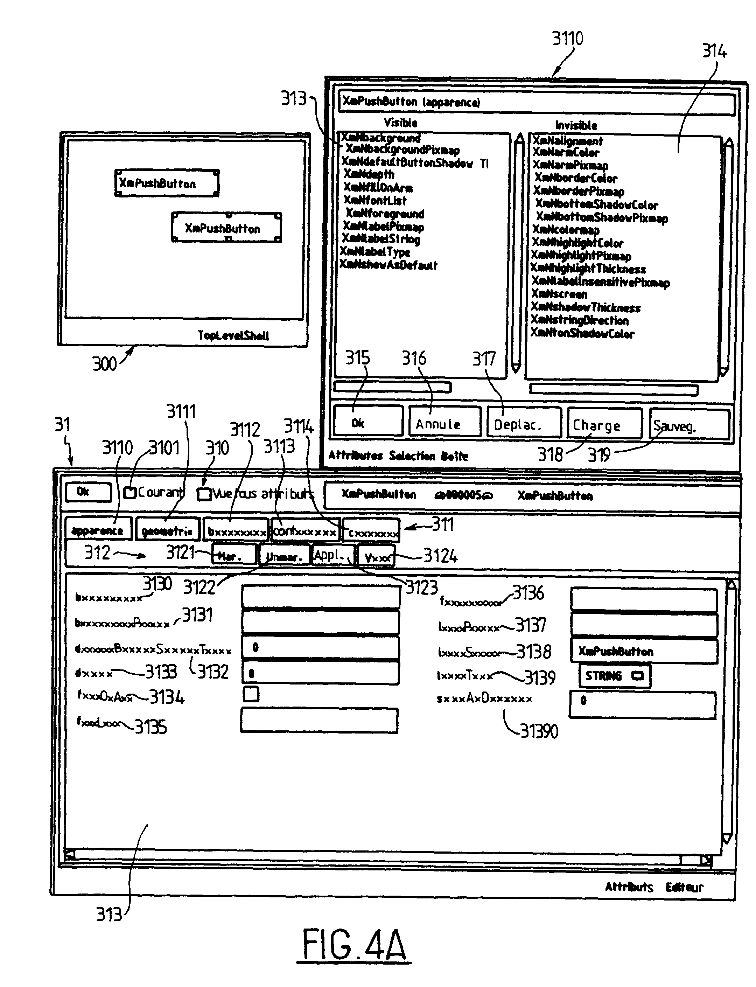

La sélection dans la barre de menu de la fonction "edit"(202) permet d'éditer par la fonction 2021 "Attribute Editor" les attributs d'un "widget". Cette solution provoque l'affichage d'une fenêtre du type de celle représentée à la figure 4A.

Cette sélection provoque l'affichage d'une fenêtre du type de celle représentée à la figure 4A qui comporte un menu constitué de plusieurs cartes (311, 312) superposées accessibles par des boutons (3110 à 3114 et 3121 à 3124) jouant le rôle d'onglet. Chaque carte regroupe les attributs correspondants à une catégorie de "widget". Ces catégories sont l'apparence lancée par le bouton 3110, la géométrie lancée par le bouton 3111, le comportement lancé par le bouton 3112, les contraintes lancées par le bouton 3113, et les procédures de "callback" lancées par le bouton 3114. Ceci permet à l'utilisateur d'accéder de manière commode à un attribut parmi les trés nombreux attributs fournis par le logiciel X/MOTIF.

Sur la figure 4A, le bouton de la carte correspondant à l'apparence 3110 est représenté en avant par rapport aux autres boutons 3111, 3112, 3113,3114 représentés enfoncés, c'est à dire en arrière plan. L'éditeur d'attribut apparence correspondant à ce bouton représenté en avant plan a été activé par un clic souris sur la zone du bouton, et affiche la fenêtre correspondante (313) pour permettre l'édition d'attributs. Dans le cas de la figure 4A, ce sera la fenêtre dont la partie 313 comporte les attributs permettant de définir l'apparence du "widget" en cours d'édition. Ces attributs sont constitués de zone de texte permettant de définir dans la zone 3130 l'arrière-plan, dans la zone 3131 l'arrière-plan de la matrice de points, dans la zone 3132 l'épaisseur de l'ombre de défaut de bouton, dans la zone 3133 la profondeur, dans la zone 3135 la liste de police de caractères, dans la zone 3136 l'avant-plan, dans la zone 3137 l'étiquette de la matrice de points, dans la zone 3138 l'étiquette de la chaîne, ici en l'occurrence XmPushButton, dans la zone 3139 le type d'étiquettes, et dans la zone 31390 l'apparition en tant que défaut.

Les attributs affichés dans la partie de fenêtre 313 sont les attributs visibles qui apparaissent lorsque le bouton 3101 portant l'étiquette "courant" (CURRENT) est enfoncé.

La définition des attributs se fait de façon classique, en venant cliquer avec la flèche souris la zone de texte de l'attribut souhaité et en introduisant au clavier les valeurs textuels ou numériques. Une fois chaque attribut définis, la sélection de bouton 3123 portant la commande applique (Apply) permet d'effectuer la validation globale de tous les attributs modifiés au cours d'une itération avec la feuille d'édition d'attributs. La sélection du bouton 3122 portant la commande démarque (unmark), permet d'annuler toutes les modifications faites avant une validation globale. La sélection du bouton 3121 portant la commande marque permet de valider les modifications sans passer par une validation globale.

La sélection du bouton 3124 portant la commande vue (view) permet de faire passer un nom d'attribut de la liste des attributs visibles à la liste des attributs invisibles et réciproquement.

L'enfoncement de ce bouton (3124) par clic de la flèche souris sur la zone du bouton déclenche au sein de l'éditeur d'attributs une fonction d'affichage de la fenêtre 3110 permettant de visualiser à la fois les attributs visibles représentés dans la zone 313 et les attributs invisibles représentés dans une zone 314 de la fenêtre 3110. Cette fenêtre 3110 comporte également des boutons fonctionnels permettant de valider par le bouton OK la sélection effectuée, d'invalider par le bouton 316 la sélection ou les modifications apportées, de déplacer par le bouton 317 un attribut de la zone visible à la zone invisible ou vice versa, de charger par le bouton 318 des attributs et par le bouton 319 de sauvegarder la sélection ou les modifications de sélection qui ont été apportées.

Pour le bouton (view all attributes) une commande additionnelle 310, disponible dans la feuille d'édition d'attribut (view all attributes) sous la forme d'un bouton radio permet de ne pas tenir compte de la spécification de la visibilité et d'afficher tous les attributs dans la fenêtre 313. Lorsque l'on sélectionne le bouton radio courant 3101, seuls les attributs portant la spécificité visible sont affichés dans la fenêtre 313.

La sélection de la carte "geometry" par le bouton 3111 permet de lancer une fonction d'édition permettant d'afficher les attributs de sélection et de modification de la géométrie d'un widget. La carte "comportement" par l'activation du bouton 3112 permet de lancer une fonction d'édition permettant d'afficher les attributs définissant le comportement d'un widget et de définir quel sera son comportement en fonction des attributs sélectionnés.

La sélection du bouton 3113 active la fonction d'édition des contraintes et permet d'afficher les attributs des contraintes attachés à un objet déterminé.

Selon le type d'objet des éditeurs sont inactivés.

Par exemple, pour les boutons poussoir dont les attributs sont définis dans la fenêtre 31, la fonction d'édition des contraintes et de validation globale sont inactives et dans ce cas, le titre apparait en grisé comme représenté dans les boutons 3113, 3123.

Enfin, la sélection du bouton 3114 permet de lancer la fonction d'édition de procédures de rappel.

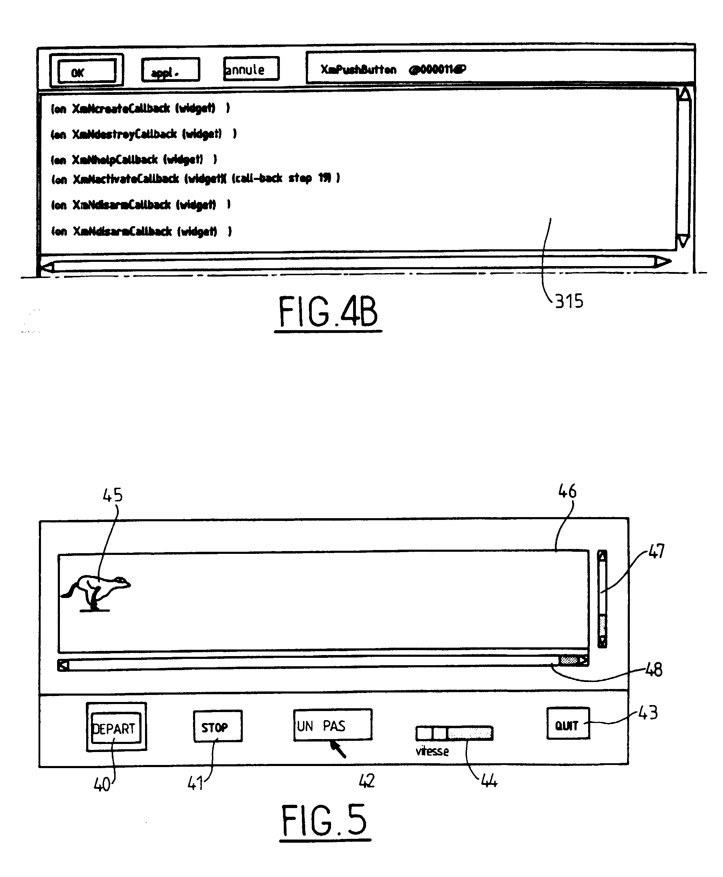

La partie procédure de rappel "callbacks" est simplement une zone de texte où il est possible d'éditer les procédures de rappels "callbacks" de l'objet interactif ""widget"". Cette partie est représentée de façon agrandie à la figure 4B. Au-dessus de la zone de dialogue concernant les procédures de rappels "callbacks" se trouve une boite de texte permettant d'afficher les informations sur le "widget" édité telles que son nom et son numéro de référence. Une procédure de rappel "callback" est ici codée en langage WOOL. Un modèle de base est donné pour chaque procédure de rappel "callback" possible d'un "widget". Par exemple pour éditer le code WOOL exécuté quand un bouton poussoir est cliqué, le modèle de base est (on XmN activate callback (widget)). Un pseudo "callback" XmN create callback a été ajouté, il est appelé par EGERIA quand une description d'interface (14) est chargée, après que tous ses "widgets" fils créés dans le même fichier de description aient été créés. Des initialisations additionnelles peuvent être faites à l'intérieur de XmN create callback.

La sélection d'objets parent (tel que par exemple: XmDrawingArea qui est le parent de XmFrame, XmLabel, XmScale et de XmSeparator de l'annexe 4) n'est pas possible directement de façon à éditer les attributs d'un objet "Shell" ou d'un objet général "Top level widget" (XmTopLevelShell), il est nécessaire d'utiliser la commande "Select parent" et ensuite de lancer l'édition d'attributs.

Les objets interactifs créés ("widgets") dépendent beaucoup de l'état courant du fichier X/defaults, les noms donnés aux objets peuvent être utilisés pour positionner les valeurs par défaut des objets créés si ces valeurs n'ont pas été fixées avec l'éditeur. Un jeu minimum et utile de valeurs fixées par défaut qui peut être utilisé par EGERIA peut être celles définies en annexe 1 dans le fichier X/Defaults (13).

Une table de traduction contenue dans le fichier X/defaults peut également servir à activer des fonctions internes à Egeria, à partir d'évènements UNIX. Ainsi l'évènement (21) de l'annexe 2 permettra de sélectionner avec le bouton gauche et de déplacer le ou les "widget"(s) sélectionné(s) par le pointeur. La fonction "EgSelect" permet la sélection d'un "widget" sous le pointeur et la fonction EgMove permet le déplacement du "widget" sélectionné. Le bouton gauche de la souris actionné en même temps que la touche "Shift" permet comme représenté par la ligne 22 de l'annexe 2, d'ajouter l'objet désigné à la liste des objets sélectionnés. En effet la fonction EgSelect or UnSelect, permet de sélectionner ou de désélectionner un objet désigné par le pointeur. Cette fonction travaille comme une bascule. Enfin l'actionnement du bouton de droite de la souris produisant l'évènement indiqué à la ligne 23 en UNIX déclenchera la fonction EgSetSelect qui permet de tracer un rectangle interactif et de sélectionner les objets situés à l'intérieur du rectangle. La zone rectangulaire est définie par deux coins, l'endroit où le bouton est enfoncé et l'endroit où le bouton est relâché.

Une deuxième table de translation minimale définit à l'annexe 3 est également installée dans le fichier X/Defaults pour permettre l'activation des principales fonctions d'édition à partir d'un clavier. Cette table fait appel à la fonction Eg WOOL Exec qui exécute une expression en langage WOOL qui est la valeur de l'atome donné en tant qu'argument. Les atomes préfixés par le terme "Custom" sont définis dans le fichier Edcustom.G. Ceci est la façon standard de personnaliser le comportement de base de l'éditeur.

Un exemple d'application de l'éditeur d'interface décrit en relation avec les figures 1A à 4 sera donné ci-après pour l'édition d'une interface permettant d'afficher comme représenté à la figure 5, un chien (45) en train de courir en permettant par action sur un bouton "One step" (42) de faire avancer le chien d'un pas , par action sur un bouton "Quit" (43) de terminer l'exécution de l'application, par action sur bouton "start" (40) de faire courir le chien à une vitesse modulable grâce à un potentiomètre à glissière (44), et par action sur un bouton "stop" (41) d'arrêter la course du chien.

L'application comportera plusieurs images successives mémorisées dans une mémoire "Pixmap pdog" (52) qui seront visualisées en les déplaçant dans une aire de dessin "DrawingArea". Pour éditer l'interface, il convient d'abord de créer les "widgets" en utilisant le menu "create". Tout d'abord, il faut créer explicitement un "widget Shell", qui sera dans notre exemple en "widget" général, un "top level", c'est à dire "XmToplevelShell" (40) qui a pour identificateur "@000001@",pour pour parent "eg:widget-root" et contenant un autre objet (41) "DrawingArea". Ensuite on créera les autres "widgets" qui comporteront tous un identificateur, des attributs, un éventuel nom dans EGERIA "eg:name", par exemple "speed-widget" (4510) et un éventuel script, par exemple celui(470) du bouton poussoir "quit" (47). A chaque fois, l'éditeur demandera d'indiquer le père et la position. Nous créerons une "DrawingArea" où l'application dessinera le chien à l'intérieur d'une fenêtre de déroulement "scrolled window" (46), définie à l'annexe 4 par l'objet "XmScrolledWindow" (462) et pourvue des barres de défilement "scroll bars" 47,48. Pour créer les objets, l'éditeur dispose des fonctions connues, couper, coller, copier et la liste des objets créés ou sélectionnés se manipule grâce, au bouton de gauche qui permet de sélectionner ou de déplacer le ou les "widget"s, au bouton de gauche qui lorsque la touche "Shift" est enfoncée permet d'ajouter l'objet désigné à la liste des objets sélectionné, au bouton de droite de la souris qui permet de sélectionner tous les "widgets" à l'intérieur d'une zone rectangulaire définie par deux coins, à savoir l'endroit où le bouton est enfoncé, et l'endroit où il est relâché. A l'opération "select parent" du menu "edit", le "widget" sélectionné devient le père de celui qui été sélectionné, ceci est indispensable pour sélectionner un "widget" caché par son ou ses fils, par exemple un" Shell" ou un menu. Lorsqu'un objet est sélectionné, sa classe et son numéro d'identification et éventuellement son nom apparaissent dans la fenêtre principale d'EGERIA, comme représenté à la figure 2.

Les "widgets" peuvent ensuite être changé de position et de taille à l'aide de la souris en actionnant le bouton de gauche pour sélectionner et déplacer le ou les "widgets" sélectionnés, ce qui fait intervenir les évènements de la ligne 21 de l'annexe 2.

L'action sur le bouton de droite de la souris pour tracer un rectangle dans lequel les objets seront sélectionnés, fait intervenir les commandes de la ligne 23 de l'annexe 2. L'action sur le bouton du milieu de la souris, comme indiqué par la ligne 24 de l'annexe 2 permet de changer la taille d'un ou plusieurs "widgets".

Il est également possible de changer la position et la taille de plusieurs objets à la fois, grâce à des opérations du menu "Geometry", qui comporte une opération "align" permettant le déplacement des objets sélectionnés pour qu'ils soient alignés sur une même verticale à gauche, ou au milieu, ou à droite, ou sur une même horizontale, en haut, ou au milieu, ou en bas.

Une opération "Resize" de ce menu "Geometry" permet de donner la même taille aux objets sélectionnés en largeur ou en hauteur, ou une taille mini ou maximum. L'opération "Distribute" permet de répartir à intervalle régulier les objets sélectionnés, ils peuvent être répartis horizontalement ou verticalement à l'aide du rectangle les englobant ou à l'intérieur de leur père.

L'édition des attributs s'effectue en sélectionnant l'opération (2021) "Attribute" du menu "Edit" pour faire apparaître une feuille de données contenant tous les attributs comme représentée à la figure 4A.
Certains attributs ne peuvent être modifiés après la création du "widget". C'est le cas par exemple des attributs XmNscrollingPolicy et XmNscrollBarDisplayPolicy.

Nous appelons "script" le code décrivant la réponse à l'ensemble des callbacks. nous allons détailler les scripts associés à chacun des "widgets. ces scripts sont écrits en WOOL.
- Le Pushbutton "Quit" permet de quitter l'application. Pour indiquer qu'en réaction au message "XmNactivateCallback" le bouton réagira en appelant la fonction "exit", il suffit d'écrire dans le script :
   (on XmNactivateCallback(widget)(exit)).

On notera que le paramètre "widget" est disponible. il indique le "widget" couramment activé, c'est à dire ici le bouton poussoir "PushButton Quit". Le paramètre call_data n'est pas disponible.
- Le bouton poussoir "Pushbutton Step" fait avancer le chien d'un pas. Pour indiquer qu'en réaction au message XmNactivateCallback le bouton réagira en appelant la "callback" "step", définie dans l'application, on écrit dans le script :
   (on XmNactivateCallback ("widget" (call-back dog:step 19))

Le nombre 19 passé en argument se retrouvera dans le paramètre client_data de la "callback" C correspondant à step "StepCallback" (525). Il indique par l'instruction C:int movement=(int) client-data (526); de combien de pixels avancer le chien. La fonction C correspondante "DrawCallback" (523) pour dessiner le chien est présentée plus loin.
- Le chien est dessiné dans une aire de dessin "Drawing Area". Il est redessiné chaque fois que nécessaire en appelant la "callback" draw définie dans l'application :
   (On XmNexposeCallback (widget) (call-back draw))
   (cf annexe 4 réf. 430)

Lorsque ce "widget" est crée, on initialise l'application en appelant la fonction init par l'instruction "call-back init"(4311) qui définit les "callback" de l'application draw et step, et qui en faisant appel au code C: "InitCallback(widget, client-data,call-data) et InitPixmaps" (532) charge les images de point (pixmaps) correspondant aux différents états du chien par la procédure "InitPixmaps" définie en (5221). De plus on mémorisera la taille de l'aire de dessin "DrawingArea" dans la variable window-width pour que la fonction step fasse repartir le chien de la gauche chaque fois qu'il sort de l'aire de dessin "DrawingArea" sur la droite.
(on XmNcreateCallback ("widget") (call-back init)
(setq window-width (attribute-get "widget" XmNwidth)))
(cf annexe 4 référence 431)

La variable window-width est mise à jour chaque fois que la largeur du "widget" change par l'instruction WOOL :
(on XmNresizeCallback ("widget")
(setq window-width (attribute-get "widget" XmNwidth)))
(cf annexe 4 réf. 433) .

Enfin on nomme ce widget drawing-area (434) pour l'identifier depuis le code C qui crée les pixmaps. cela se fait avec la fonction EgVariableGetValue("drawing-area", ...) cf annexe 5 référence 522. il aurait été plus simple de passer le "widget" en paramètre d'init mais cela nous permettra de voir (plus loin) comment consulter une variable LISP depuis le code C.
- Le PushButton "START" fait courir le chien. Pour cela on utilise la fonction work-proc (441) qui mémorise une expression qui est ensuite évaluée chaque fois qu'il n'y a pas d'événement à traiter provenant de X . Cette expression doit être évaluée en peu de temps. Dans notre exemple, elle incrémente un compteur (4411) et fait avancer le chien grâce à la fonction step (4412 ou 4413)) lorsqu'une certaine valeur est atteinte. L'incrément est la valeur d'un "widget" Scale (451) identifié par un numéro géré par EGERIA, ici @000010@. L'identificateur d'un "widget" est visualisé quand celui-ci est sélectionné . Il peut facilement être copié et collé. Sa classe et éventuellement son nom sont aussi affichés.

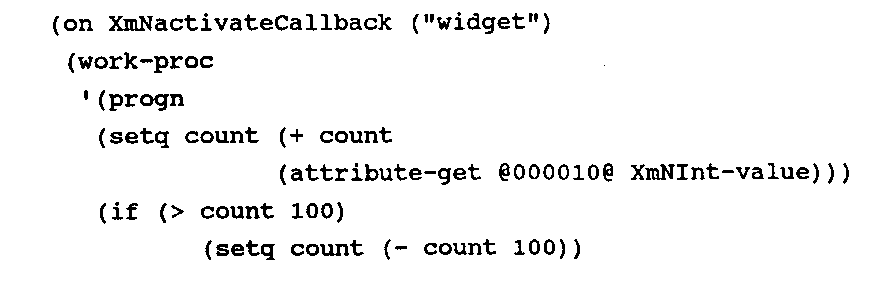

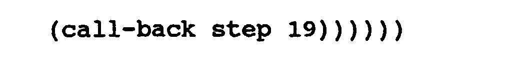

Il est important de noter que l'attribut consulté est XmNInt-value et non pas XmNvalue. Ceci permet de lever l'ambigüité due (en W00L) au fait que XmNvalue (pour MOTIF) désigne un entier pour un XmScale et une chaîne de caractères pour XmText.

Dans ce dernier cas il faudrait utiliser XmNString-value.

Le compteur est initialisé lors de la création du "widget" ;
( on XmNcreateCallback (widget) (setq count O))
- Le PushButton "Stop" permet d'arrêter la course du chien. Cela se fait aussi par un appel à work-proc cf 442:
   (on XmNactivateCallback (widget) (work-proc()))

La sauvegarde de l'interface s'effectue par l'opération "Save" du Menu "File". Par la suite, le fichier ainsi sauvé peut être relu par l'opération "Load". Quelques remarques sur les conventions de noms s'imposent :
- Les fichiers propres à EGERIA sont préfixés par eg-Il est conseillé de donner au fichier contenant l'interface d'une application le nom de cette application suffixé par.eg. Dans notre exemple nous appellerons dog.eg l'interface générée par EGERIA et dog l'exécutable.
   Si cela ne convenait pas, il faudrait indiquer explicitement le nom du fichier à charger dans la source C de l'application (dans un paramètre de la fonction EgMain).

Le reste de l'application s'écrit en C. Toutes les librairies utilisées sont écrites en C cf annexe 5. Si ce langage est C++, des modifications aux fichiers à inclure s'imposent. Pour tout autre langage il faudrait générer les fichiers de déclaration des types, des constantes et des fonctions.

Le source complet de l'exemple dog.c est en annexe 5. Nous allons en présenter les principaux éléments.

Il faut d'abord inclure les déclarations de la boite à outil "toolkit". EGERIA fournit le fichier "eg_toolkit.h contenant toutes les déclarations publiques du "toolkit" MOTIF (cf 50):
#include "eg_toolkit.h".

Il faut ensuite inclure les déclarations d'EGERIA. Les fonctions ainsi disponibles sont décrites dans le manuel de référence :
#include "egeria.h".

On donne le contrôle de l'exécution à EGERIA grâce à la fonction EgMain.

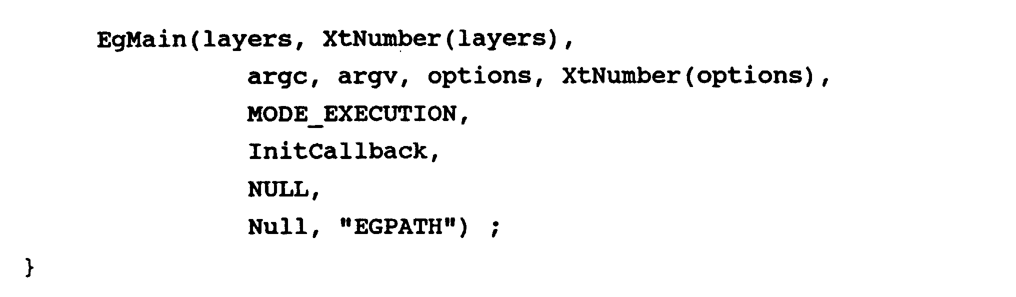

Le paramètre le plus important, InitCallback (5110), enregistre la "callback" qui initialise l'application et enregistre les autres callbacks. Cette "callback" est appelée explicitement depuis l'interface par (call-back init).

Il est conseillé de reprendre le code donné en exemple dans dog.C. Seules les callbacks seront modifiées pour d'autres applications.

La fonction EgMain et ses paramètres permet d'effectuer les initialisations nécessaires et appelle ensuite EgAppMainLoop qui boucle sur l'appel à XtAppNextEvent et EgDispatchEvent.

La "callback" InitCallback a deux rôles : initialiser l'application et enregistrer les liens entre l'interface et l'application.

Côté application, dans notre cas, on crée les pixmaps correspondant aux différentes étapes de la course du chien dans la fonction InitPixmaps.

Côté lien avec l'application, on enregistre sous les noms draw et step les callbacks DrawCallback et StepCallback grâce à la fonction EgCallbackDefine. on fait aussi de window-width une variable LISP un peu particulière car elle partagera l'adresse de la variable C windowWidth.

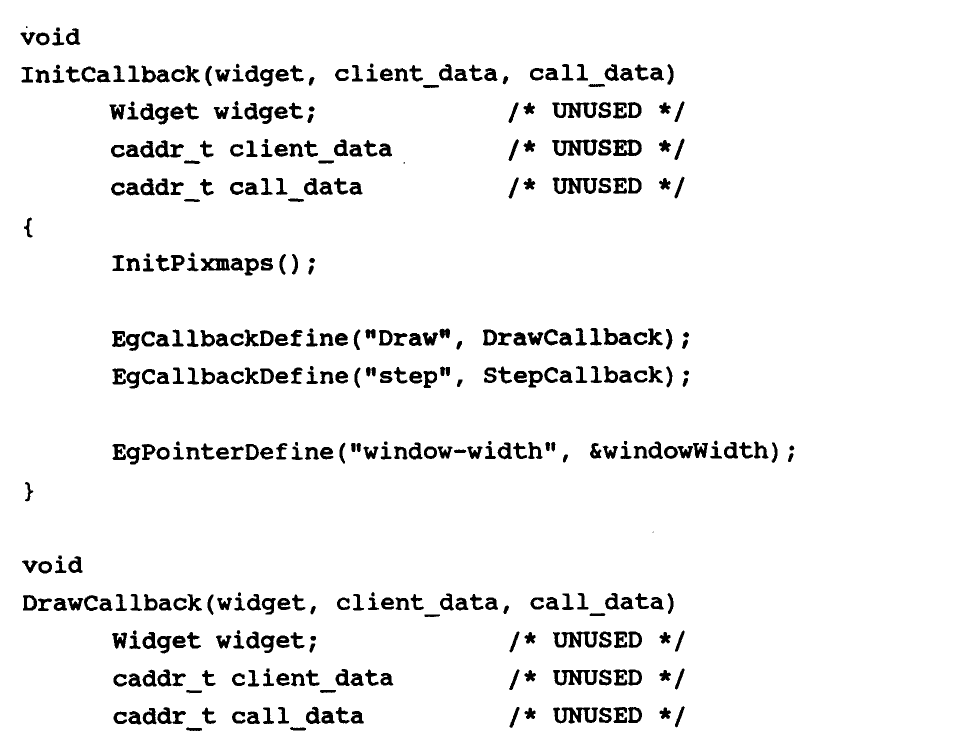

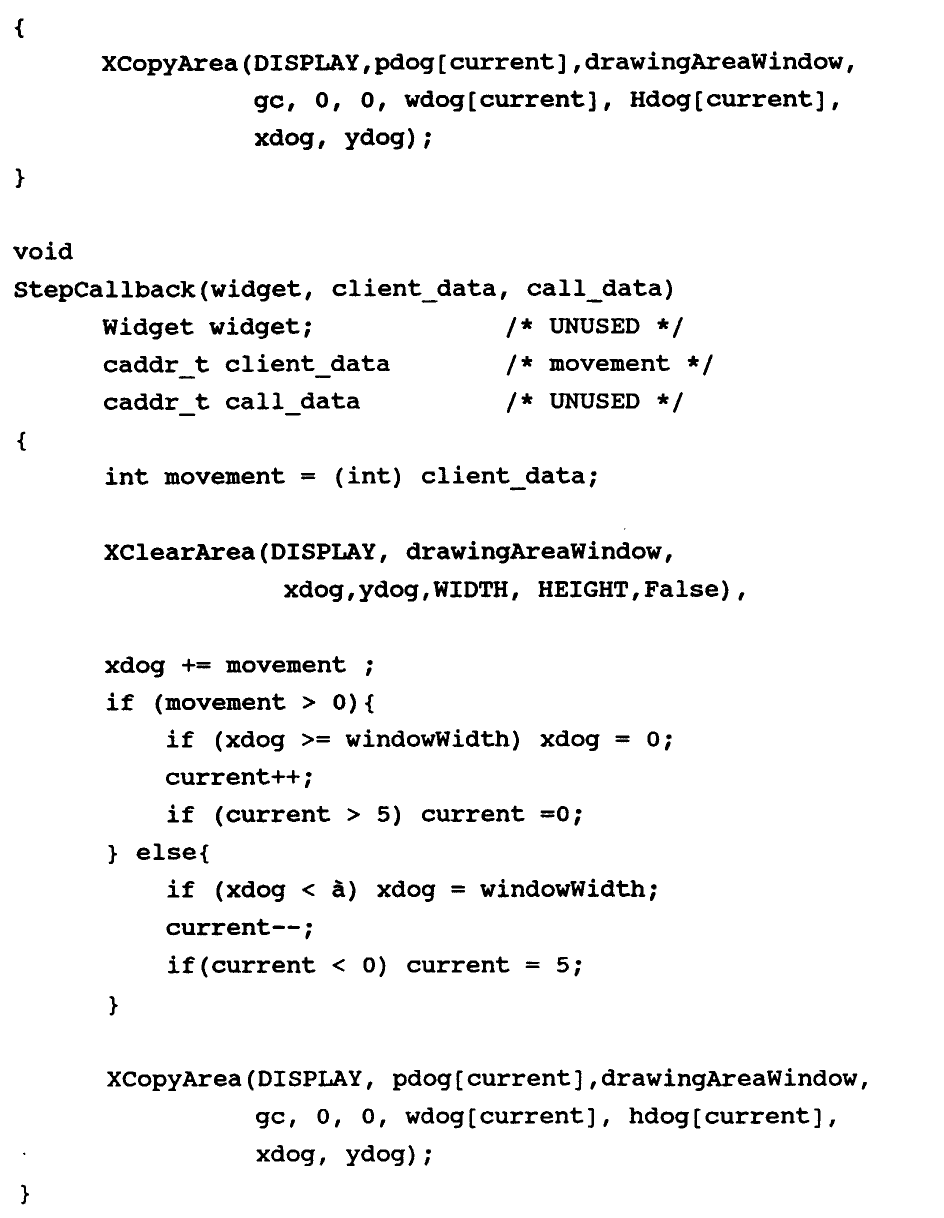

Dans la fonction InitPixmaps on crée les pixmaps et pour cela il est nécessaire de savoir dans quel widget ils seront dessinés. on consulte donc la variable LISP drawing-area.

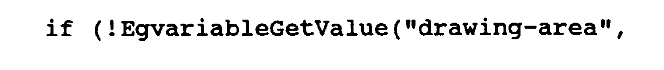

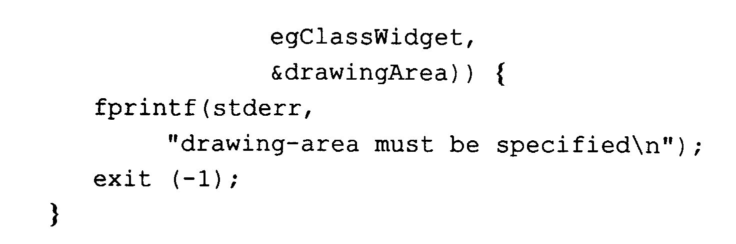

On pourrait aussi modifier la valeur d'une variable LISP depuis C. Il faut noter que ce principe se retrouve dans d'autres systèmes qui ne sont pas forcément basés sur un interpréteur LISP. Cela signifie qu'une application utilisant ces fonctionnalités n'est pas dépendant d'EGERIA.

Après avoir compilé l'application, il faut en faire l'édition de lien avec la librairie EGERIA libEg.a et avec les librairies nécessaires pour OSF/MOTIF c'est-à-dire : libXm.a, libXt.a et libX11.a.

le programme obtenu permet d'éditer l'interface s'il est exécuté avant l'option -edit :
EGPATH = .:/user/local/lib/X11/eg dog -edit&.

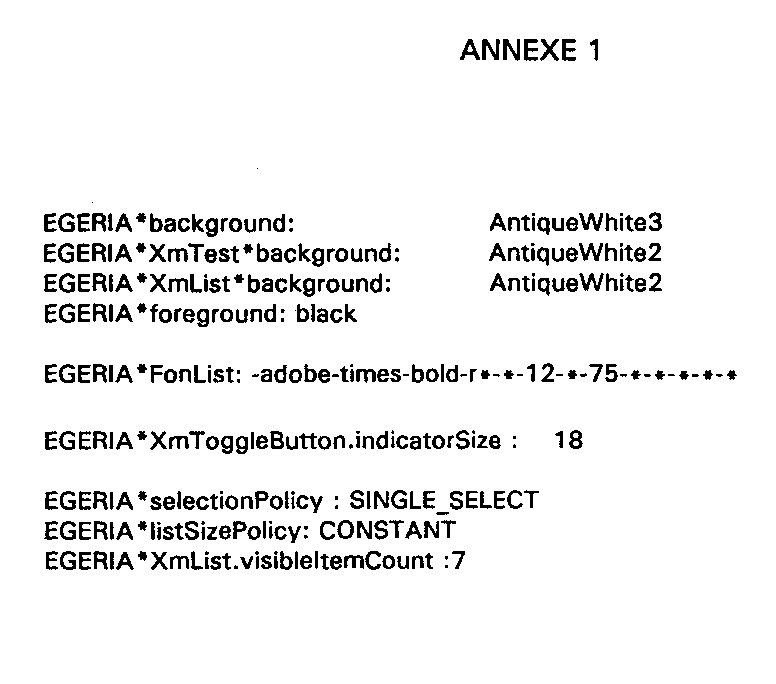

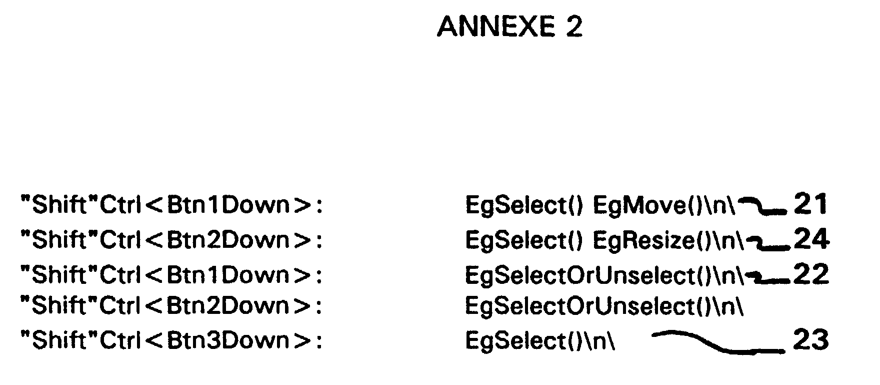

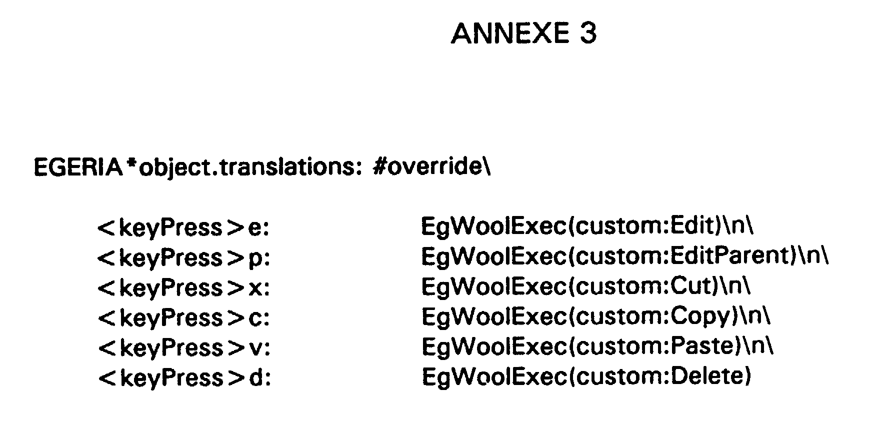

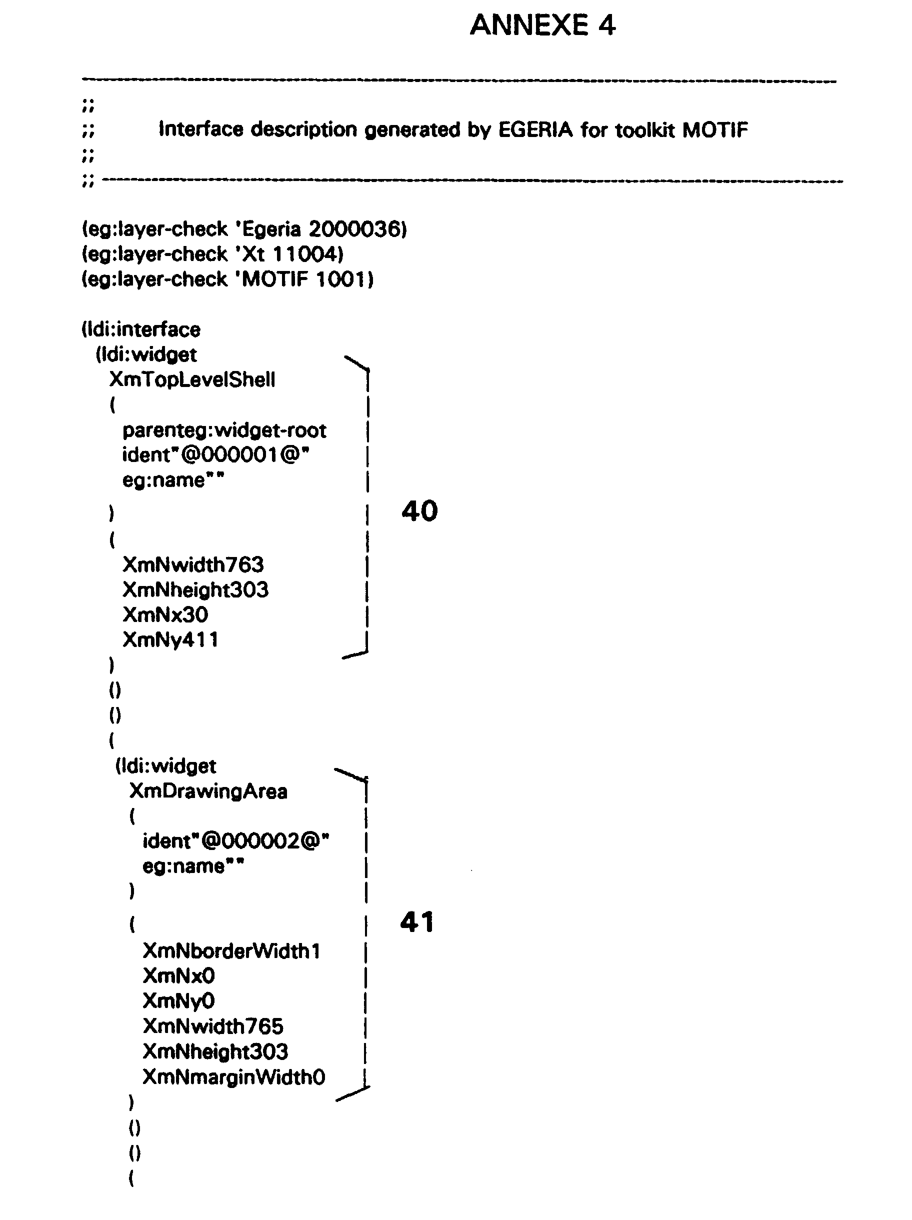

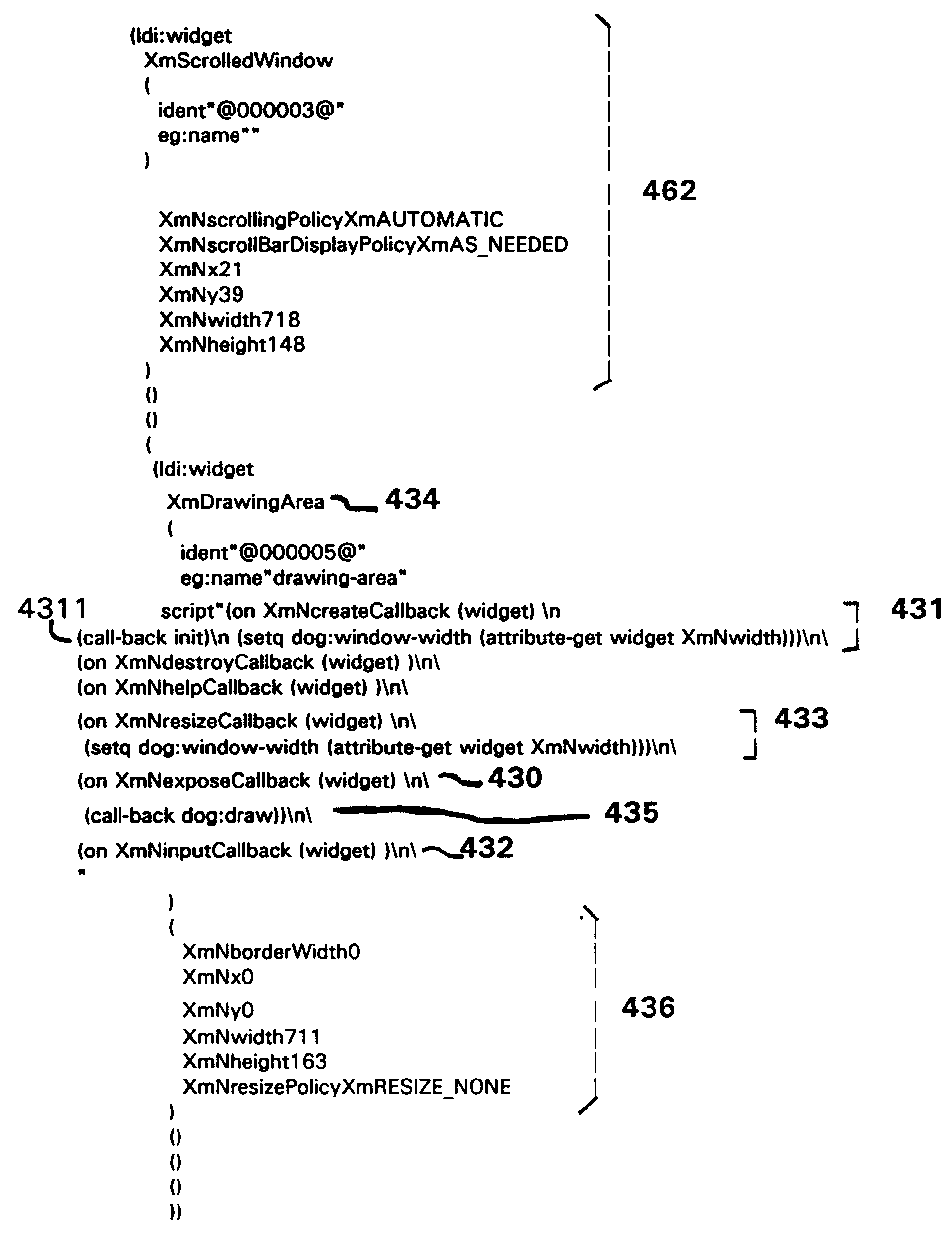

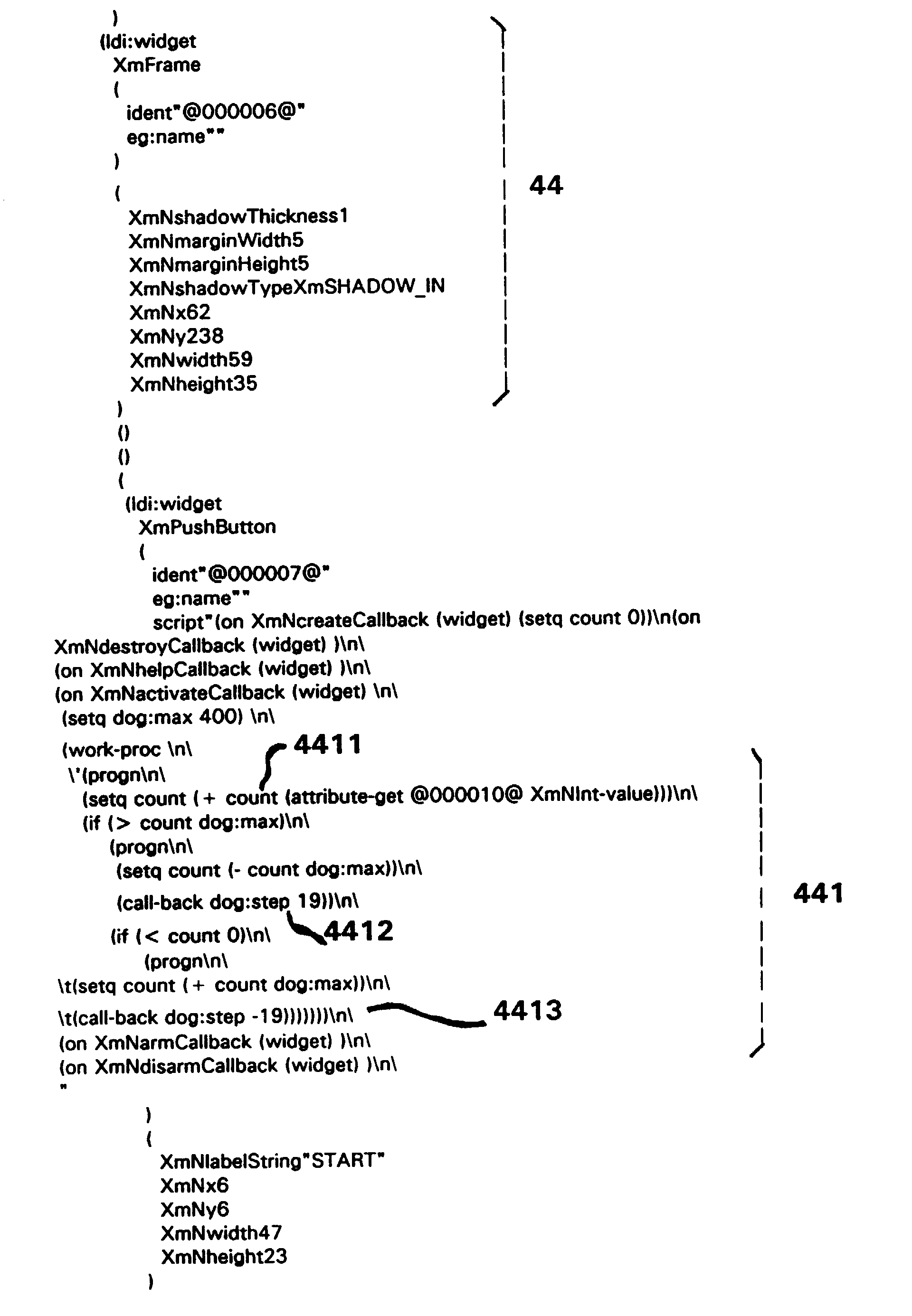

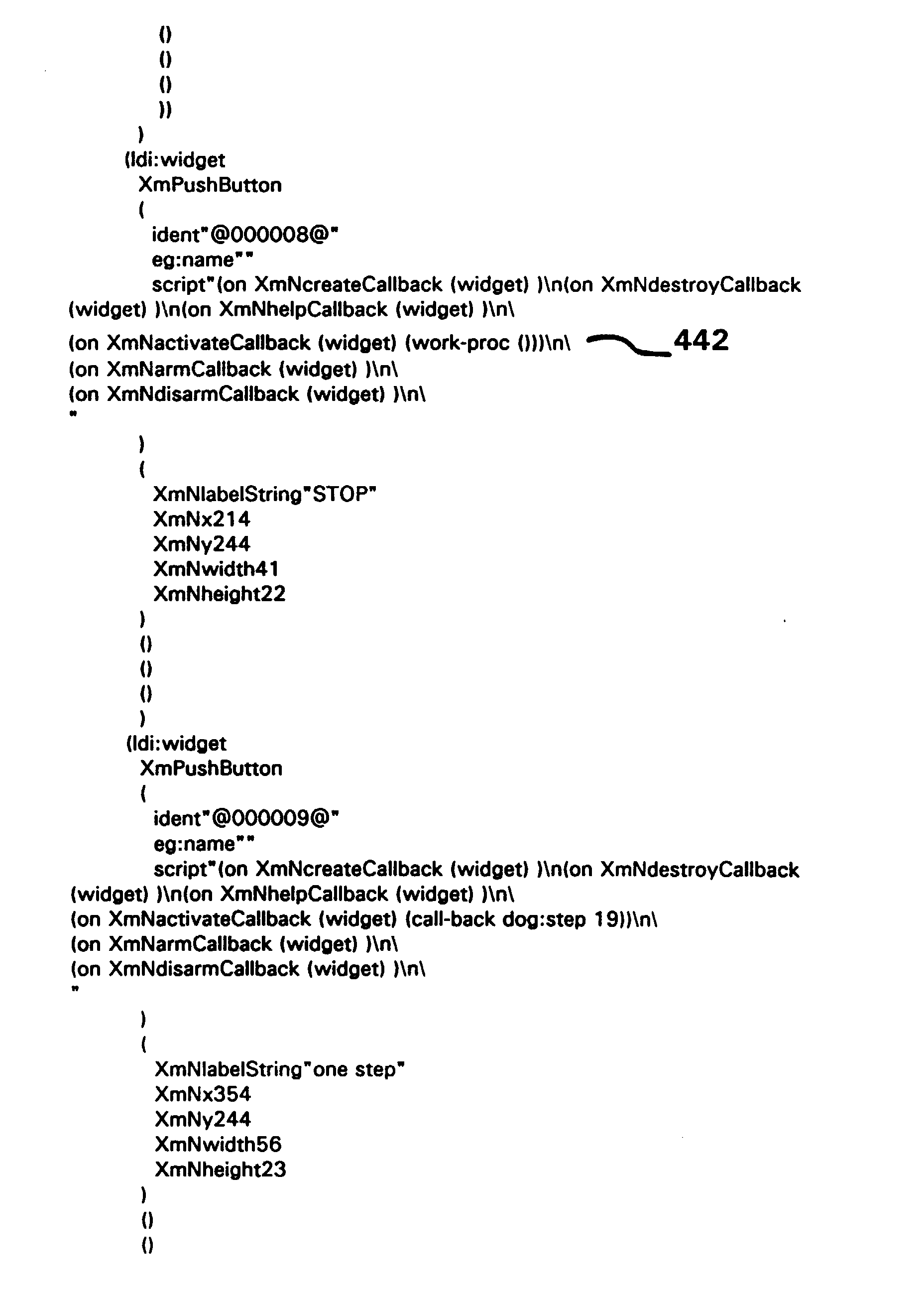

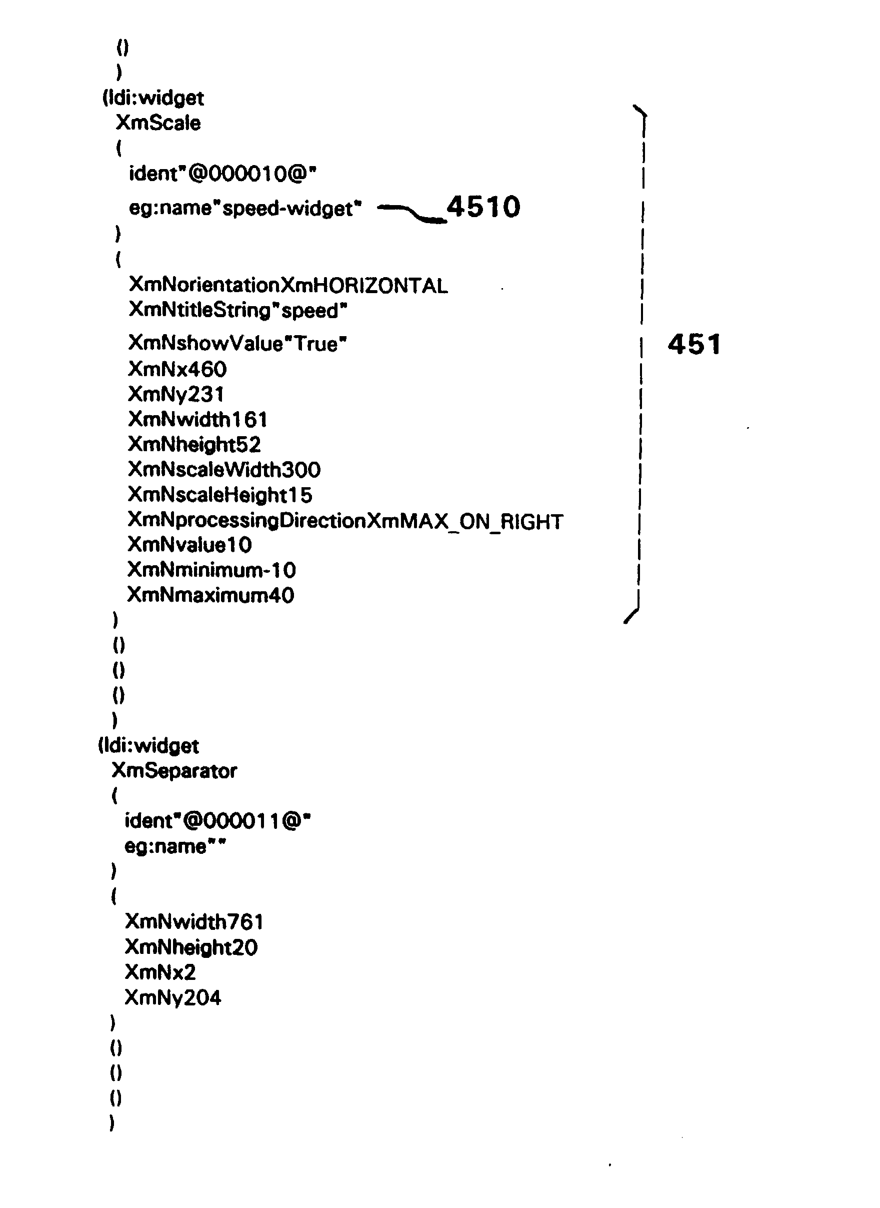

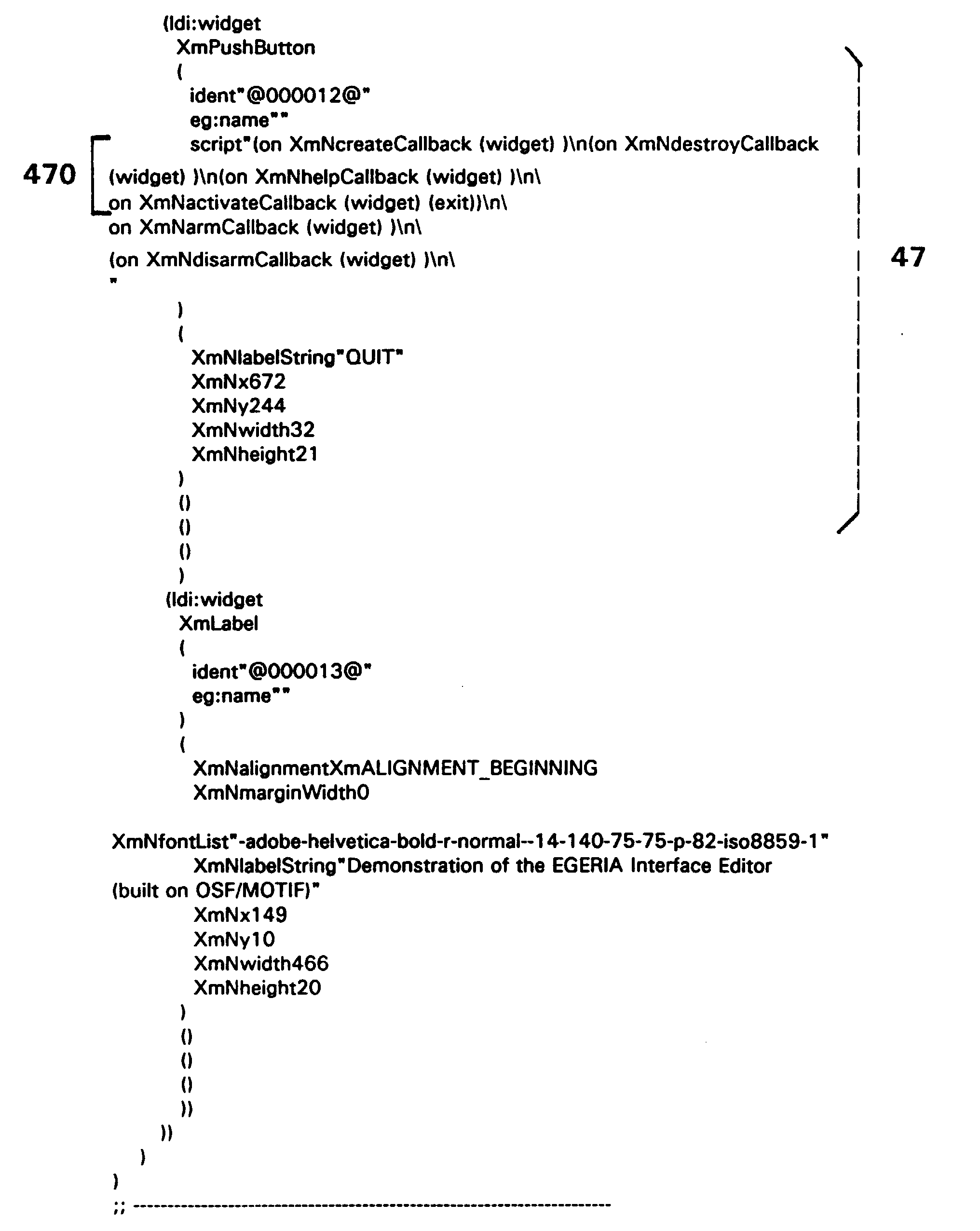

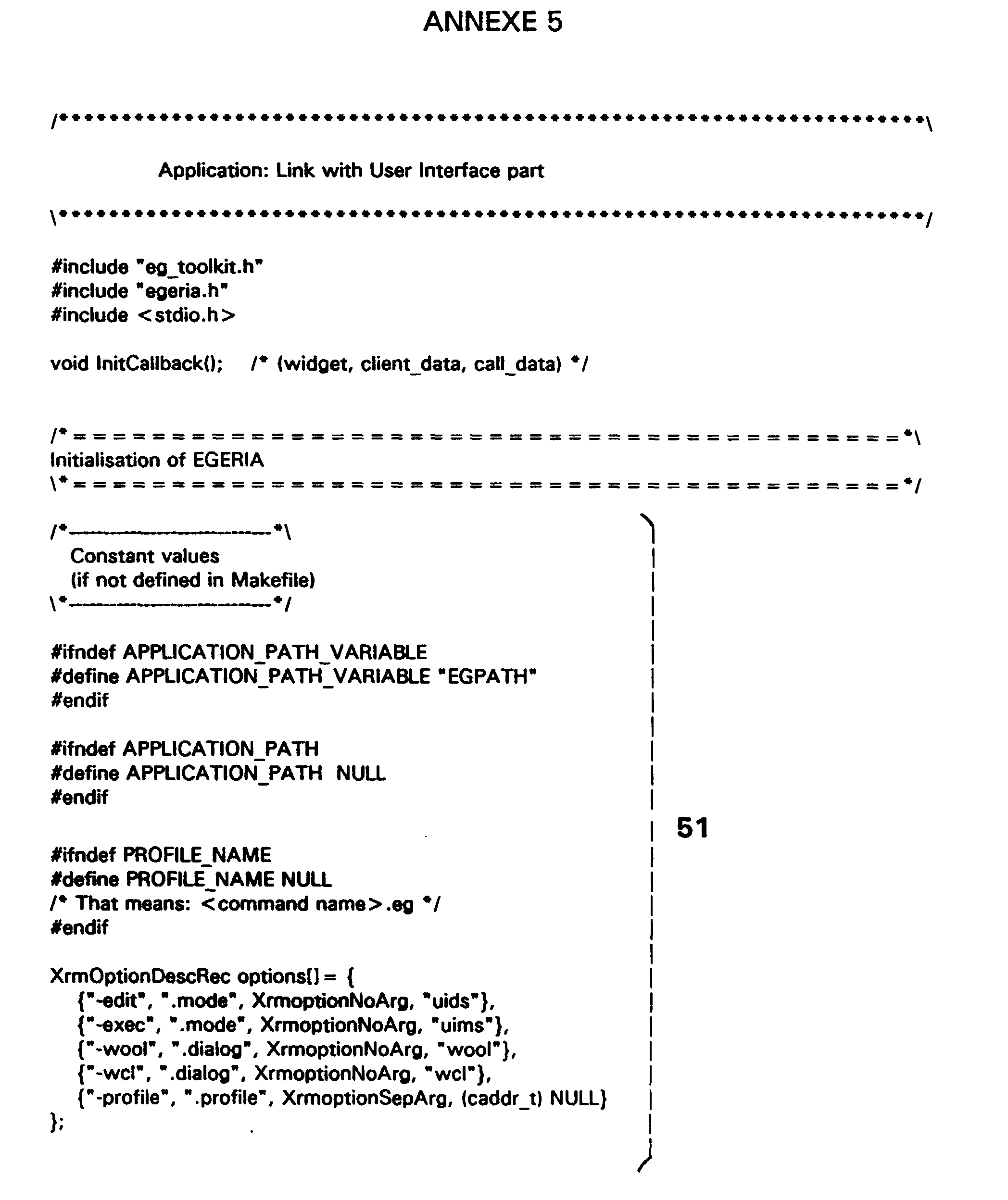

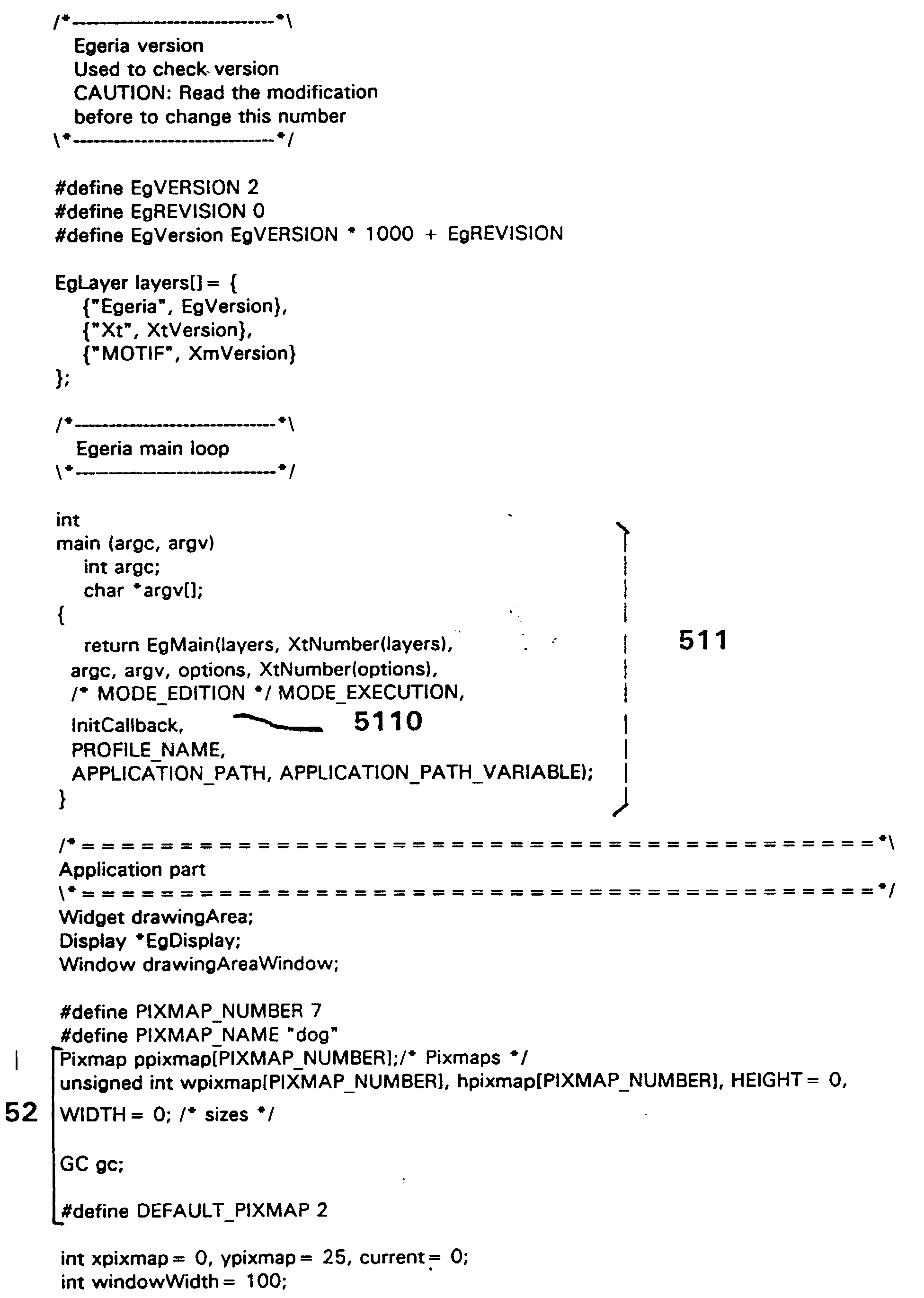

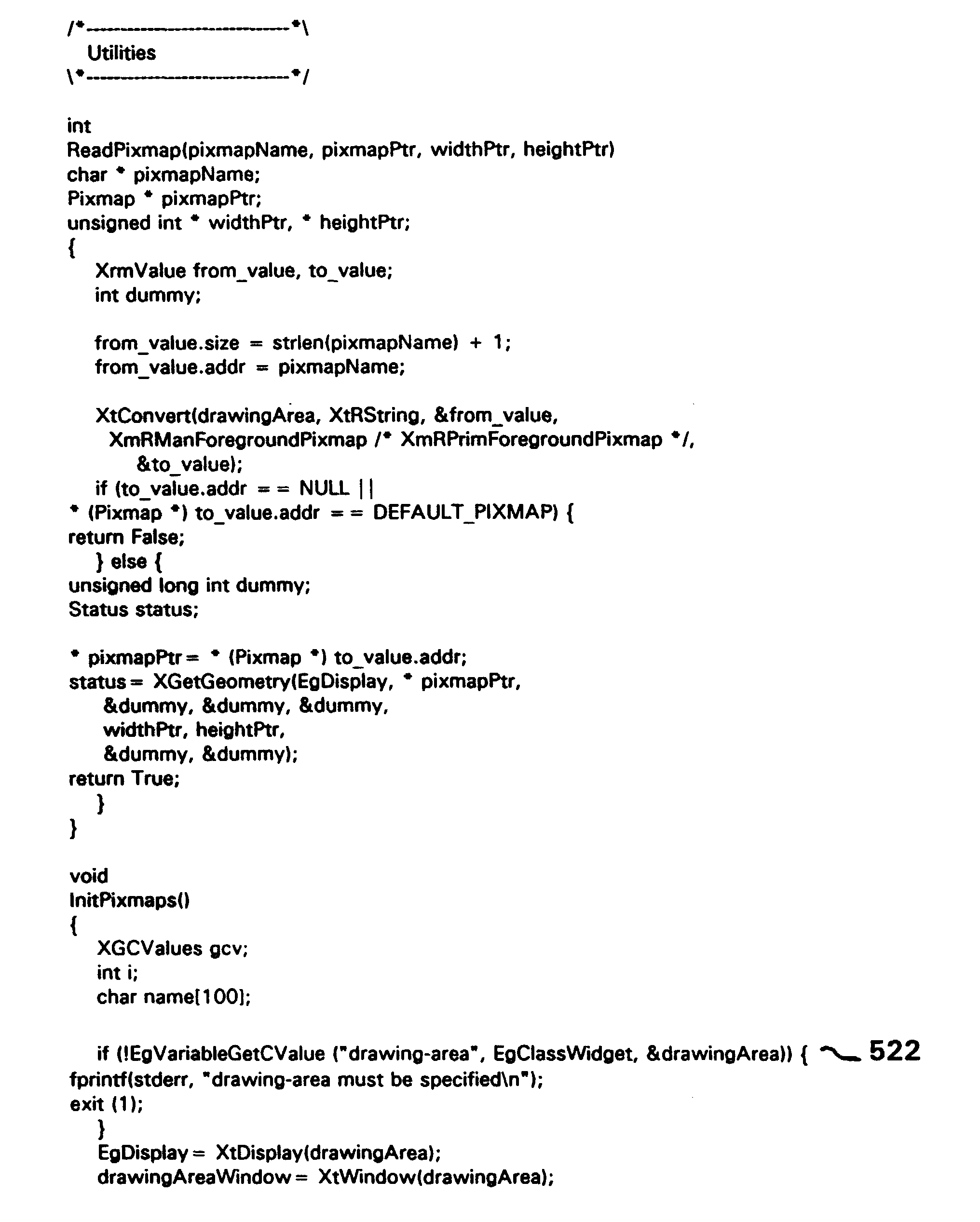

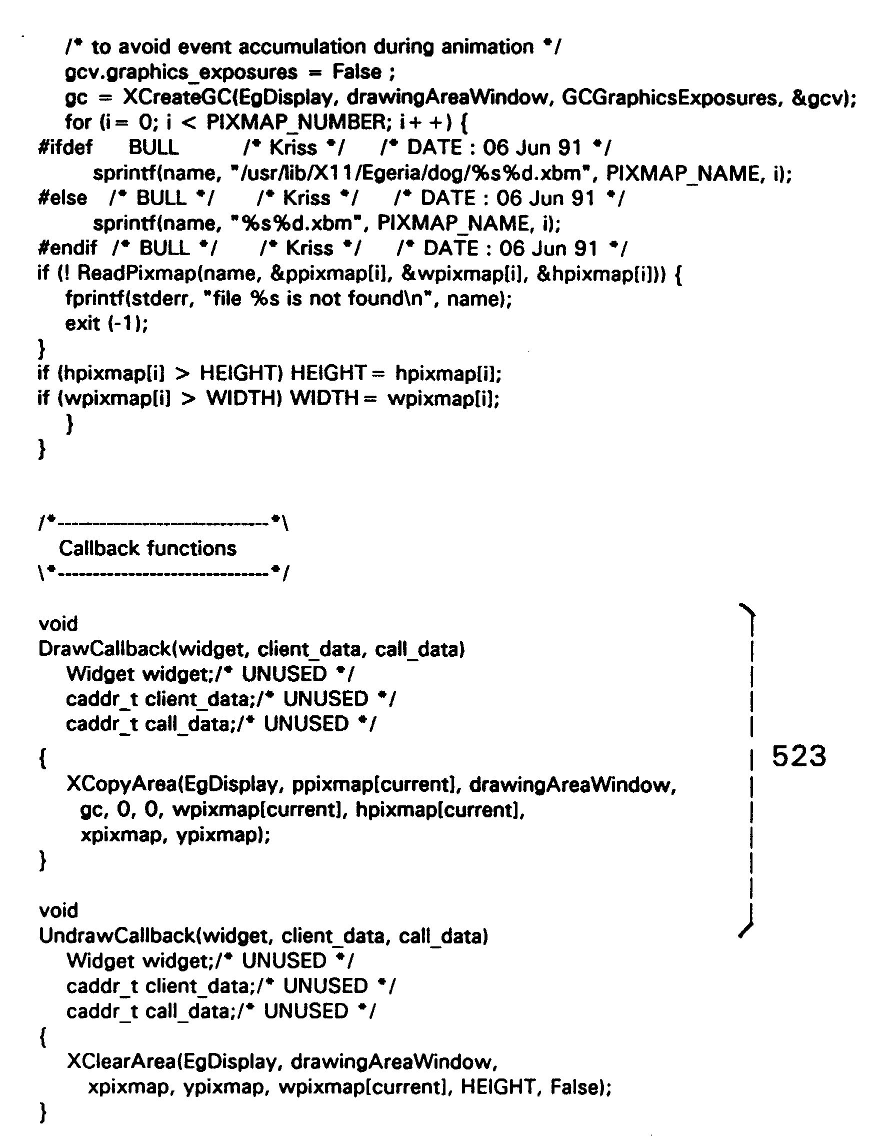

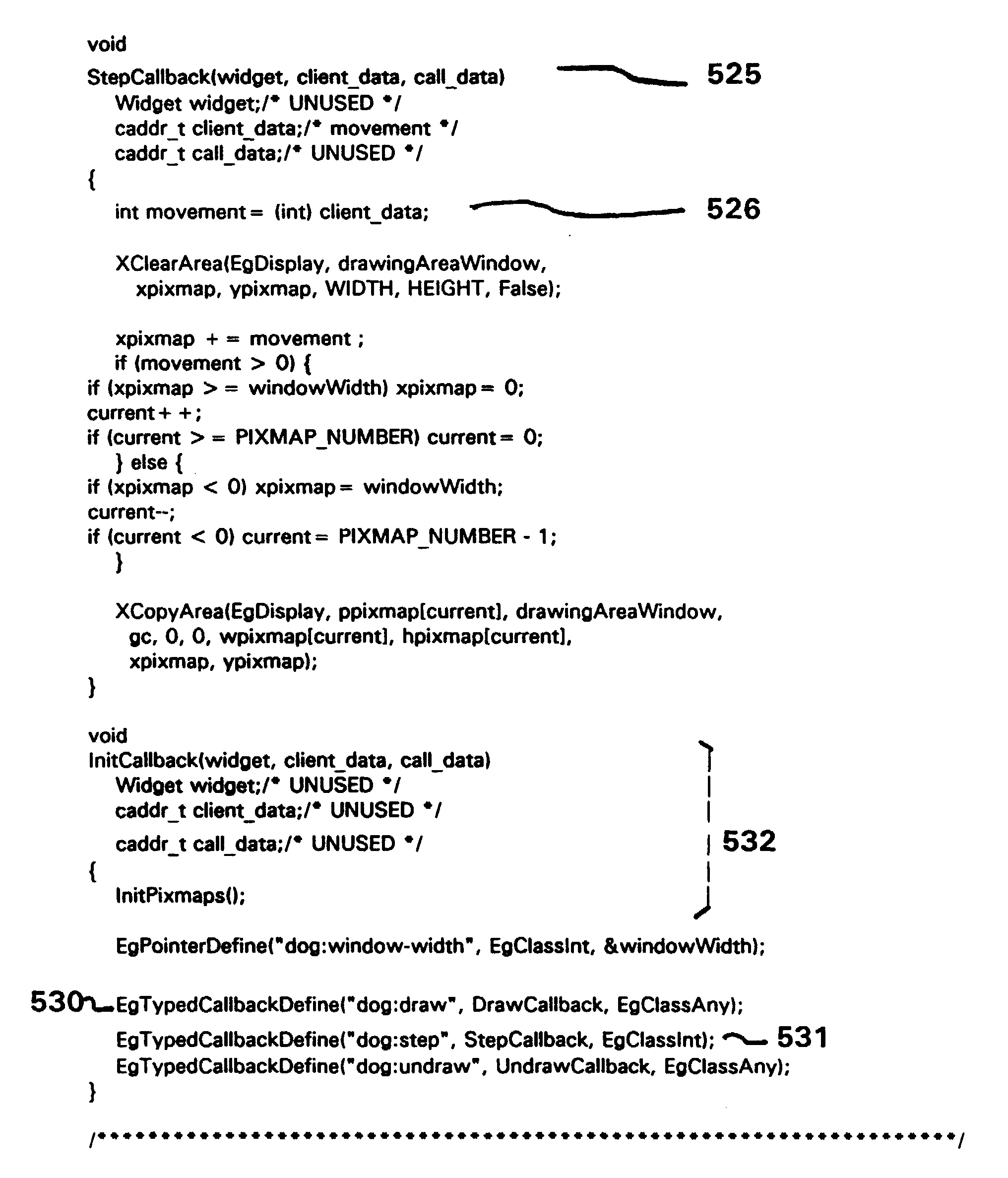

### ANNEXE 6

### 6.1 WOOL CORE PART

| **6.1.1 Syntax** | |
|---|---|
| **Function** | **Action** |
| **;** | [W1&2][CL 526] Wool comment |
| | [W1&2][CL 16] integer |
| | [W1&2][CL ≠27] symbol |
| **"..."** | [W1&2][CL ≠33] string notation |
| **(...)** | [W1&2] list notation |
| **'** | [W1&2][CL 115] prevent evaluation |
| **()** | [W1&2][CL 96] the nil value |
| **nil** | [W1&2][CL 96] the nil value |

| **6.1.2 Basic** | |
|---|---|
| **Function** | **Action** |
| **'** | [W1&2][CL 115] prevent evaluation |
| **quote** | [W1&2][CL 115] prevent evaluation |
| **()** | [W1&2][CL 96] the nil value |
| **nil** | [W1&2][CL 96] the nil value |
| **detsetf** | [W2][CL 138] define an assignation function for setf |
| **load** | [W1] load and execute a WOOL file |
| **load** | [W2][CL 657] load and execute a WOOL file |
| ***load-pathname*** | [W2] directory path used by load |
| **provide** | [W2][CL 277] manage file loading |
| **require** | [W2][CL 277] manage file loading |
| **setf** | [W2][CL 124] general assignation |
| **setq** | [W2][CL 122.121] variable assignement |
| **set** | [W2][CL 122.121] variable assignement |

| **6.1.3 Control** | |
|---|---|
| **function** | **Action** |
| **catch** | [W2][CL 187] non-local goto |
| **cond** | [W1&2][CL 158] conditional test |
| **dolist** | [W2][CL 169.395] iterate through a sequence (list or string) |
| **dotimes** | [E1][W2][CL 169] loop from zero to n - 1 |
| **do** | [E1][W2][CL 164] general loop |
| **end** | [W1] terminate execution |
| **error-catch** | [W1][?] trap errors occuring in expressions |
| **error-trigger** | [W1] trigger a WOOL error |
| **eval** | [W1&2] evaluate a WOOL expression |
| **every** | [E1] LISP traditional iterators |
| **exit** | [W1] non-local goto |
| **exit** | [W2] terminate execution |
| **for** | [W1] iterate through a list of values |
| **ifn** | [E1][old] conditional test |
| **if** | [W1&2] conditional test |
| **mapcan** | [E1] LISP traditional iterators |
| **mapcar** | [E1] LISP traditional iterators |
| **mapfor** | [W1] iterate through a list of values |
| **map** | [W2][CL 169.395] iterate through a sequence (list or string) |
| **progn** | [W1&2][CL 147] sequence of instructions |
| **some** | [E1] LISP traditional iterators |
| **tag** | [W1] non-local goto |
| **throw** | [W2][CL 187] non-local goto |
| **unless** | [E1][?] negative conditional test |
| **unwind-protect** | [W2][CL 188] ensure execution of code |
| **when** | [E1][?] positive conditionnal test |
| **while** | [W1][?] while loop |

| **6.1.4 Function** | |
|---|---|
| **Function** | **Action** |
| **'** | [W2] prevent evaluation with possible internal evaluations |
| **backquote** | [W2] prevent evaluation with possible internal evaluations |
| **defmacro** | [E1] define a WOOL macro |
| **defmacro** | [W2][CL 76.195] define a WOOL function |
| **defunq** | [W1] define a WOOL function |
| **defun** | [W1] define a WOOL function |
| **defun** | [W2][CL 76.195] define a WOOL function |
| **de** | [W1] define a WOOL function* |
| **df** | [W1] define a WOOL function |
| **dm** | [E1] define a WOOL macro |
| **flambda** | [W1] define a WOOL function |
| **lambdamacro** | [W2)[CL 76.195] define a WOOL function |
| **lambda** | [W1] define a WOOL function |
| **lambda** | [W2][CL 76.195] define a WOOL function |

| **6.1.5 Any** | |
|---|---|
| **Function** | **Action** |
| **/=** | [W2][CL≠293] test inequality of objects |
| **convert** | [E1] convert a value |
| **copy** | [E1][W2] copy a wool object |
| **eq** | [W1&2] test strict equality of any two objects |
| **equal** | [W1&2][CL 107] test equality of any objects |
| **object-plist** | [E2] return property-list associated with an object |
| **print** | [W1&2][CL≠577] print WOOL objects |
| **?** | [W1] print WOOL objects |
| ***print-readably*** | [W2][CL 557] affect the way objects are printed |
| **type-of** | [W1&2][CL 65] type of a WOOL object |
| **type-of** | [E1][CL 65] type of a WOOL object |
| **typep** | [W2][CL 67] Check type of an object |

| **6.1.6 Hash Table** | |
|---|---|
| **Function** | **Action** |
| **gethash** | [W2][CL 438] retrieves entry in an hash table |
| **make-hash-table** | [W2][CL 436] make an hash table |
| **maphash** | [W2][CL 438] apply function on each enties in hash table |
| **remhash** | [W2][CL 438] removes entry in hash table |

| **6.1.7 Input/Output** | |
|---|---|
| **Function** | **Action** |
| **close** | [W2][CL 505] close a stream |
| **error-output** | [E1] global streams |
| **file-open** | [E1] open a stream |
| **open** | [W2][CL 646] open a stream |
| **output** | [E1] global streams |
| **print** | [W1&2][CL≠577] print WOOL objects |
| **?** | [W1] print WOOL objects |
| **read-char** | [W2][CL 573.579] read or write a char |
| **read-line** | [W2][CL 572.579] read or write a line |
| **read** | [old] read a string from the current stream |
| **read** | [W2][CL 569] read an expression |
| ***standard-error*** | [W2][CL 497] global streams |
| ***standard-input*** | [W2][CL 497] global streams |
| ***standard-output*** | [W2][CL 497] global steams |
| **stderr** | [E1][W2] initial global streams |
| **stdin** | [E1][W2] initial global steams |
| **stdout** | [E1][W2] initial global streams |
| **write-char** | [W2][CL 573.579] read or write a char |
| **write-line** | [W2][CL 572.579] read or write a line |

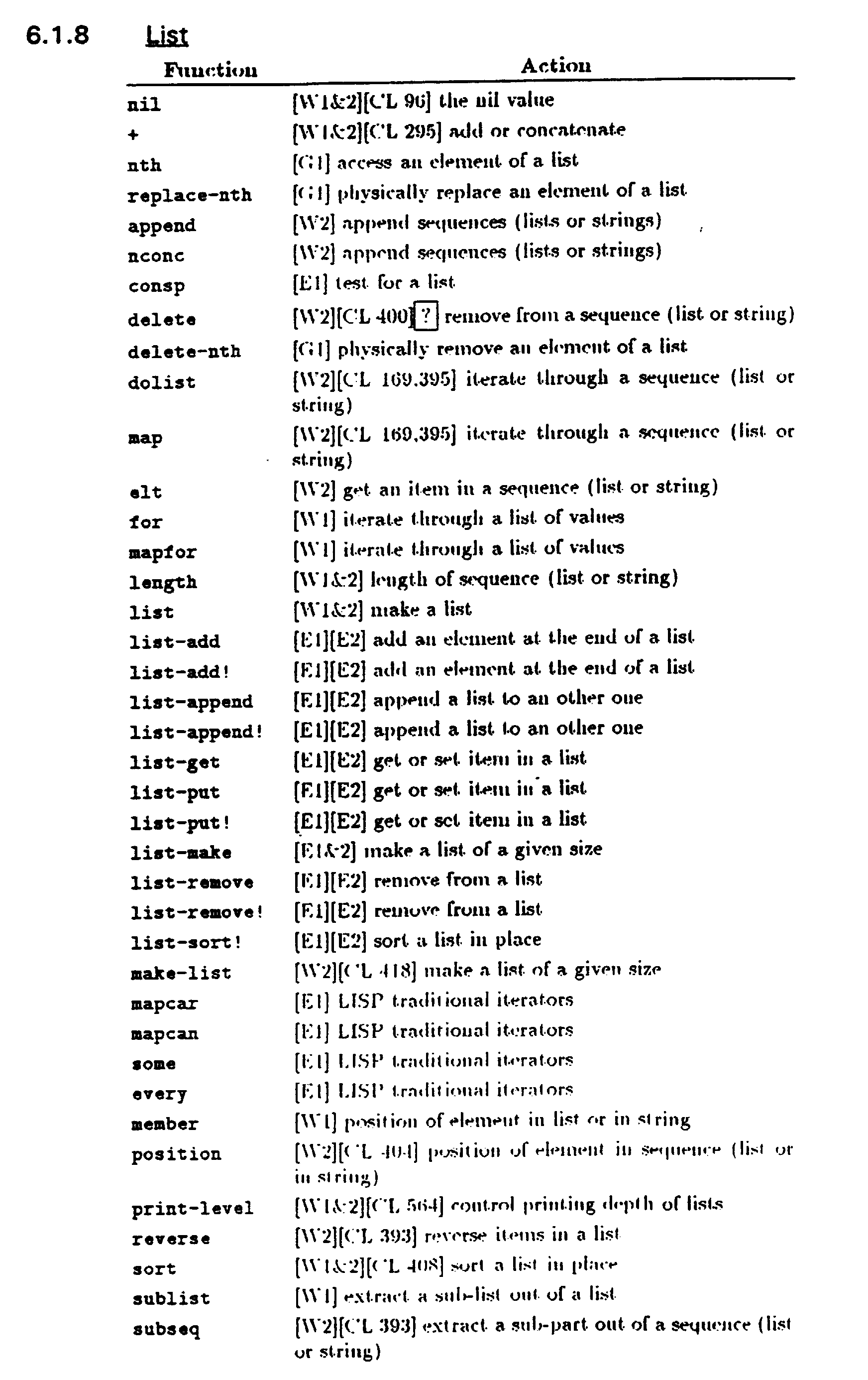

| **6.1.9 Logical** | |
|---|---|
| **Function** | **Action** |
| **and** | [W1&2] logical AND of expressions |
| **not** | [W1&2][CL 110] logical negation |
| **null** | [E1] logical negation |
| **or** | [W1&2][CL 110] logical OR of expressions |
| **t** | [W1&2][CL 96] the logical "true" value |

| **6.1.10 Number** | |
|---|---|
| **Function** | **Action** |
| **mod** | [W2][CL 353] modulo |
| ***** | [W1&2][CL 296] arithmetic operators |
| **/** | [W1&2][CL 296] arithmetic operators |
| **+** | [W1&2][CL 295] add or concatenate |
| **-** | [W1&2][CL 295] arithmetic difference |
| **<** | [W1&2][CL 293] test for strict inferiority |
| **<=** | [E1][W2][CL 293] test for inferiority |
| **>** | [W1&2][CL 293] test for strict superiority |
| **>=** | [E1][W2][CL 293] test for superiority |
| **atoi** | [W1] ascii string to integer conversion |
| **compare** | [W1&2] ordering comparison |
| **itoa** | [W1] integer to ascii string conversion |
| **logand** | [E1][W2] bitwise operators |
| **logior** | [E1][W2] bitwise operators |
| **logxor** | [E1][W2] bitwise operators |
| **lognot** | [E1][W2] bitwise operators |
| **min** | [E1][W2][CL 294] give the min or max of a list of numbers or strings |
| **wax** | [E1][W2][CL 294] give the min or max of a list of numbers or strings |
| **numberp** | [E1] test if it is a number |

| **6.1.11 Object** | |
|---|---|
| **Function** | **Action** |
| **class-name** | [W2][CL 821] returns name of a class |
| **class-of** | [W2][CL 822] returns class of an object |
| **defclass** | [W2][CL 822] define a class |
| **defmethod** | [W2][CL 838] define a method |
| **make-instance** | [W2][CL 848] make an instance of a given class |
| **print-object** | [W2][CL 850] method |
| **slot-value** | [W2][CL 857] get slot value of an object |

| **6.1,12 Package** | |
|---|---|
| **Function** | **Action** |
| **boundp** | [W1&2][CL 120] test if an symbol has already been defined |
| **defvar** | [W2][CL 80] defines variable or constant |
| **defconstant** | [W2][CL 86] defines variable or constant |
| **defun** | [W2][CL 76.195] define a WOOL function |
| **defmacro** | [W2][CL 76.195] define a WOOL function |
| **find-package** | [W2][CL 264] find package from its name |
| **intern** | [E1] make an symbol from a string |
| **intern** | [W2][CL 266] make an symbol from a string |
| **make-package** | [W2][CL 262] make a package |
| ***package*** | [W2][CL 262] current package |
| **use-package** | [W2][CL 269] indicates packages used |

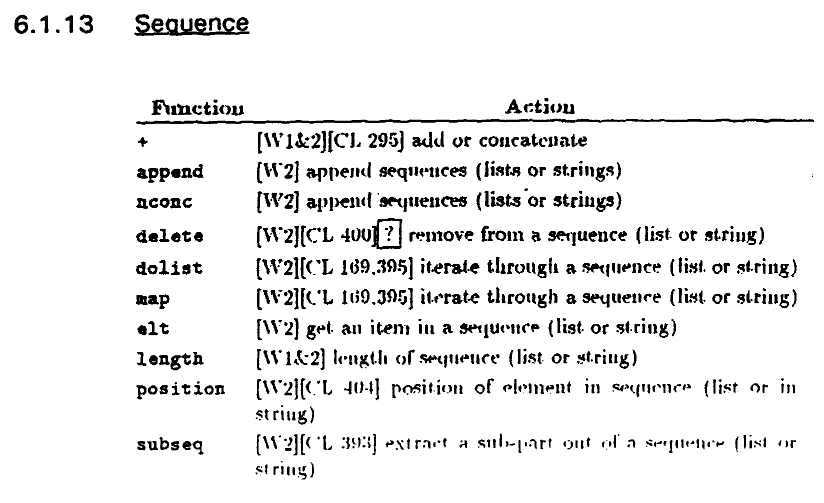

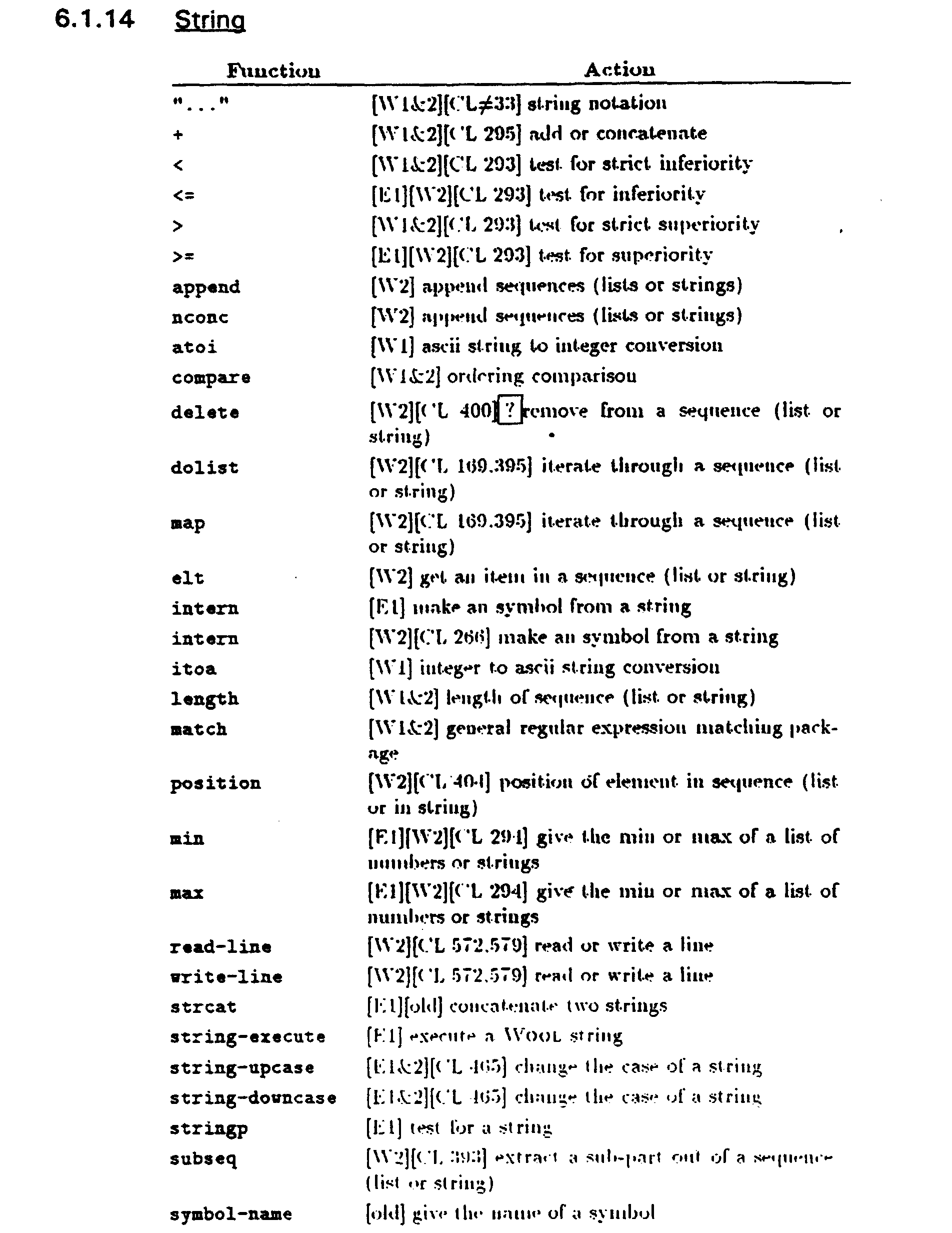

| **6.1.15 Symbol** | |
|---|---|
| **Function** | **Action** |
| **atom** | [G1] make an dsymbolatom |
| **atom** | [E1] test if it is an symbol |
| **boundp** | [W1&2][CL 120] test if an symbol has already been defined |
| **gensym** | [E1][E2] generate a symbol |
| **intern** | [E1] make an symbol from a string |
| **intern** | [W2][CL 266] make an symbol from a string |
| **symbol-name** | [old] give the name of a symbol |
| **symbol-plist** | [W2][CL 241] return property-list associated with a symbol |
| **unbind** | [W1] undefine a symbol |
| **makunbound** | [W2][CL 120] undefine a symbol |

| **6.1.16 Variable and Constant** | |
|---|---|
| **Function** | **Action** |
| **defvar** | [W2][CL 86] defines variable or constant |
| **defconstant** | [W2][CL 86] defines variable or constant |
| **let** | [W2] local variable declaration |
| **let*** | [E1][W2] local variable declaration |
| **set** | [W2][CL 122.121] variable assignement |
| **setq** | [W2][CL 122.121] variable assignement |
| **set** | [W1] variable assignement |
| **setq** | [W1] variable assignement |
| **:** | [W1] variable assignement |
| **with** | [W1] local variable declaration |
| **with-eval** | [W1] local variable declaration |

| **6.1.17 Miscelaneous** | |
|---|---|
| **Function** | **Action** |
| **context-save** | [W1] context management |
| **context-restore** | [W1] context management |
| **gensym** | [E1][E2] generate a symbol |
| **random** | [E1][W2][CL 365] generate a random number |

| **6.1.18 System** | |
|---|---|
| **Function** | **Action** |
| **!** | [E1] execute a shell command |
| **!** | [W2] execute a shell command |
| **system** | [E1] execute a shell command |
| **system** | [W2] execute a shell command |
| **!!** | [W2] execute a shell command |
| **getenv** | [W1&2] get the value of a shell variable |
| **get-internal-run-time** | [W2][CL 705] get running time |
| **time-elapsed** | [E1] get running time |
| **elapsed-time** | [G1] get running time |
| **popen** | [E1] open a pipe stream with a forked shell |

| **6.1.19 Internal** | |
|---|---|
| **Function** | **Action** |
| **hack** | [W2] raw access to WOOL internal structures |
| **hack** | [W1] raw access to WOOL internal structures |
| **hashinfo** | [W1&2] statistics on symbol storage |
| **meminfo** | [W1&2] print memory used |
| **oblist** | [W1] print all defined objects |
| **stack-print-level** | [W1&2] number of stack frames printed on error |
| **trace-level** | [W1&2] trace calls to a WOOL function |
| **trace-all** | [W1&2] trace calls to a WOOL function |
| **trace** | [W1&2] trace and untrace a function |
| **untrace** | [W1&2] trace and untrace a function |

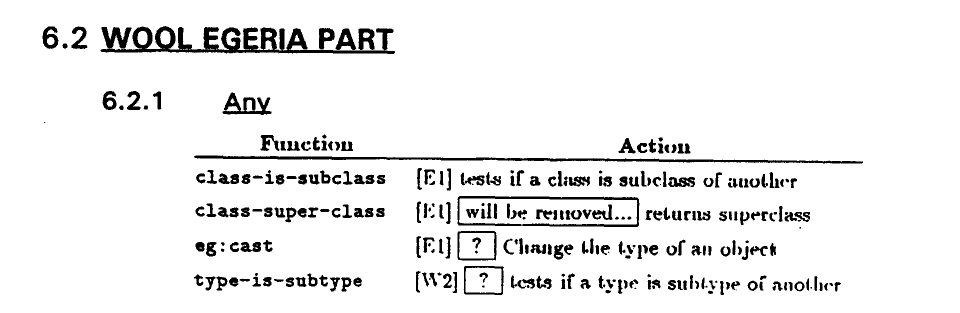

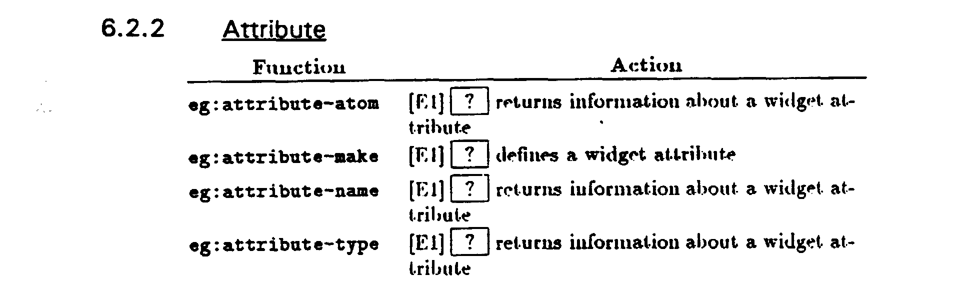

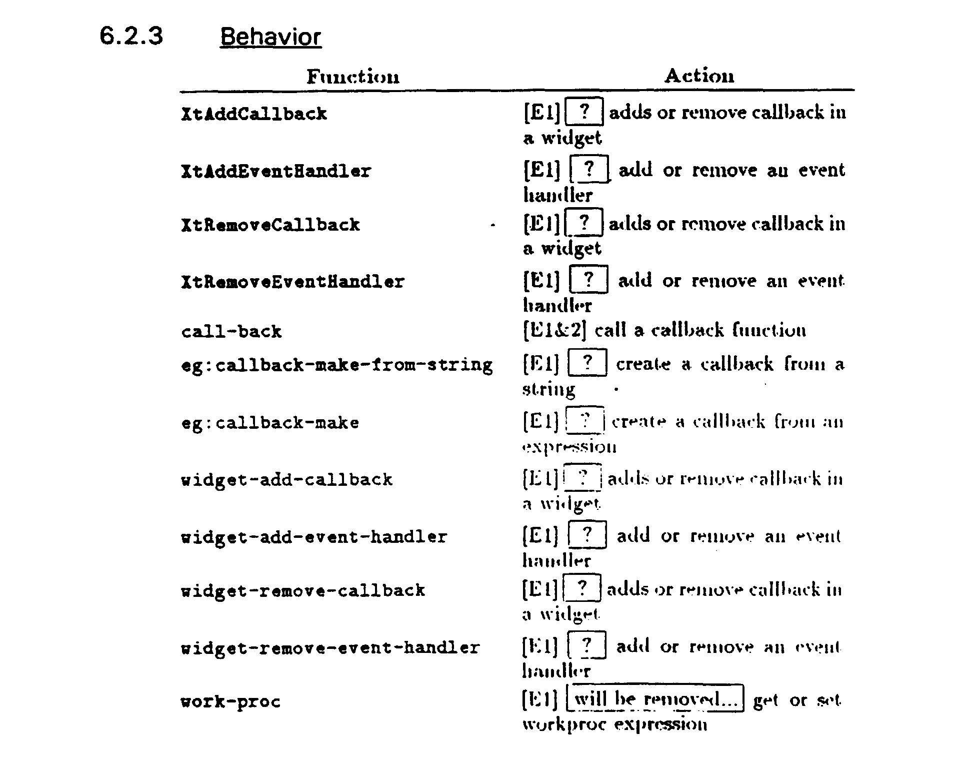

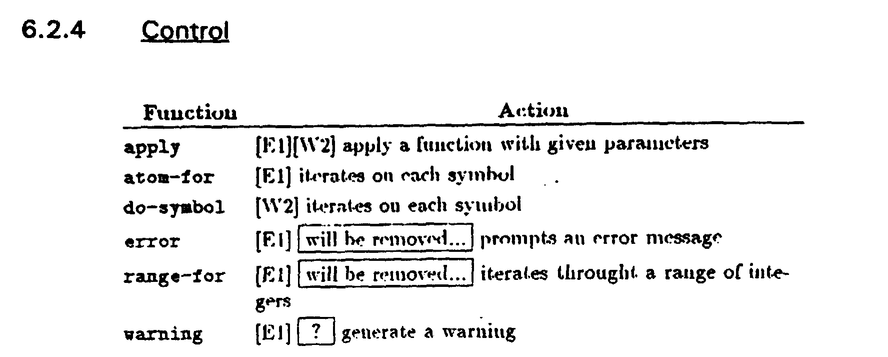

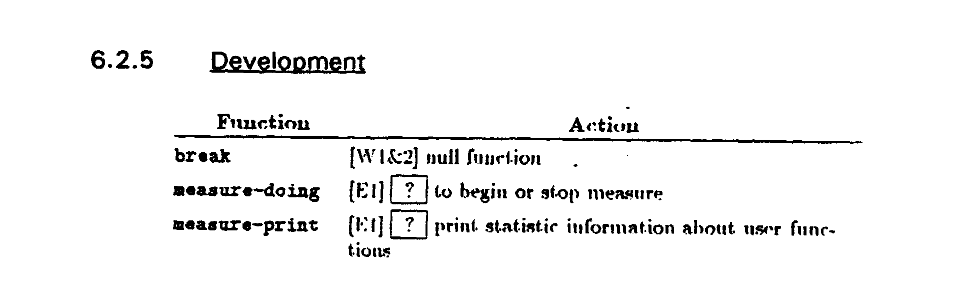

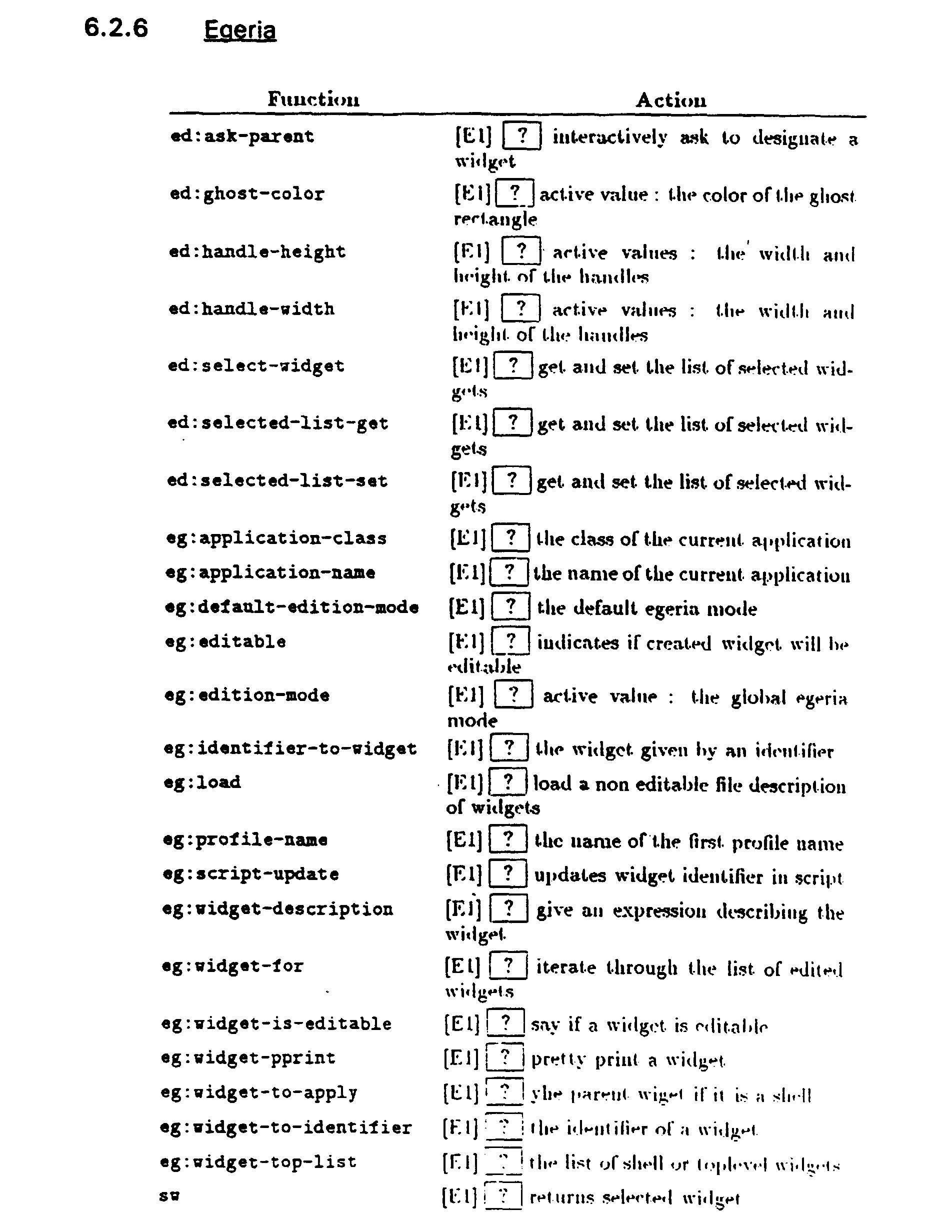

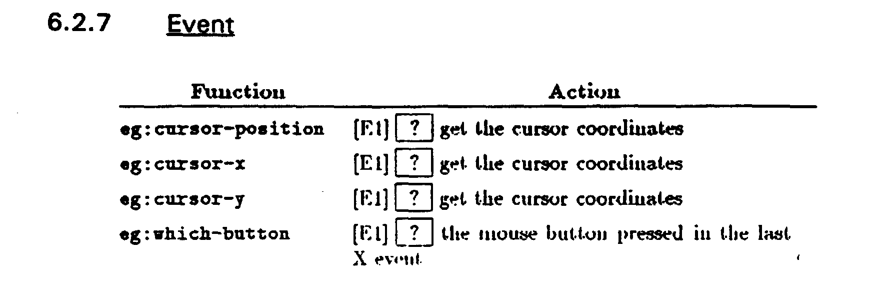

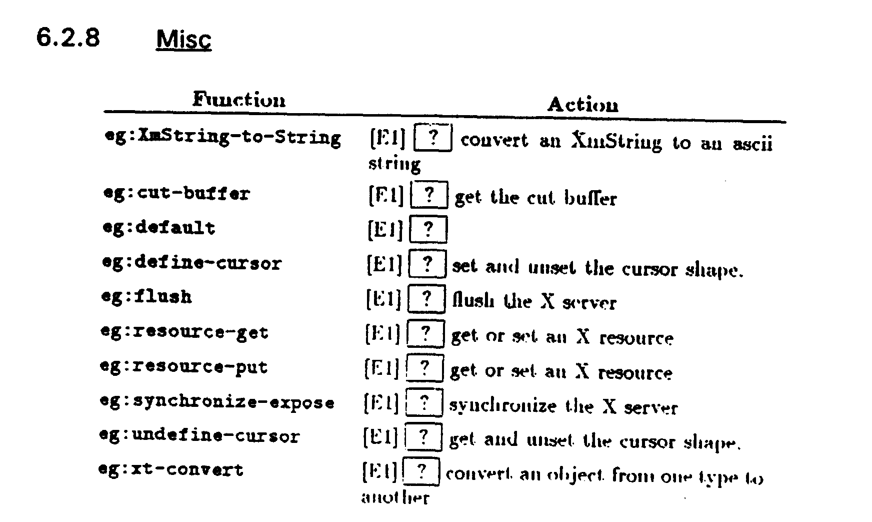

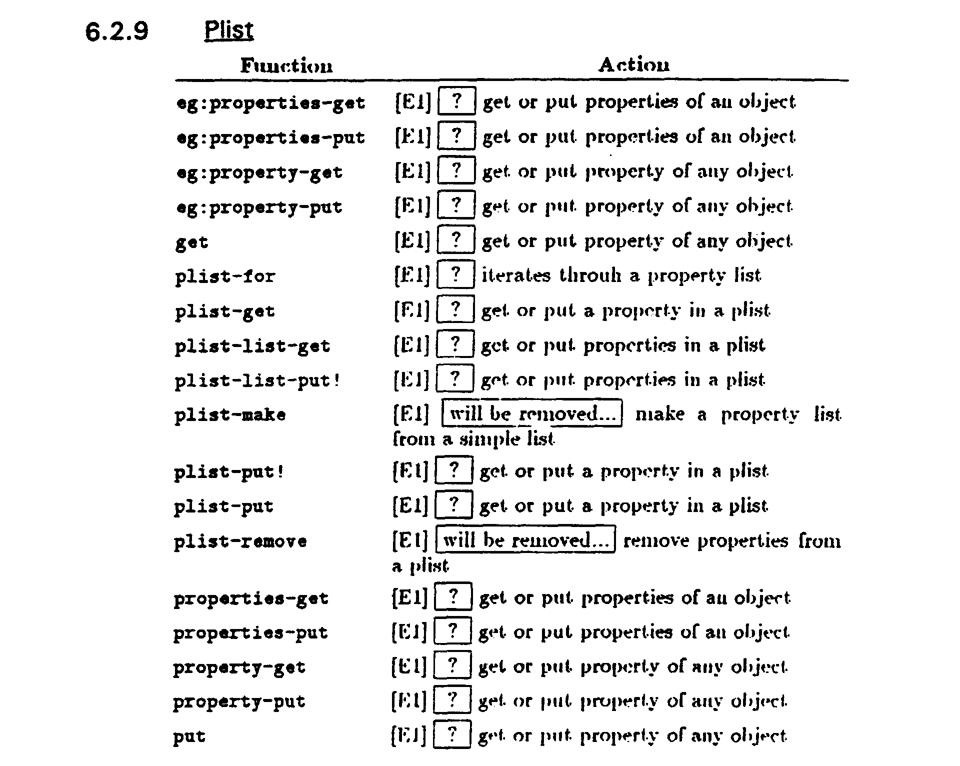

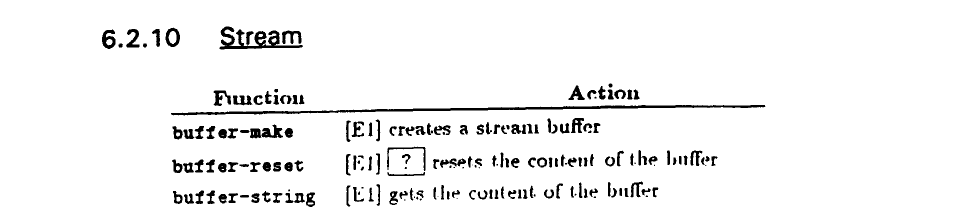

| **6.2.11 Symbol** | |
|---|---|
| **Function** | **Action** |
| **NONE** | [E1&2] designates no value |
| **atom-for** | [E1] iterates on each symbol |
| **do-symbol** | [W2] iterates on each symbol |

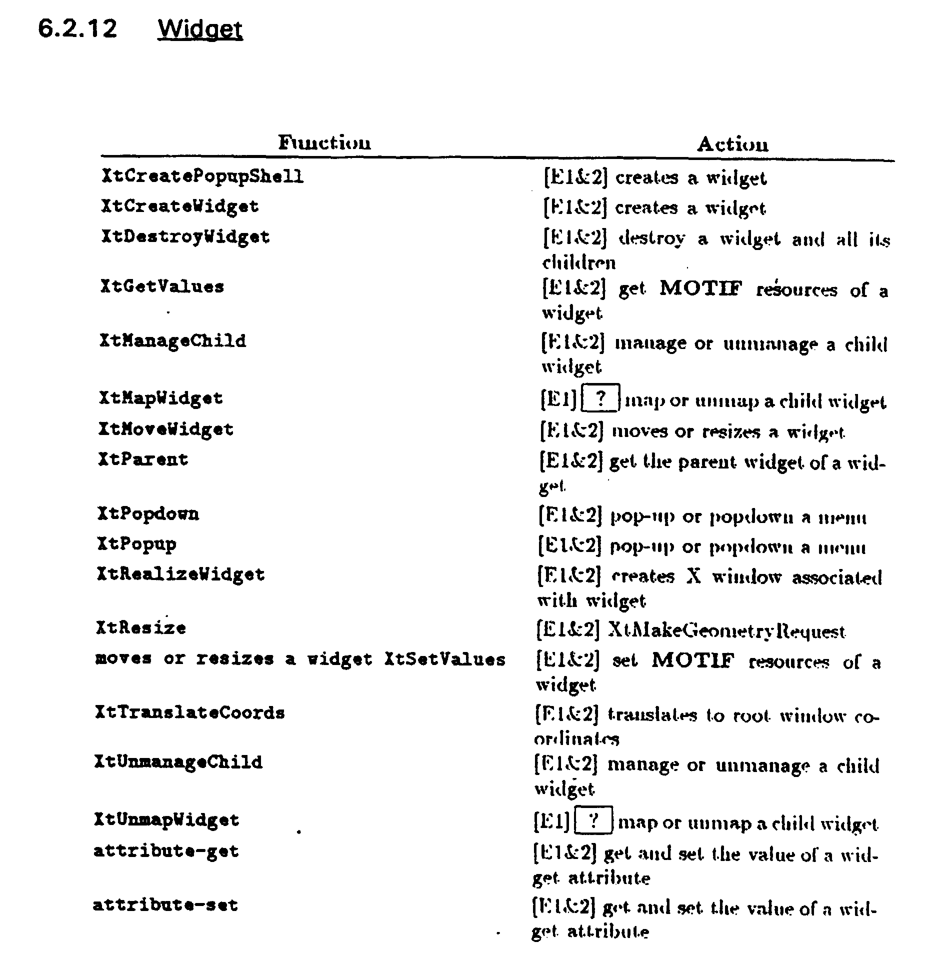

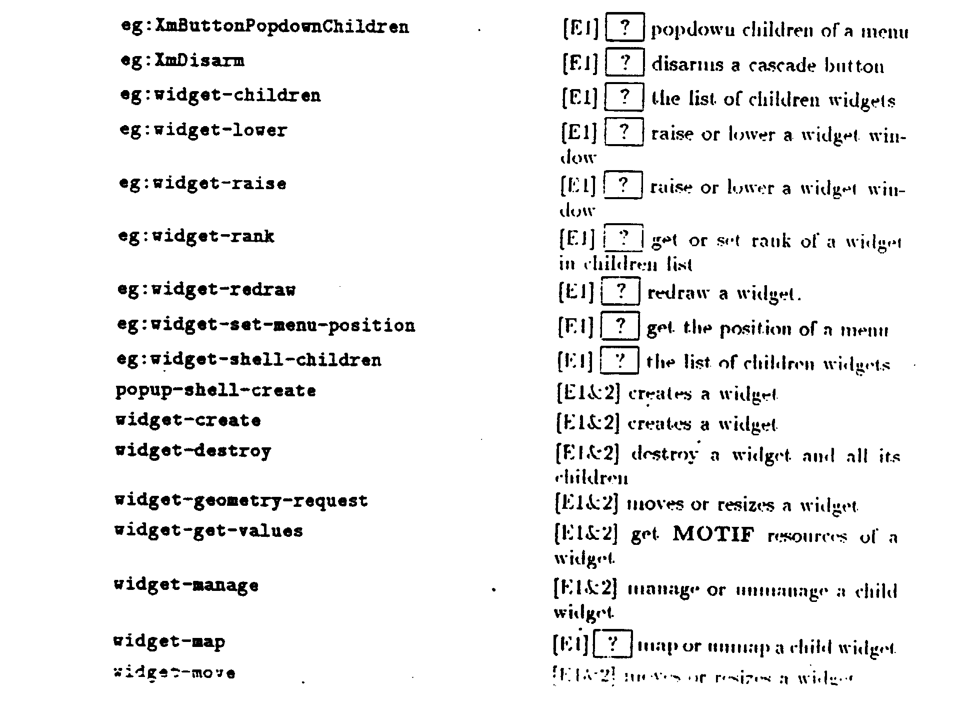

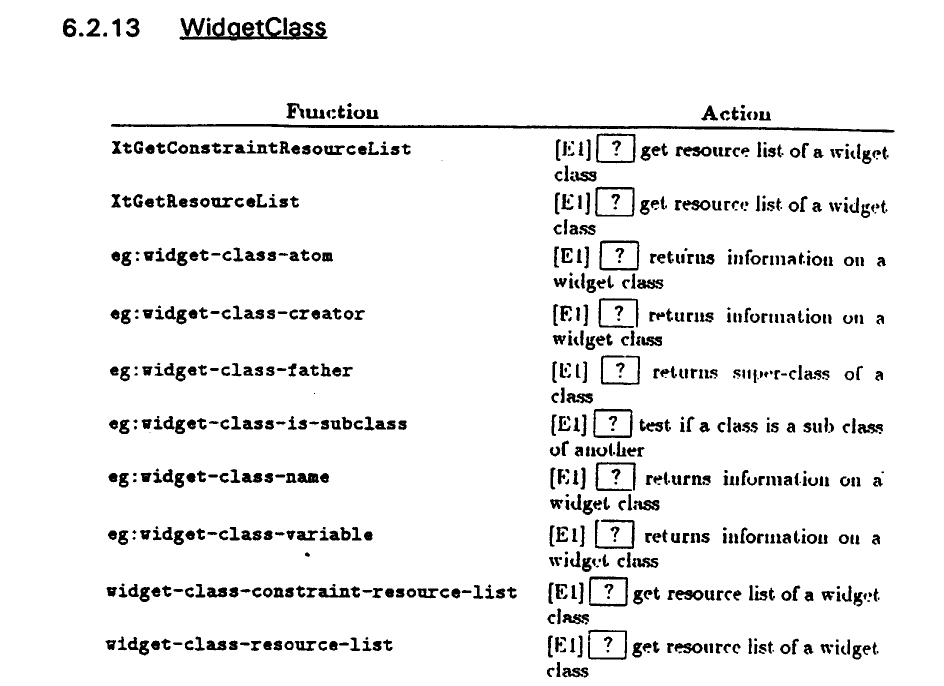

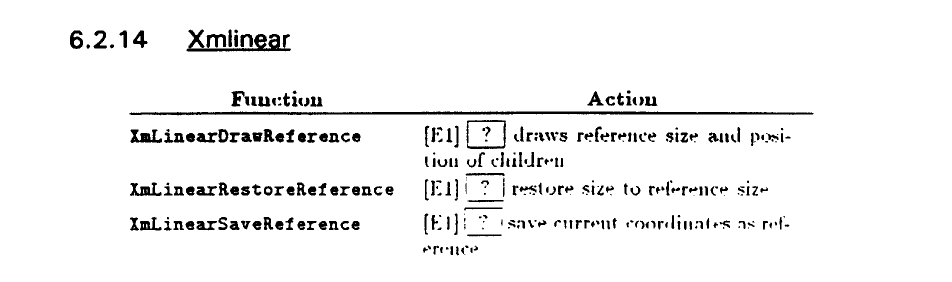

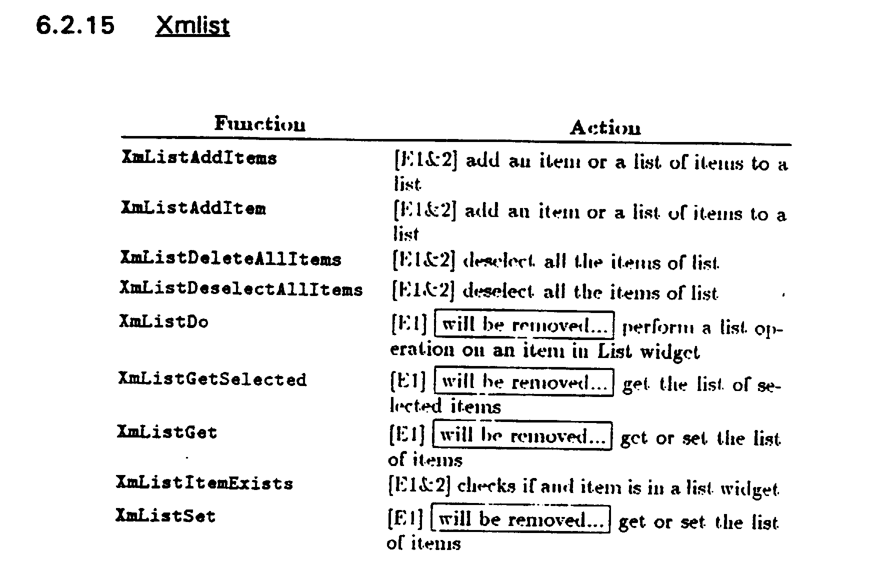

| **6.2.16 Xmtext** | |
|---|---|
| **Function** | **Action** |
| **XmTextGetString** | [E1&2] get the text in a text widget |
| **XmTextReplace** | [E1&2] replace the text in a text widget |
| **XmTextSetSelection** | [E1&2] selects a string in a text widget |
| **XmTextSetString** | [E1&2] set the text in a text widget |

### 6.3 C Part

| **6.3.1 High level** | |
|---|---|
| **Function** | **Action** |
| EgCallbackDefine | [E1&2] define a Callback |
| EgMain | [E1&2] start EGERIA run-time |
| EgTypedCallbackDefine | [E1&2] define a Callback |
| EgVariableGetCValue | [E1&2] set or get a WOOL variable |
| EgVariableGetCValue | [E1&2] set or get a WOOL variable |

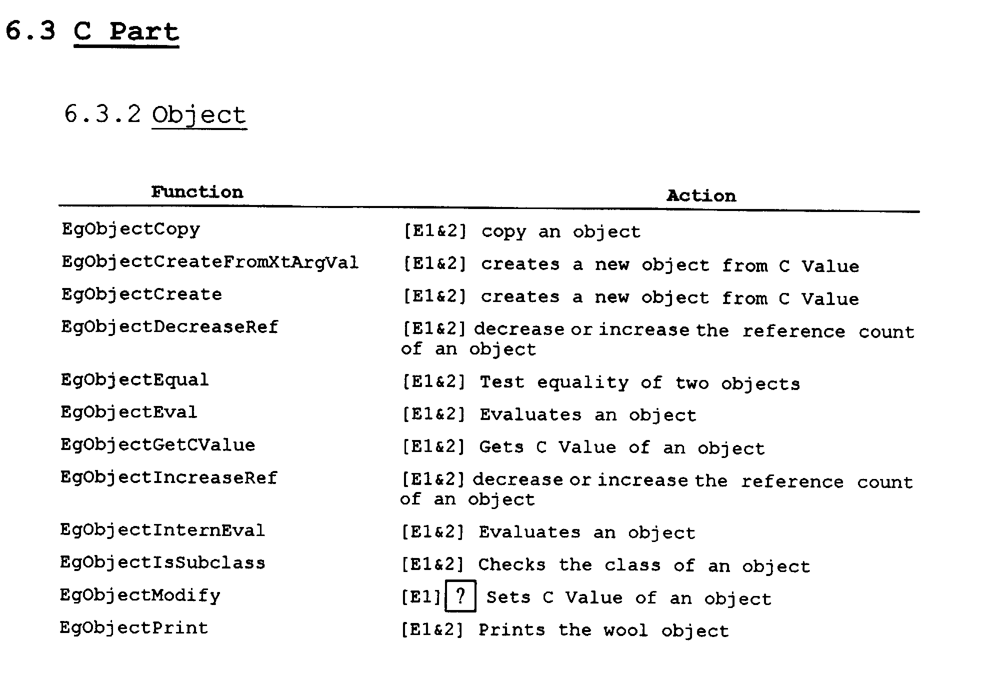

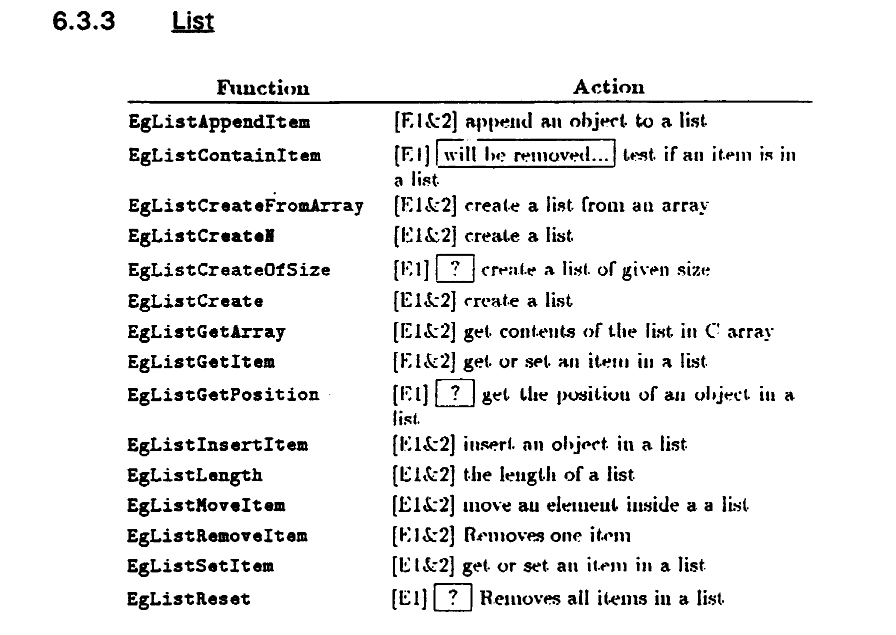

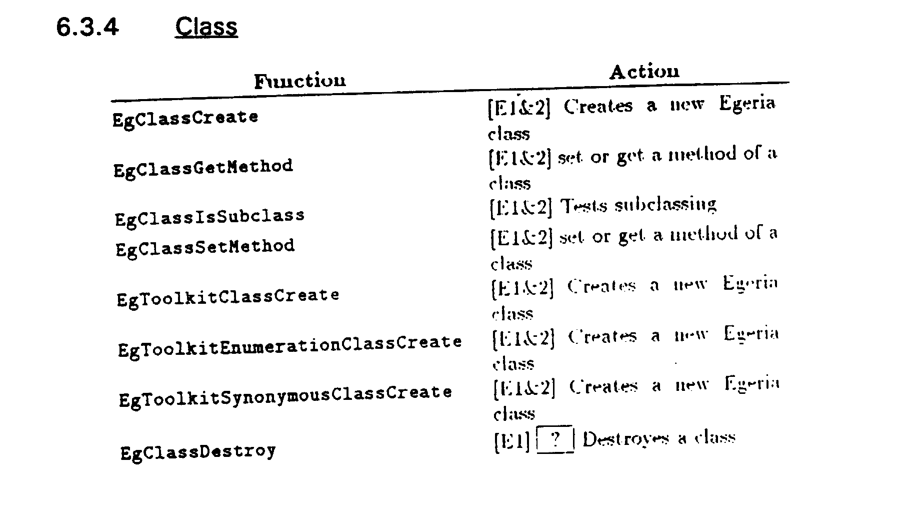

| **6.3.5 Misc** |
|---|
| **Function** |
| **EgActiveDefine** |
| **EgArgumentMustBe** |
| **EgConvenientWidgetClassCreate** |
| **EgError** |
| **EgFunctionDefine** |
| **EgMalloc** |
| **EgReallocEgCalloc[E1&2] Memory management functions EgNormalWidgetClassCreate** |
| **EgPointerDefine** |
| **EgPrintf** |
| **EgPuts** |
| **EgVariableGetObject** |
| **EgVariableSetObject** |
| **EgWarning** |
| **EgPutChar** |

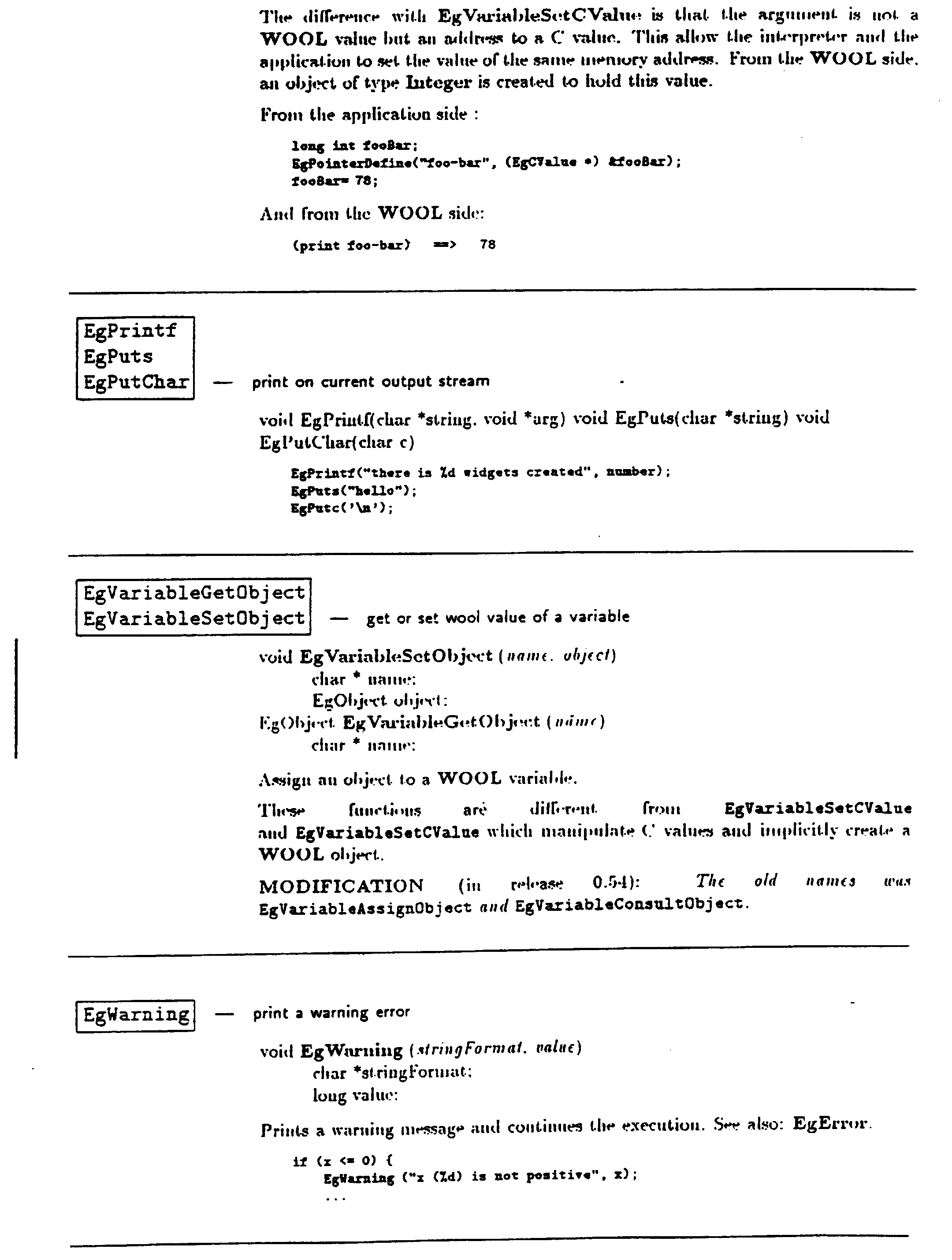

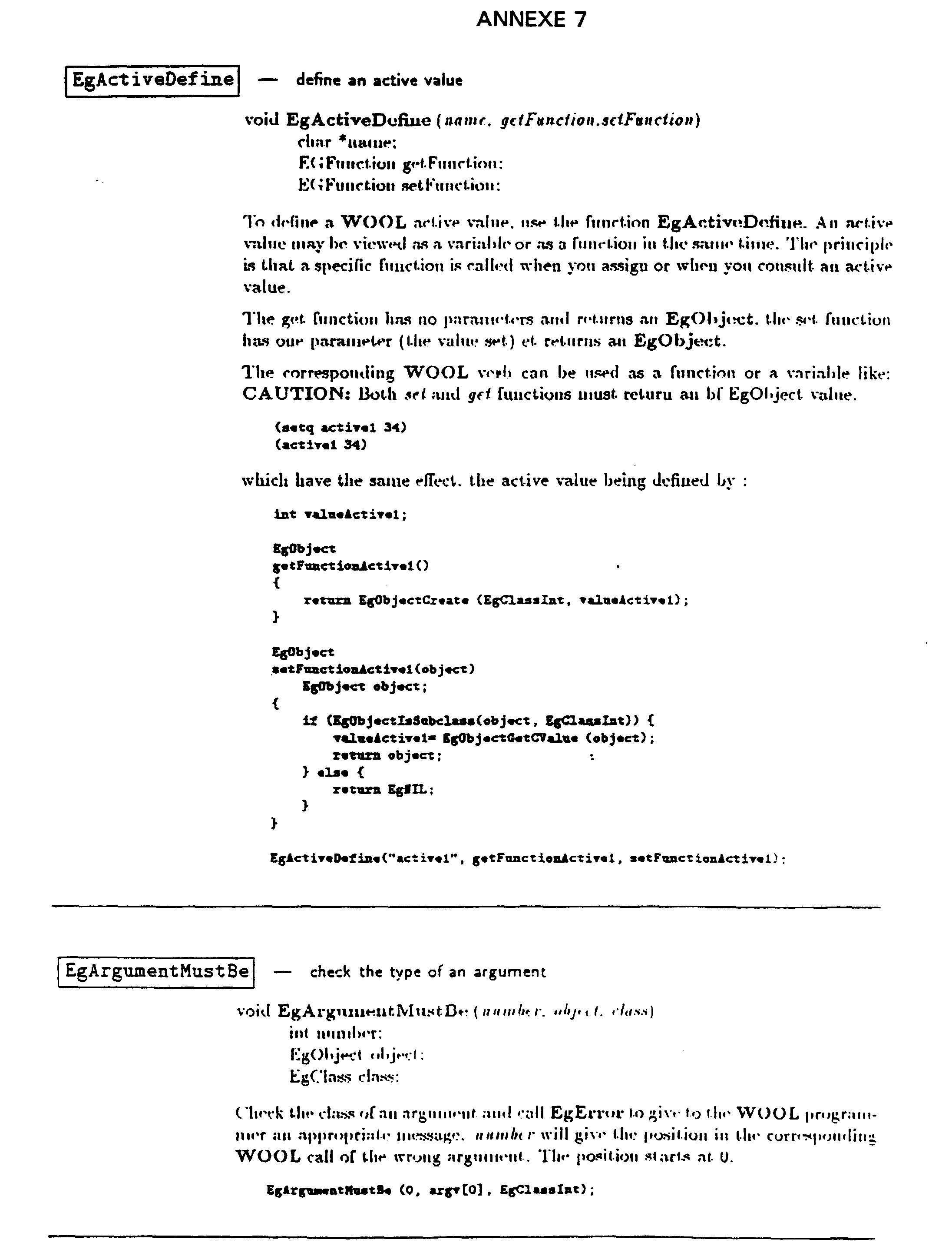

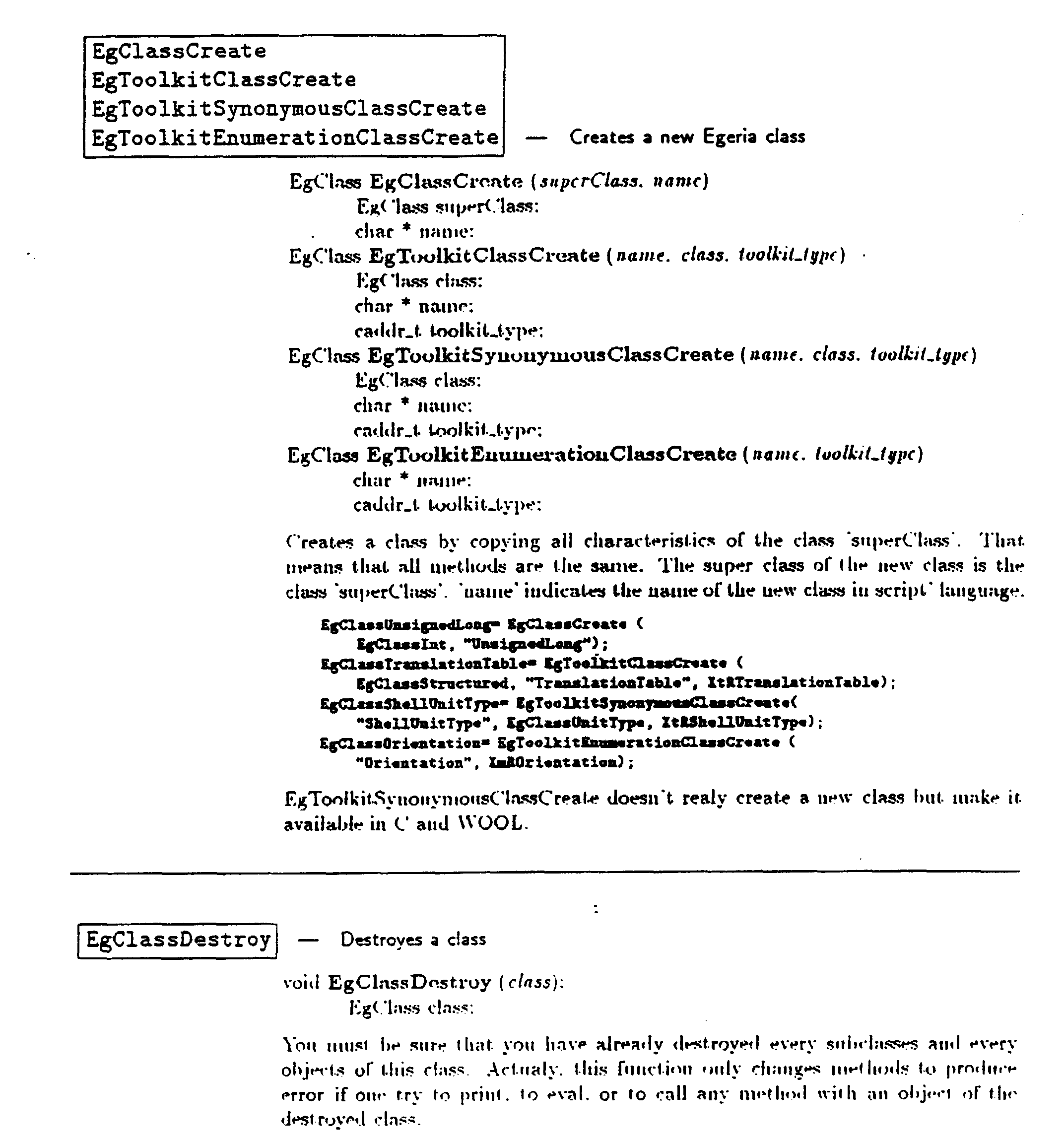

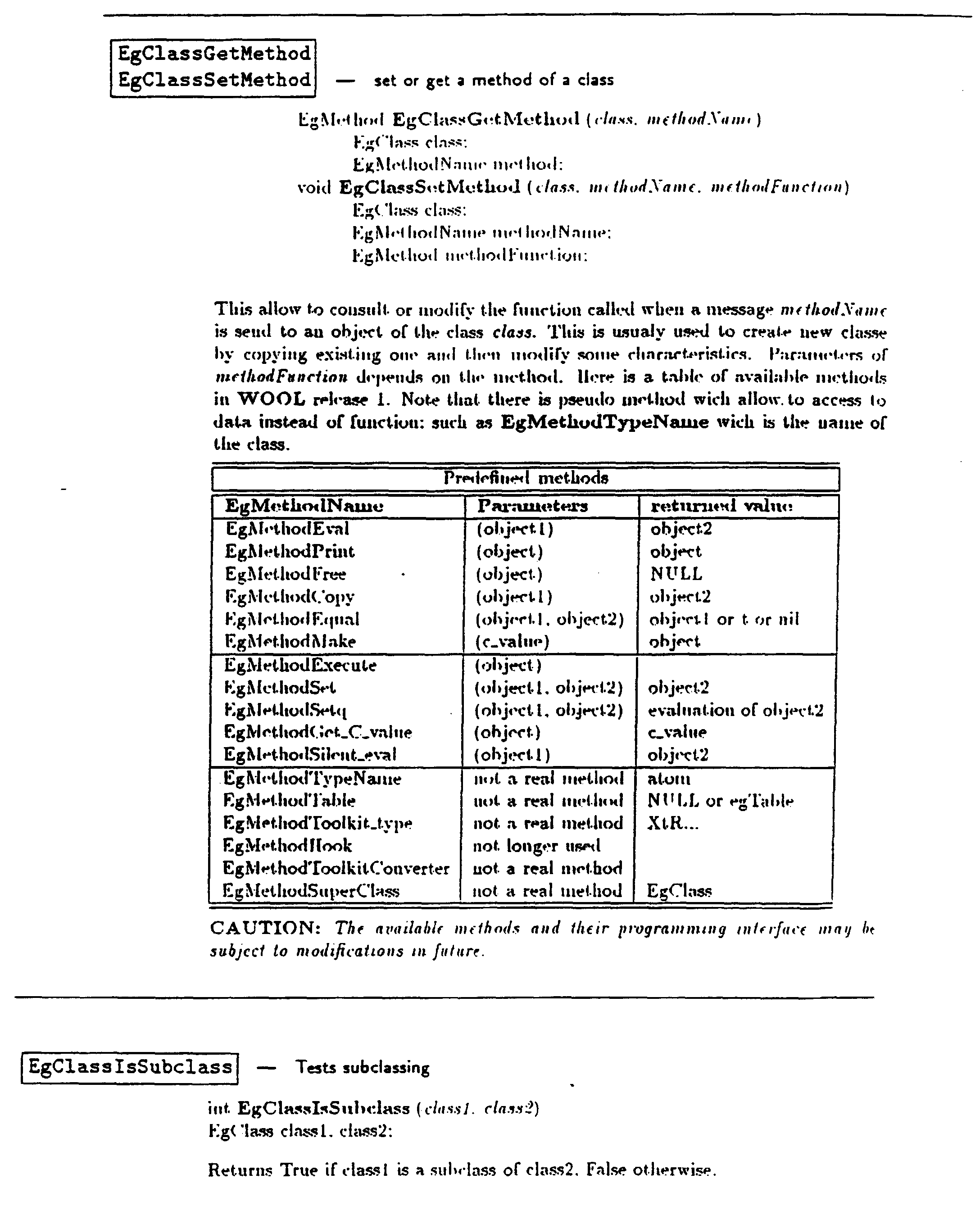

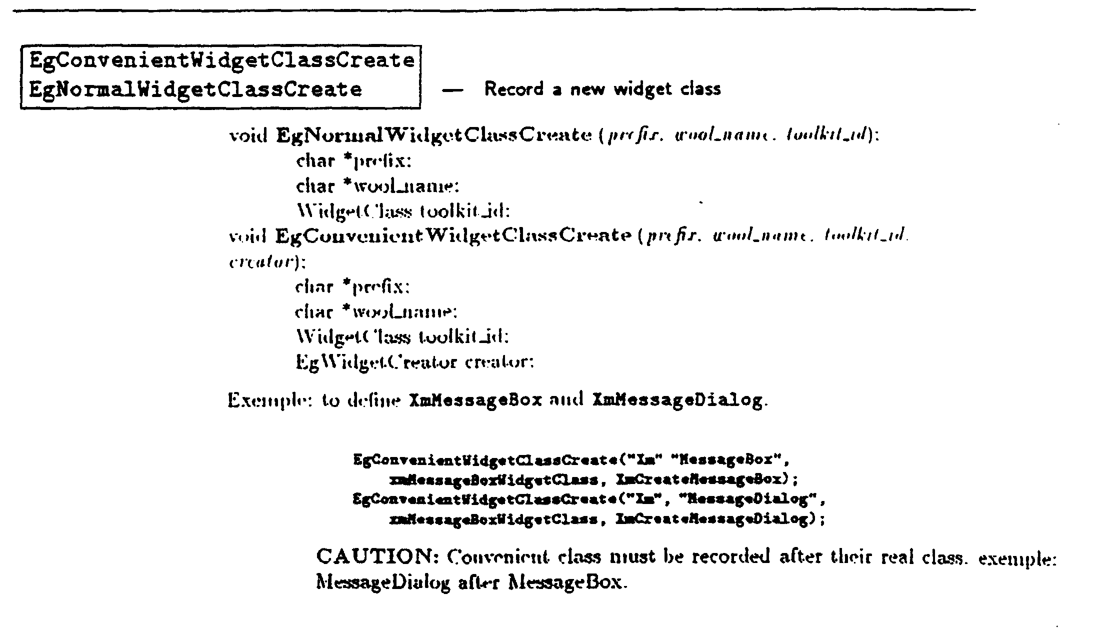

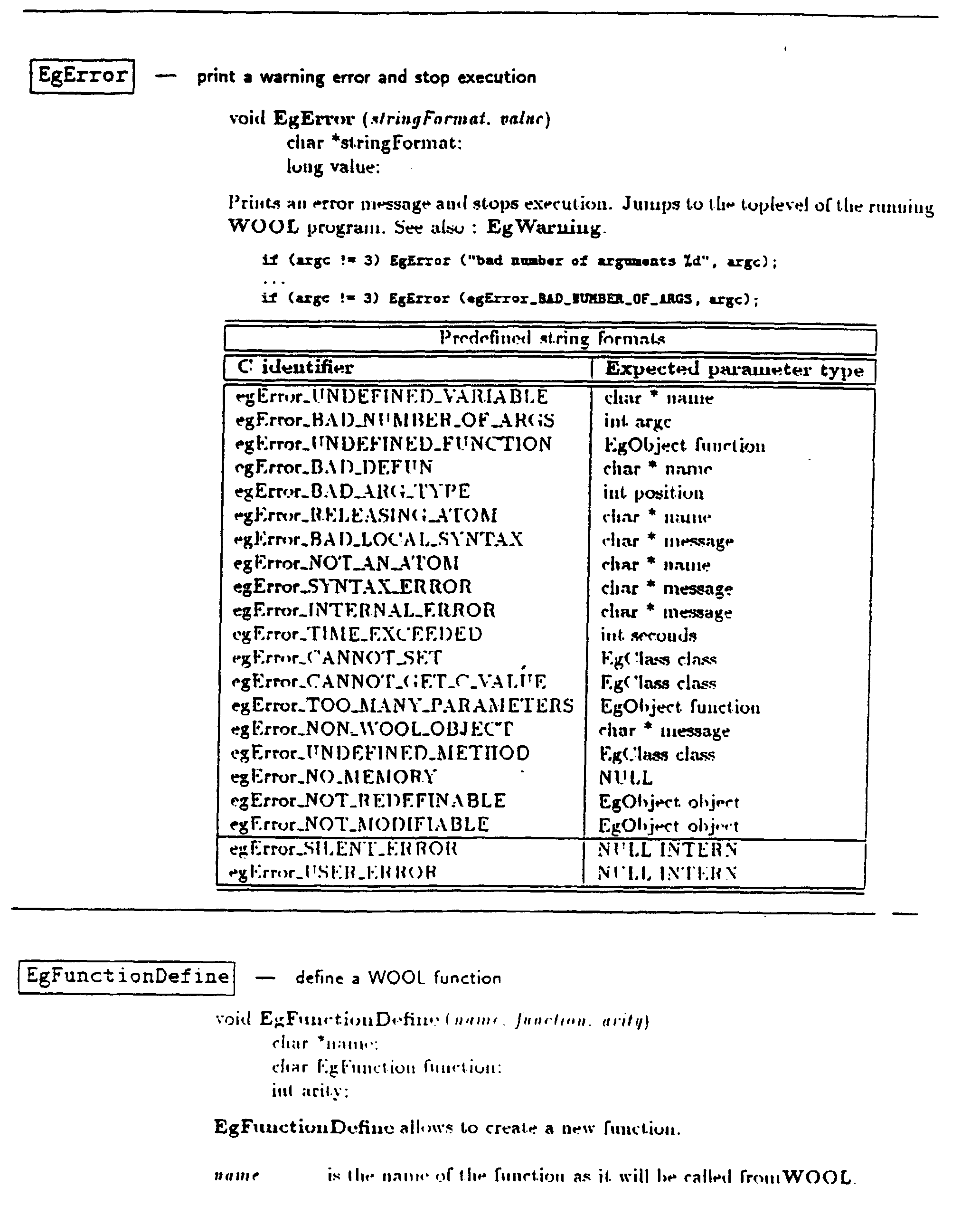

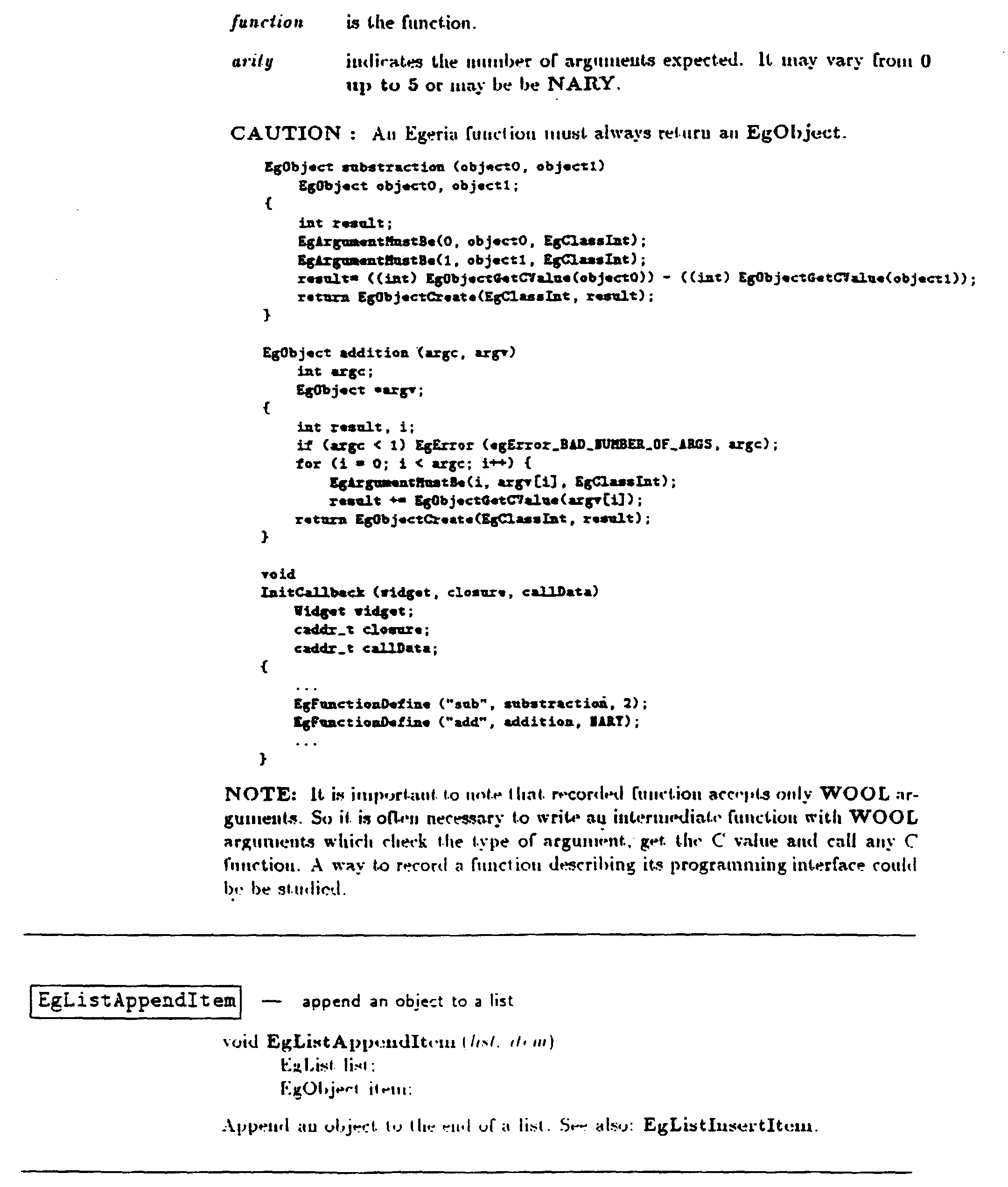

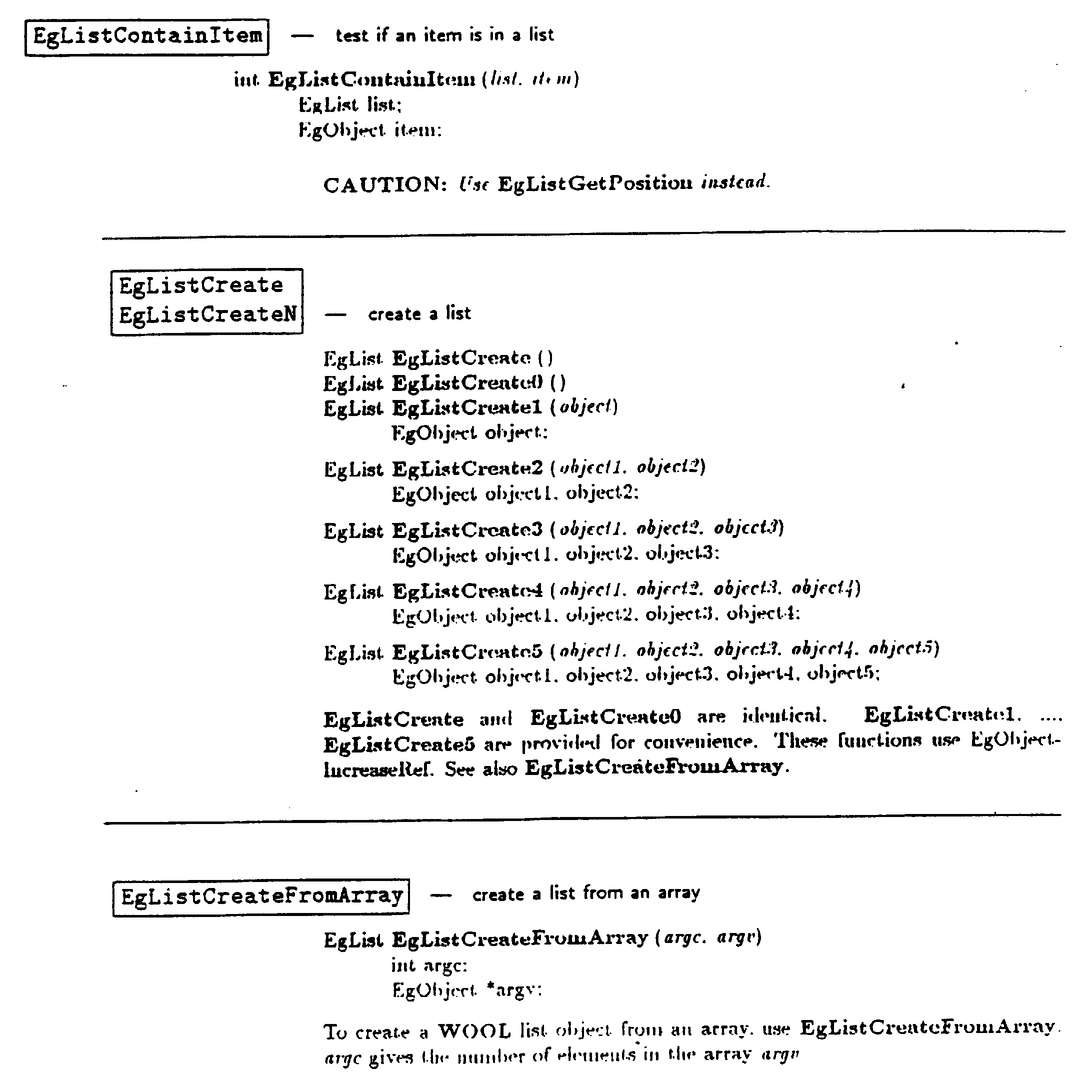

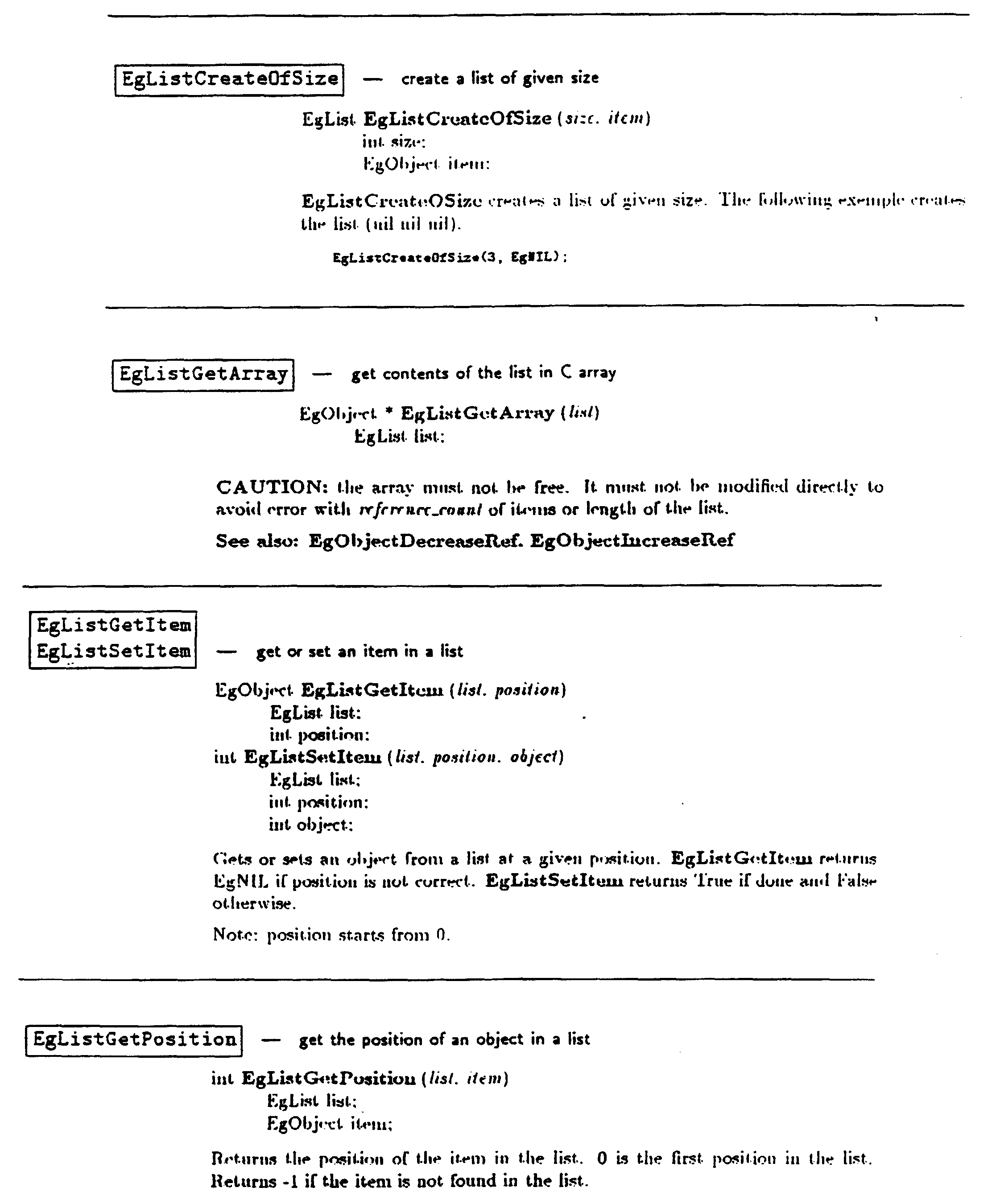

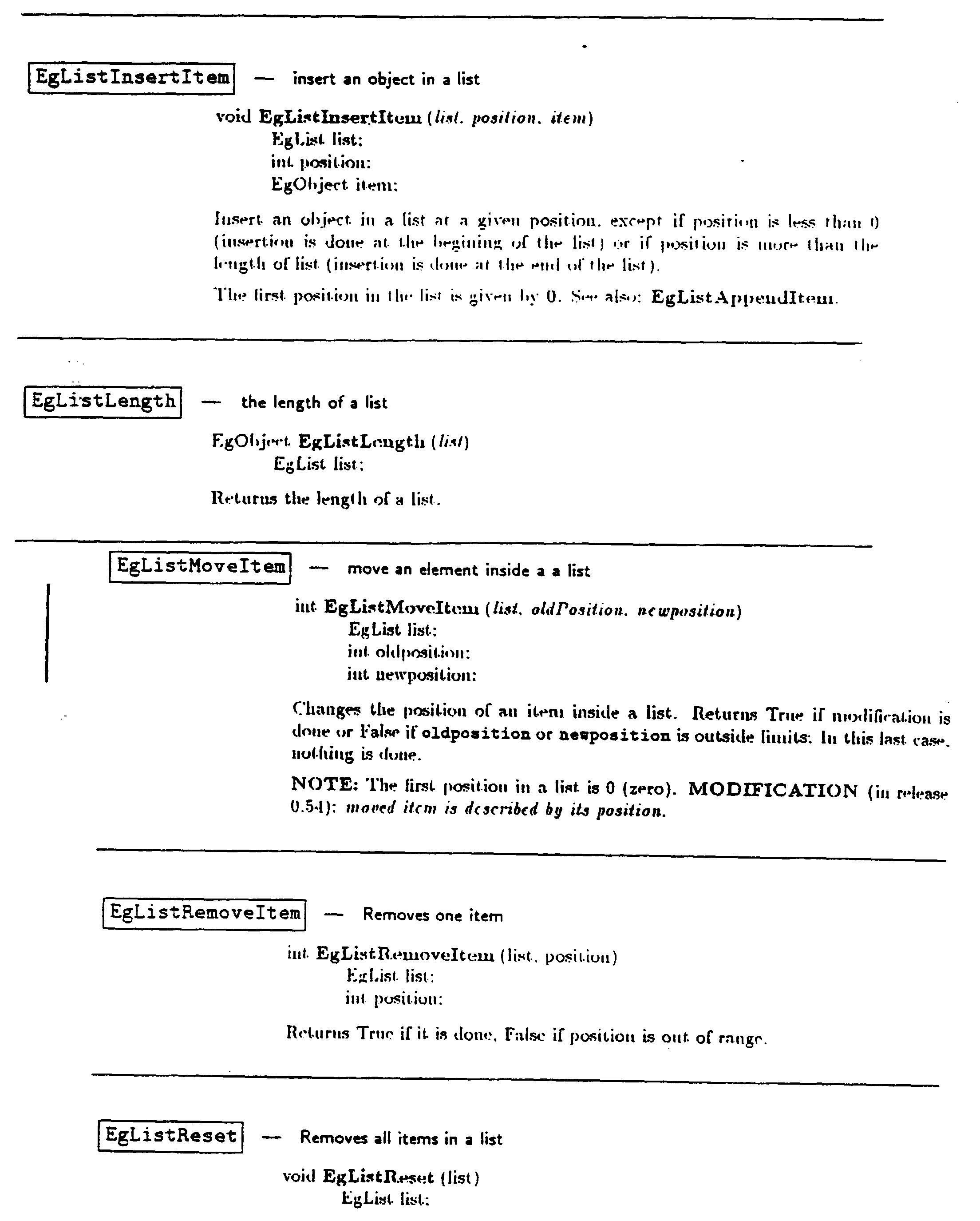

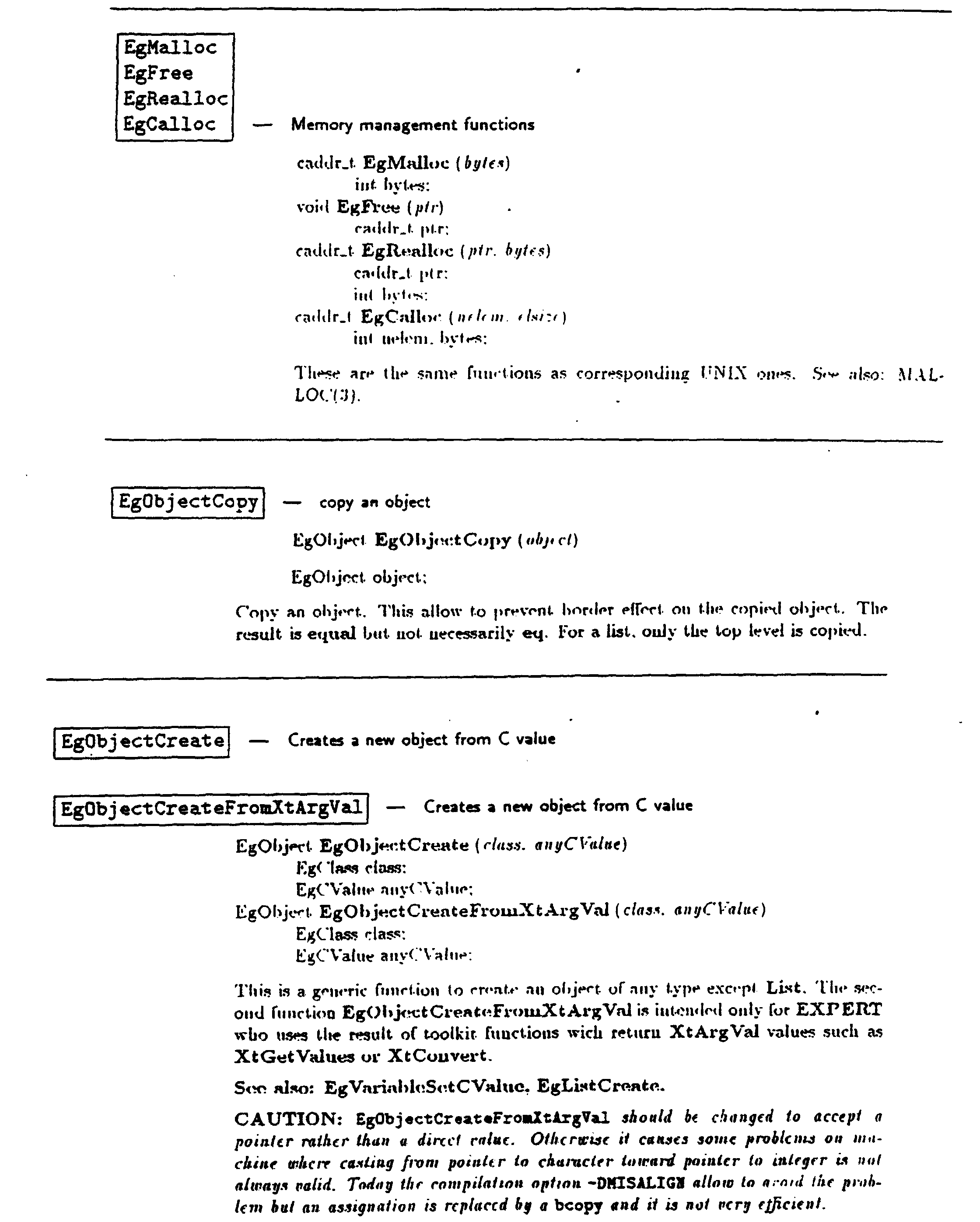

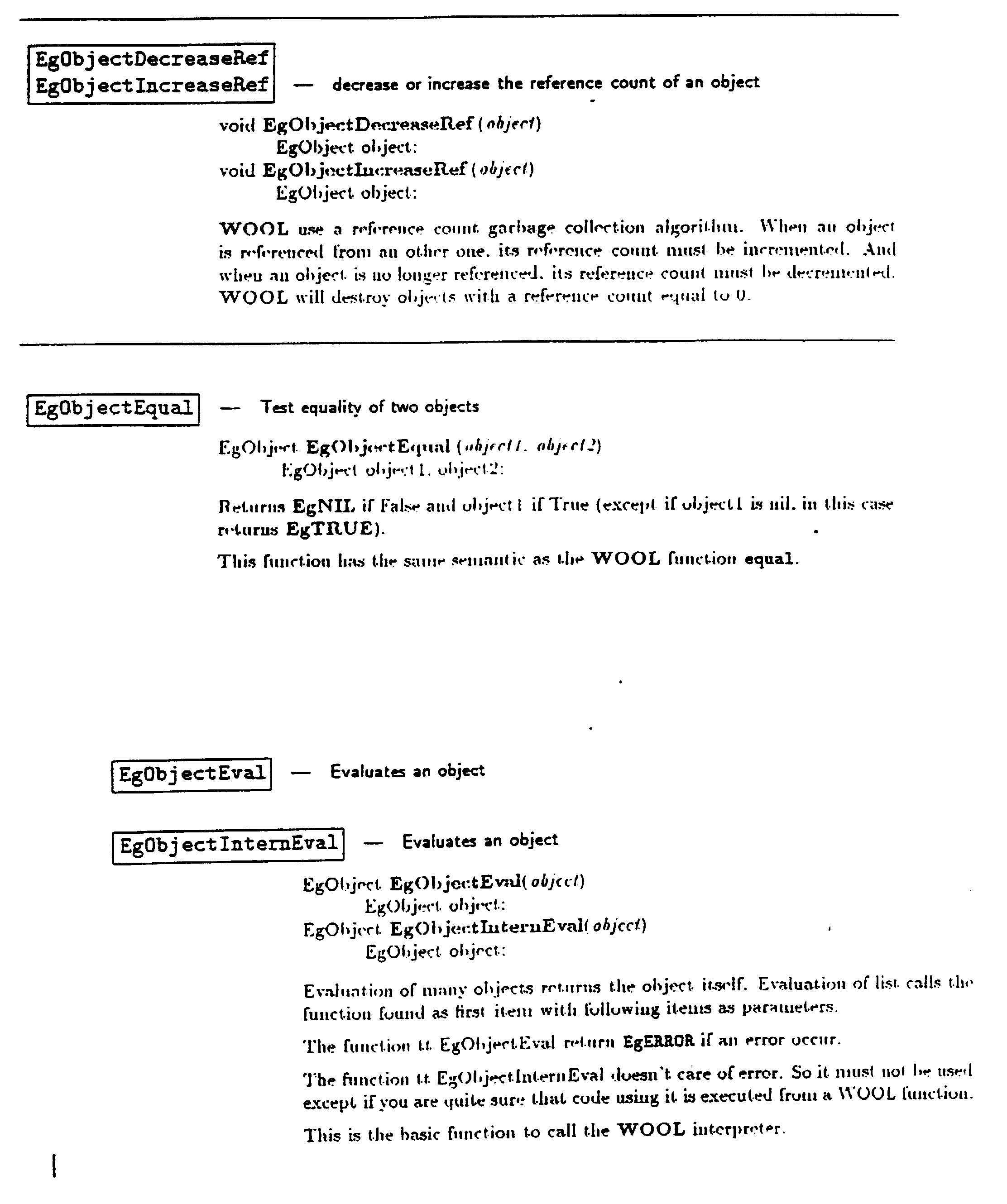

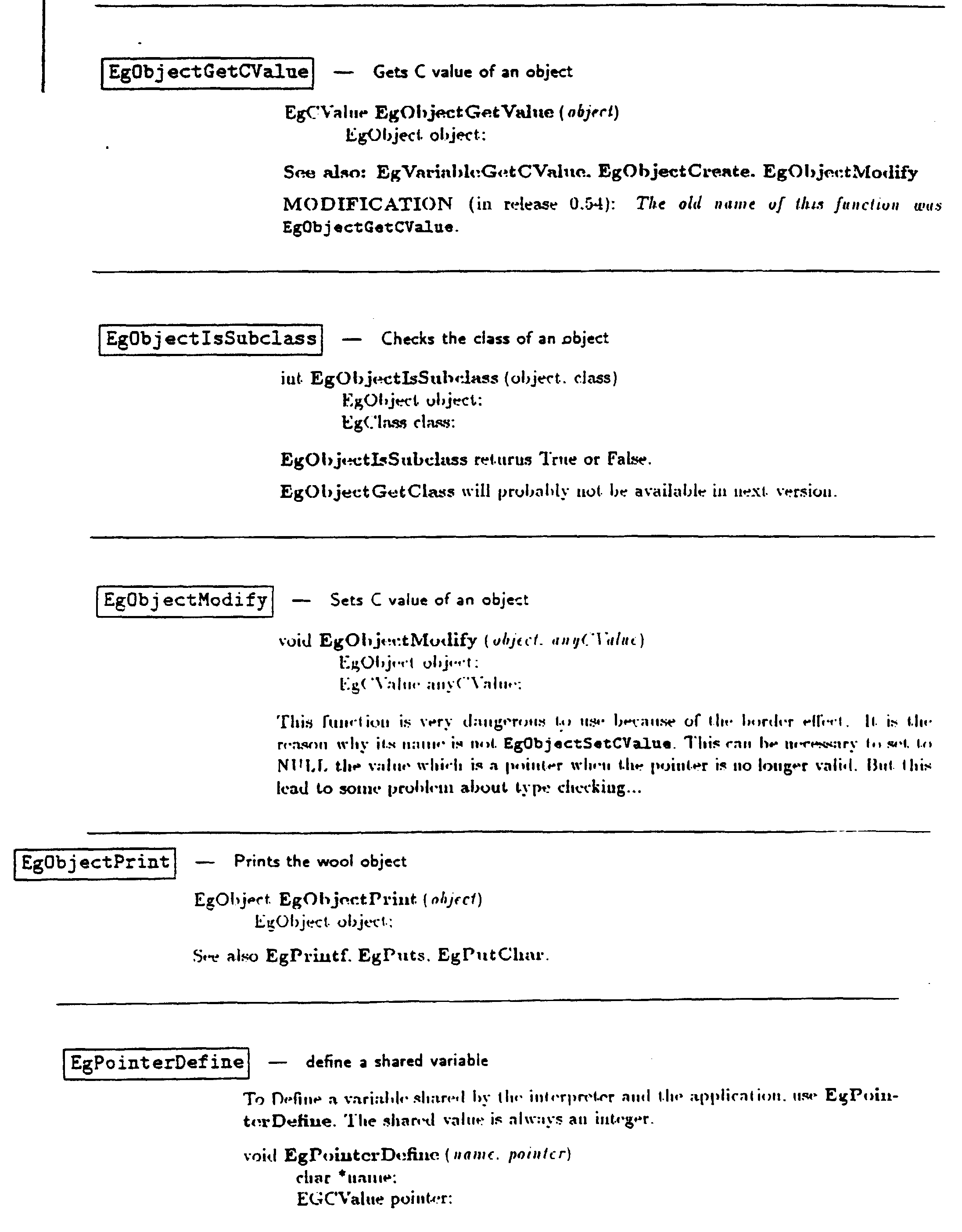

## Revendications

1. Outil interactif de définition d'interface utilisant un langage interprété dont l'interpréteur (11) est embarqué avec le programme de définition d'interface (10) caractérisé en ce que le noyau de l'interpréteur étant constitué comme une matrice à deux dimensions (fig. 18), la première dimension contenant les listes, les chaînes, et les nombres, et la deuxième dimension contenant un sélecteur de fonctions (« eval, print, free, add »).

2. Outil interactif selon la revendication 1 caractérisé en ce que le langage a une représentation similaire pour les données et les programmes.

3. Outil interactif selon la revendication 1 ou 2 caractérisé en ce que le programme de définition coopère avec une bibliothèque d'objets interactifs ("widget") une bibliothèque d'objets de commandes ("X/MOTIF") (20) et une bibliothèque d'objets graphiques ("GO") (21).

4. Outil interactif selon l'une des revendications 1 à 3 caractérisé en ce que le programme est constitué d'un mélange d'instructions en langage C et d'instructions en langage interprétable.

5. Outil interactif selon la revendication 4 caractérisé en ce que l'interpréteur est orienté objet en langage "LISP".

6. Outil interactif selon une des revendications précédentes caractérisé en ce que l'interpréteur de l'éditeur d'interface utilise des tableaux.

7. Outil interactif selon une des revendications précédentes caractérisé en ce que l'interpréteur ("WOOL") comporte un ramasse-miettes ou glaneur de cellules (Garbage Collector) incrémental permettant de temps à autre et de façon cyclique de balayer la mémoire à la recherche d'objets inutilisés dont l'espace peut être réutilisé.

8. Outil interactif selon la revendication 7 caractérisé en ce que le glaneur de cellules utilise des compteurs de références et un mécanisme de regroupement des objets par tailles pour limiter la fragmentation de la mémoire.

9. Outil interactif selon une des revendications précédentes caractérisé en ce que les fonctions de l'outil interactif sont décrites sous forme d'un programme interprété.

10. Utilisation d'un outil selon une des revendications précédentes pour la réalisation d'une interface caractérisée en ce que l'archivage de la présentation de l'interface éditée est effectué comme celui d'un programme en langage "WOOL".

11. Outil interactif selon la revendication 3 caractérisé en ce que la spécification interactive de la géométrie d'assemblage de ces objets est constituée par un fichier utilisable par une application et contenant la présentation d'une interface utilisateur.

12. Outil interactif selon les revendications 3 ou 10 caractérisé en ce que le comportement dynamique des objets interactifs est défini par un ensemble de procédures de rappel ("callbacks") écrites en langage interprété ("WOOL") qui désignent des fonctions de l'application appelées par la boîte à outils "X/MOTIF" lorsqu'un événement d'entrée est reçu par l'un des objets interactifs.

13. Outil interactif selon une des revendications 1, 2, 3 ou 10 caractérisé en ce que le programme de définition d'interface est extensible par l'ajout de classes d'objets interactifs effectué en décrivant en langage interprété ("WOOL") les nouveaux types d'attributs de cette classe pour rendre les nouveaux objets interactifs éditables.

14. Outil interactif selon la revendication 13 caractérisé en ce que chaque objet interactif étant pointé par un objet en langage interprété ("WOOL") de la classe "WOOL" correspondant à la classe de l'objet interactif, les attributs supplémentaires sont directement rattachés à l'objet en langage interprété ("WOOL").

15. Outil interactif selon la revendication 14 caractérisé en ce que chaque objet en langage interprété ("WOOL") est une structure en langage C auto-typée contenant le type de l'objet et l'information du compte de référence.

16. Outil interactif selon la revendication 3, caractérisé en ce qu'un identificateur unique est alloué de façon incrémentale à chaque objet interactif en langage interprété ("WOOL").

17. Outil interactif selon la revendication 1, 2, 3 ou 12, caractérisé en ce que l'outil interactif de définition d'interface (EGERIA) (1) comporte un programme permettant l'affichage d'un menu de base, comprenant une fonction "édition", une fonction création", une fonction "géométrie".

18. Outil selon la revendication 17, caractérisé en ce que la fonction "création" permet la création de tout objet interactif à partir d'un menu et après sélection d'une ligne de menu change la forme du curseur et un clic souris dans un objet interactif "contenant" ("widget container") installera l'objet du type choisi dans cet objet interactif "contenant".

19. Outil selon la revendication 17, caractérisé en ce que la fonction "édition" permet l'édition des attributs d'un objet interactif dans une fenêtre séparée et permet de couper, coller, copier ou dupliquer le jeu d'objets interactifs sélectionné ainsi que d'éditer les attributs des objets interactifs parent d'un objet interactif sélectionné ou de rendre le parent d'un objet interactif couramment sélectionné le nouvel objet interactif sélectionné.

20. Outil selon la revendication 17 caractérisé en ce que la fonction "géométrie" permet de gérer la géométrie d'un ensemble d'objets interactifs sélectionnés qui peuvent être alignés par le sommet, par le bas, par le côté droit, par le côté gauche ou avoir leur largeur ou hauteur identique.

21. Outil selon la revendication 19 caractérisé en ce que la fonction "édition" permet l'affichage d'une fenêtre d'édition des attributs d'un objet interactif, la dite fenêtre étant divisée en deux zones, l'une comportant les fonctions appelées de l'application procédure rappel ("callback"), l'autre comportant les attributs matérialisés par un jeu de sous-éditeurs.

22. Outil selon la revendication 21 caractérisé en ce que le premier sous-éditeur est constitué d'un bouton bascule pour entrer des attributs booléens.

23. Outil selon la revendication 21 caractérisé en ce que le second sous-éditeur est constitué d'un bouton poussoir affichant un menu affichant les listes des valeurs d'un type énuméré (exemple : alignement d'un texte à gauche, à droite ou centré).

24. Outil selon la revendication 21 caractérisé en ce que le troisième sous-éditeur est constitué d'une zone de texte pour la saisie des textes ou des valeurs numériques.

25. Outil selon la revendication 19 caractérisé en ce que la fonction d'édition des objets interactifs interpréteurs de commande (shell "widget") ou des objets généraux (top level "widget") est lancée en sélectionnant d'abord le menu ("select parent") de sélection de parent du menu et ensuite la fonction d'édition d'attribut ("edit attribute").

## Patentansprüche

1. Interaktives Werkzeug zur Schnittstellendefinition, das eine interpretierte Sprache verwendet, deren Interpreter (11) in das Schnittstellendefinitionsprogramm (10) eingebettet ist, dadurch gekennzeichnet, daß der Kern des Interpreters als eine zweidimensionale Matrix (Fig. 18) konstituiert ist, wobei die erste Dimension die Liste, die Verkettungen und die Zahlen enthält und die zweite Dimension eine Funktionenwähleinrichtung ("eval, print, free, add") enthält.

2. Interaktives Werkzeug nach Anspruch 1, dadurch gekennzeichnet, daß die Sprache eine Darstellung besitzt, die für die Daten und die Programme ähnlich ist.

3. Interaktives Werkzeug nach Anspruch 1 oder 2, dadurch gekennzeichnet, daß das Definitionsprogramm mit einer Bibliothek aus interaktiven Objekten ("widget"), einer Bibliothek aus Befehlsobjekten ("X/MOTIF") (20) und einer Bibliothek aus graphischen Objekten ("GO") (21) zusammenarbeitet.

4. Interaktives Werkzeug nach einem der Ansprüche 1 bis 3, dadurch gekennzeichnet, daß das Programm aus einem Gemisch von Befehlen in der Sprache C und von Befehlen in der interpretierbaren Sprache gebildet ist.

5. Interaktives Werkzeug nach Anspruch 4, dadurch gekennzeichnet, daß der Interpreter in der Sprache "LISP" objektorientiert ist.

6. Interaktives Werkzeug nach einem der vorangehenden Ansprüche, dadurch gekennzeichnet, daß der Interpreter des Schnittstellen-Editors Tabellen verwendet.

7. Interaktives Werkzeug nach einem der vorangehenden Ansprüche, dadurch gekennzeichnet, daß der Interpreter ("WOOL") einen inkrementalen Krümelsammler oder Zellenleser (Garbage Collector) enthält, der von Zeit zu Zeit und zyklisch die Abtastung des Speichers bei der Suche nicht verwendeter Objekte, deren Raum wiederverwendet werden kann, ermöglicht.

8. Interaktives Werkzeug nach Anspruch 7, dadurch gekennzeichnet, daß der Zellenleser Referenzzähler und einen Umgruppierungsmechanismus für Objekte nach den Größen enthält, um die Fragmentierung des Speichers zu begrenzen.

9. Interaktives Werkzeug nach einem der vorangehenden Ansprüche, dadurch gekennzeichnet, daß die Funktionen des interaktiven Werkzeugs in Form eines interpretierten Programms geschrieben sind.

10. Verwendung eines Werkzeugs nach einem der vorangehenden Ansprüche für die Verwirklichung einer Schnittstelle, dadurch gekennzeichnet, daß die Archivierung der Darstellung der editierten Schnittstelle wie die Archivierung eines Programms in der Sprache "WOOL" erfolgt.

11. Interaktives Werkzeug nach Anspruch 3, dadurch gekennzeichnet, daß die interaktive Spezifikation der Zusammenfügungsgeometrie dieser Objekte durch eine Datei gebildet ist, die von einer Anwendung verwendbar ist und die Darstellung einer Anwenderschnittstelle enthält.

12. Interaktives Werkzeug nach den Ansprüchen 3 oder 10, dadurch gekennzeichnet, daß das dynamische Verhalten der interaktiven Objekte durch eine Gesamtheit von Abrufprozeduren ("callbacks") definiert ist, die in der interpretierten Sprache ("WOOL") geschrieben sind und die Anbindungsfunktionen bezeichnen, die vom Werkzeugkasten "X/MOTIF" aufgerufen werden, wenn von einem der interaktiven Objekte ein Eingangsereignis empfangen wird.

13. Interaktives Werkzeug nach einem der Ansprüche 1, 2, 3 oder 10, dadurch gekennzeichnet, daß das Schnittstellendefinitionsprogramm durch Hinzufügung von Klassen interaktiver Objekte erweiterbar ist, die durch Beschreiben der neuen Typen von Attributen dieser Klasse in der interpretierten Sprache ("WOOL") erfolgt, um die neuen interaktiven Objekte editierbar zu machen.

14. Interaktives Werkzeug nach Anspruch 13, dadurch gekennzeichnet, daß, da auf jedes interaktive Objekt durch ein Objekt in der interpretierten Sprache ("WOOL") der Klasse "WOOL" gezeigt wird, die der Klasse interaktiver Objekte entspricht, die zusätzlichen Attribute direkt an das Objekt in der interpretierten Sprache ("WOOL") angefügt werden.

15. Interaktives Werkzeug nach Anspruch 14, dadurch gekennzeichnet, daß jedes Objekt in der interpretierten Sprache ("WOOL") eine selbstgetippte Struktur in der Sprache C ist, die den Typ des Objekts und die Referenzberechnungsinformationen enthält.

16. Interaktives Werkzeug nach Anspruch 3, dadurch gekennzeichnet, daß jedem interaktiven Objekt in der interpretierten Sprache ("WOOL") ein eindeutiger Identifizierer in inkrementaler Weise zugeordnet ist.

17. Interaktives Werkzeug nach Anspruch 1, 2, 3 oder 12, dadurch gekennzeichnet, daß das interaktive Werkzeug zur Schnittstellendefinition (EGERIA) (1) ein Programm enthält, das die Anzeige eines Basismenüs ermöglicht, das eine "Editierungs"-Funktion, eine "Erzeugungs"-Funktion und eine "Geometrie"-Funktion umfaßt.

18. Werkzeug nach Anspruch 17, dadurch gekennzeichnet, daß die "Erzeugungs"-Funktion die Erzeugung jeglichen interaktiven Objekts anhand eines Menüs ermöglicht und nach der Wahl einer Menüzeile die Form des Cursors ändert, wobei ein Mausklick in einem interaktiven "Behälter"-Objekt ("widget container") das Objekt des gewählten Typs in diesem interaktiven "Behälter"-Objekt installiert.

19. Werkzeug nach Anspruch 17, dadurch gekennzeichnet, daß die "Editierungs"-Funktion die Editierung der Attribute eines interaktiven Objekts in einem getrennten Fenster ermöglicht und das Ausschneiden, Zusammenfügen, Kopieren oder Duplizieren des gewählten Satzes interaktiver Objekte sowie die Editierung der Attribute der interaktiven Elternobjekte eines gewählten interaktiven Objekts oder die Ernennung der Eltern eines momentan gewählten interaktiven Objekts zu einem neu gewählten interaktiven Objekt ermöglicht.

20. Werkzeug nach Anspruch 17, dadurch gekennzeichnet, daß die "Geometrie"-Funktion das Management der Geometrie einer Gesamtheit von gewählten interaktiven Objekten ermöglicht, die auf den Scheitelpunkt, die Unterseite, die rechte Seite oder die linke Seite ausgerichtet sein können oder eine übereinstimmende Breite oder Höhe besitzen können.

21. Werkzeug nach Anspruch 19, dadurch gekennzeichnet, daß die "Editierungs"-Funktion die Anzeige eines Editierungsfensters der Attribute eines interaktiven Objekts ermöglicht, wobei das Fenster in zwei Zonen unterteilt ist, wovon das eine Funktionen enthält, die Prozeduraufrufanwendungen ("callback") genannt werden, und das andere die durch einen Satz von Untereditoren gegebenen Attribute enthält.

22. Werkzeug nach Anspruch 21, dadurch gekennzeichnet, daß der erste Untereditor durch einen Kippschalter gebildet ist, um Boolsche Attribute einzugeben.

23. Werkzeug nach Anspruch 21, dadurch gekennzeichnet, daß der zweite Untereditor aus einem Druckschalter gebildet ist, der ein Menü anzeigt, das die Listen der Werte eines aufgezählten Typs anzeigt (Beispiel: Linksausrichtung, Rechtausrichtung oder Zentrierung eines Texts).

24. Werkzeug nach Anspruch 21, dadurch gekennzeichnet, daß der dritte Untereditor aus einer Textzone für die Aufnahme von Texten oder digitalen Werten gebildet ist.

25. Werkzeug nach Anspruch 19, dadurch gekennzeichnet, daß die Editierungsfunktion für die interaktiven BefehlsinterpreterObjekte (shell "widget") oder die allgemeinen Objekte (top Level "widget") gestartet wird, indem zunächst das Eltern-Wählmenü ("select parent") des Menüs gewählt wird und anschließend die Attributeditierungsfunktion ("edit attribut") gewählt wird.

## Claims

1. Interactive interface-definition tool using an interpreted language, the interpreter (11) of which is embedded with the interface-definition program (10), characterised in that the kernel of the interpreter being constituted as a two-dimensional array (Fig 1B), the first dimension containing the lists, the strings and the numbers, and the second dimension containing a function selector ("eval, print, free, add").

2. Interactive tool according to Claim 1 characterised in that the language has a similar representation for data and programs.

3. Interactive tool according to Claim 1 or 2 characterised in that the definition program co-operates with a library of interactive objects ("widget"), a library of command objects ("X/MOTIF") (20) and a library of graphical objects ("GO") (21).

4. Interactive tool according to one of Claims 1 to 3 characterised in that the program is constituted by a mixture of instructions in C language and instructions in interpretable language.

5. Interactive tool according to Claim 4 characterised in that the interpreter is object-oriented in "LISP" language.

6. Interactive tool according to one of the preceding claims characterised in that the interpreter of the interface editor uses tables.

7. Interactive tool according to one of the preceding claims characterised in that the interpreter ("WOOL") comprises an incremental "crumb-collector" or "cell-gleaner" (Garbage Collector) making it possible, from time to time and cyclically, to scan the memory in search of unused objects, the space for which can be reused.

8. Interactive tool according to Claim 7 characterised in that the cell gleaner uses reference counters and a mechanism for grouping objects by size in order to limit the fragmentation of the memory.

9. Interactive tool according to one of the preceding claims, characterised in that the functions of the interactive tool are described in the form of an interpreted program.

10. Use of a tool according to one of the preceding claims to produce an interface characterised in that the archiving of the presentation of the edited interface is effected as for a program in "WOOL" language.

11. Interactive tool according to Claim 3 characterised in that the interactive specification of the geometry for assembling these objects is constituted by a file that can be used by an application and containing the presentation of a user interface.

12. Interactive tool according to Claims 3 or 10 characterised in that the dynamic behaviour of the interactive objects is defined by a set of recall procedures ("callbacks") written in interpreted language ("WOOL"), which denote functions of the application called up by the toolbox "X/MOTIF" when an input event is received by one of the interactive objects.

13. Interactive tool according to one of Claims 1, 2, 3 or 10, characterised in that the interface-definition program is extensible by the addition of classes of interactive objects effected by describing in interpreted language ("WOOL") the new types of attributes of this class to make it possible to edit the new interactive objects.

14. Interactive tool according to Claim 13 characterised in that, each interactive object being addressed by an object in interpreted language ("WOOL") in the "WOOL" class corresponding to the class of the interactive object, the additional attributes are directly attached to the object in interpreted language ("WOOL").

15. Interactive tool according to Claim 14 characterised in that each object in interpreted language ("WOOL") is an autotyped structure in C language containing the type of the object and the information from the reference count.

16. Interactive tool according to Claim 3, characterised in that a single identifier is allocated incrementally to each interactive object in interpreted language ("WOOL").

17. Interactive tool according to Claim 1, 2, 3 or 12, characterised in that the interactive interface-definition tool (EGERIA) (1) comprises a program allowing the display of a basic menu, comprising an "edit" function, a "create" function, a "geometry" function.

18. Tool according to Claim 17, characterised in that the "create" function allows the creation of any interactive object from a menu and, after selection of a menu line, changes the shape of the cursor and a mouse click in an interactive "container" object ("widget container") will install the object of the chosen type in this interactive "container" object.

19. Tool according to Claim 17, characterised in that the "edit" function allows the editing of the attributes of an interactive object in a separate window and makes it possible to cut, paste, copy or duplicate the selected set of interactive objects and to edit the attributes of the interactive objects that are the parent of a selected interactive object or to make the parent of a currently selected interactive object the new selected interactive object.

20. Tool according to Claim 17, characterised in that the "geometry" function makes it possible to manage the geometry of a set of selected interactive objects that can be aligned by the top, by the bottom, by the right-hand side, by the left-hand side or have their width or height identical.

21. Tool according to Claim 19, characterised in that the "edit" function makes it possible to display a window for editing the attributes of an interactive object, said window being divided into two zones, one comprising the called functions of the recall procedure application ("callbacks"), the other comprising the attributes realised by a set of sub-editors.

22. Tool according to Claim 21, characterised in that the first sub-editor is constituted by a toggle button for entering boolean attributes.

23. Tool according to Claim 21, characterised in that the second sub-editor is constituted by a push-button displaying a menu displaying the value lists of an enumerated type (for example: left, right or centred alignment of text).

24. Tool according to Claim 21 characterised in that the third sub-editor is constituted by a text zone for capturing text or numerical values.

25. Tool according to Claim 19 characterised in that the function of editing the interactive command-interpreter objects (shell "widget") or the general objects (top level "widget") is launched by first selecting the parent selection menu ("select parent") from the menu and then the attribute-editing function ("edit attribute").
